(19) Europäisches Patentamt
European Patent Office
Office européen des brevets

(11) **EP 4 629 690 A1**

(12) **EUROPEAN PATENT APPLICATION**
published in accordance with Art. 153(4) EPC

(43) Date of publication:
08.10.2025 Bulletin 2025/41

(51) International Patent Classification (IPC):
*H04W 24/08* (2009.01)     *H04W 36/00* (2009.01)

(21) Application number: 23910281.7

(22) Date of filing: 19.12.2023

(52) Cooperative Patent Classification (CPC):
H04W 4/02; H04W 24/08; H04W 36/00;
H04W 56/00

(86) International application number:
PCT/CN2023/140024

(87) International publication number:
WO 2024/140351 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 CN 202211711849

(71) Applicant: Huawei Technologies Co., Ltd.
Shenzhen, Guangdong 518129 (CN)

(72) Inventors:
• LIAO, Shuri
  Shenzhen, Guangdong 518129 (CN)
• DOU, Shengyue
  Shenzhen, Guangdong 518129 (CN)
• ZHANG, Jiayin
  Shenzhen, Guangdong 518129 (CN)
• WANG, Hui
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD AND RELATED APPARATUS**

(57)    A communication method and a related apparatus are provided. In the method, a position of a PMO in each search space group may be determined based on at least an SSB in a corresponding SSB group, a monitoring periodicity of a PDCCH, duration of the PDCCH, and a plurality of parameters, where the monitoring periodicity is greater than the duration, and values of the plurality of parameters are related to a quantity of PMOs in each search space group and a quantity of system frames of offsetting between two adjacent search space groups. In this way, a system frame in which the determined position of the PMO in the search space group is located is between system frames in which two adjacent SSB groups are located, and there is offsetting of more than one slot between at least two adjacent PMOs in the group. Therefore, overlapping between a position of a PMO and a position of an SSB can be avoided, avoiding unnecessary blind detection of a terminal and reducing power consumption. In addition, a slot that is not occupied by a PMO can be used to transmit a random access response RAR message, helping improve access performance of the terminal.

FIG. 8

**Description**

This application claims priority to Chinese Patent Application No. 202211711849.0, filed with the China National Intellectual Property Administration on December 29, 2022 and entitled "COMMUNICATION METHOD AND RELATED APPARATUS", which is incorporated herein by reference in its entirety.

**TECHNICAL FIELD**

This application relates to the field of communication, and in particular, to a communication method and a related apparatus.

**BACKGROUND**

If a terminal does not transmit data for a long time, the terminal enters a radio resource control (radio resource control, RRC) idle (idle) state (which may be referred to as an idle state below), to reduce power consumption. If downlink data arrives at the terminal in the idle state, the terminal is paged (paged) by a network device. Therefore, the terminal may listen to a paging message in the idle state.

In an implementation, the terminal may perform physical downlink control channel (physical downlink control channel, PDCCH) blind detection in a search space (search space), and if obtaining a paging radio network temporary identifier (paging radio network temporary identifier, P-RNTI) from the PDCCH through decoding, may obtain the paging message based on resource allocation and a modulation and coding scheme indicated by the PDCCH. If the paging message includes an identifier allocated by a core network to the terminal, for example, a 5th generation (5th generation, 5G) system architecture evolution (system architecture evolution, SAE) temporary mobile subscription identifier (5G-SAE temporary mobile subscription identifier, 5G-S-TMSI), the terminal may initiate a paging response; or if the paging message does not include an identifier allocated by a core network to the terminal, the terminal continues to listen. A position of the search space may be configured by a radio access network device in a system information block (system information block, SIB) 1, and a position of the SIB1 may be configured in a synchronization signal block (synchronization signal block, SSB). Therefore, the terminal may obtain the SIB1 based on the SSB, determine the search space based on a parameter configured in the SIB 1, and listen to the PDCCH in the search space, to obtain the paging message.

In a non-terrestrial network (non-terrestrial network, NTN), to meet a coverage requirement, a large quantity of beams need to be used to perform continuous random access in coverage. For example, hundreds of beams are required in satellite communication, and the beams are usually SSB beams. Therefore, there are hundreds of SSBs. In consideration of compatibility with an SSB design in 5G, the SSBs may be grouped. Each SSB group may include a plurality of SSBs, and the SSBs in each SSB group may be centrally distributed in one radio system frame (system frame for short). To ensure that the terminal completes an uplink synchronization procedure as soon as possible after receiving the SSBs to access a network, the radio access network device needs to send, as soon as possible after the SSBs, a SIB1 and a SIBX corresponding to each SSB, and send a paging message, an initial access response (random access response, RAR) message, another system message, and the like in a blank system frame between two SSB groups.

On the one side, the RAR message has a receive window length. If the receive window length of the RAR message is centrally distributed in a first half-frame or a second half-frame of the system frame, some terminals may fail to receive the RAR message, affecting access performance of the terminals and increasing access delays. On the other side, because the SSB beam is directional, there is a correspondence between a PDCCH monitoring occasion (PDCCH monitoring occasion, PMO) in the search space and an SSB. If a position of a PMO is determined based on each received SSB, a position of a PMO corresponding to an SSB in an SSB group may overlap a position of an SSB in a next SSB group, and the radio access network device does not transmit the PDCCH at the position of the SSB. Therefore, the terminal does not need to perform blind detection at these overlapping positions. This may cause low blind detection efficiency of the terminal, and cause high power consumption. Therefore, a method is expected to be provided to ensure the access performance of the terminal, avoid unnecessary blind detection, and reduce power consumption.

**SUMMARY**

This application provides a communication method and a related apparatus, to avoid unnecessary blind detection of a terminal without affecting access performance of the terminal, to reduce power consumption.

According to a first aspect, a communication method is provided. The method may be applied to a terminal, for example, may be performed by the terminal, may be performed by a component (for example, a chip or a chip system) configured in the terminal, or may be implemented by a logical module or software that can implement all or some functions of the terminal. This is not limited in this application.

For example, the method includes: receiving a first SSB, where the first SSB belongs to an SSB group, and the SSB group is one of a plurality of SSB groups; and determining a first PMO based on the first SSB, and performing PDCCH blind detection on the first PMO. The plurality of SSB groups are in one-to-one correspondence with a plurality of search space groups. Each search space group includes one or more PMOs. Each SSB group includes one or more SSBs. The one or more PMOs included in one of the plurality of search space groups include the first PMO. A position of the one or more PMOs in each search space group is determined by at least each SSB in a corresponding SSB group, a monitoring periodicity of a PDCCH, duration of the PDCCH, and a plurality of parameters. The determined position of the PMO in each search space group satisfies the following conditions: A system frame in which the PMO in each search space group is located is between system frames in which two adjacent SSB groups are located, and an offset between at least two adjacent PMOs in each search space group includes more than one slot. The monitoring periodicity is greater than the duration. Values of the plurality of parameters are related to a quantity of PMOs included in each search space group and a quantity of system frames included in an offset between two adjacent search space groups.

In other words, because the first PMO corresponds to the first SSB, a position of the first PMO is determined by at least the first SSB, the monitoring periodicity of the PDCCH, the duration of the PDCCH, and the plurality of parameters. It may be understood that each SSB may correspond to one or more PMOs, and the first SSB may correspond to one or more first PMOs.

Because the terminal may receive the SSB in at least one SSB group in the plurality of SSB groups, the terminal may determine a position of each PMO in at least one corresponding search space group based on the at least one SSB group to which the received SSB belongs. Therefore, another possible implementation of the method provided in the first aspect is: determining a position of each PMO in at least one search space group, where the at least one search space group is included in a plurality of search space groups, the plurality of search space groups are in one-to-one correspondence with a plurality of SSB groups, each search space group includes one or more PMOs, each SSB group includes one or more SSBs, a position of the one or more PMOs in each search space group is determined by at least each SSB in a corresponding SSB group, a monitoring periodicity of a PDCCH, duration of the PDCCH, and a plurality of parameters, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the duration of the PDCCH, and values of the plurality of parameters are related to a quantity of PMOs included in each search space group and a quantity of system frames included in an offset between two adjacent search space groups; and performing PDCCH blind detection on the PMO in the at least one search space group.

It may be understood that the first PMO is a PMO in the at least one search space group, and the first SSB is an SSB in at least one SSB group corresponding to the at least one search space group.

It should be understood that the terminal does not necessarily determine positions of all PMOs in the at least one search space group. When receiving the first SSB, the terminal may determine, based on the received first SSB, the monitoring periodicity of the PDCCH, the duration of the PDCCH, and the plurality of parameters, the position of the first PMO corresponding to the first SSB. However, it may be understood that regardless of whether the terminal determines the positions of all the PMOs in the at least one search space group, the position of the PMO in each search space group may satisfy the following conditions: The system frame in which the PMO in each search space group is located is between the system frames in which the two adjacent SSB groups are located, and the offset between the at least two adjacent PMOs in each search space group includes more than one slot.

According to a second aspect, a communication method is provided. The method may be applied to a radio access network device, and may be performed by the radio access network device, may be performed by a component (for example, a chip or a chip system) configured in the radio access network device, or may be implemented by a logical module or software that can implement all or some functions of the radio access network device. This is not limited in this application. The radio access network device may be, for example, a satellite base station.

For example, the method includes: determining a position of each PMO in at least one search space group, where the at least one search space group is included in a plurality of search space groups, the plurality of search space groups are in one-to-one correspondence with a plurality of SSB groups, each search space group includes one or more PMOs, each SSB group includes one or more SSBs, a position of the one or more PMOs in each search space group is determined by at least each SSB in a corresponding SSB group, a monitoring periodicity of a PDCCH, duration of the PDCCH, and at least two of a plurality of parameters, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the duration of the PDCCH, and values of the plurality of parameters are related to a quantity of PMOs included in each search space group and a quantity of system frames included in an offset between two adjacent search space groups; and transmitting the PDCCH on the PMO in the at least one search space group.

Because the radio access network device does not necessarily send SSBs at positions of the plurality of SSB groups, the radio access network device does not necessarily determine the positions of the PMOs in the plurality of search space groups corresponding to the plurality of SSB groups. The radio access network device may determine a position of each PMO in at least one corresponding search space group based on at least one SSB group sent, or may determine a position of a corresponding PMO based on a sent SSB.

Therefore, the second aspect further provides another possible manner as follows:

determining a position of a first PMO corresponding to a first SSB, where the first SSB is one SSB in a first SSB group, the first SSB group is one of a plurality of SSB groups, the plurality of SSB groups are in one-to-one correspondence with a plurality of search space groups, each search space group includes one or more PMOs, each SSB group includes one or more SSBs, the one or more PMOs included in one of the plurality of search space groups include the first PMO, a position of the one or more PMOs in each search space group is determined by at least each SSB in a corresponding SSB group, a monitoring periodicity of a PDCCH, duration of the PDCCH, and at least two of a plurality of parameters, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the duration of the PDCCH, and values of the plurality of parameters are related to a quantity of PMOs included in each search space group and a quantity of system frames included in an offset between two adjacent search space groups; and transmitting the PDCCH on the first PMO.

It should be understood that the method according to the first aspect corresponds to the method according to the second aspect. The terminal and the radio access network device may determine the position of the PMO in the at least one search space group according to a same method. Then, the terminal may perform PDCCH blind detection on the one or more PMOs in the at least one search space group, and the radio access network device may also transmit the PDCCH on the one or more PMOs in the at least one search space group. In other words, the terminal does not necessarily perform PDCCH blind detection on all the PMOs in the plurality of search space groups corresponding to the plurality of SSB groups, and the radio access network device does not necessarily transmit the PDCCH on all the PMOs in the plurality of search space groups corresponding to the plurality of SSB groups.

Optionally, a PMO used by the terminal to perform blind detection is a subset of a PMO used by the radio access network device to transmit the PDCCH.

A search space group may be considered as a set of one or more PMOs corresponding to each SSB in an SSB group.

The monitoring periodicity of the PDCCH is greater than the duration of the PDCCH, that is, the terminal performs PDCCH blind detection periodically, but does not keep performing PDCCH blind detection in the monitoring periodicity of the PDCCH, and the terminal may continuously perform PDCCH blind detection in the duration of the PDCCH. In other words, the PMOs are distributed in the duration of the PDCCH.

In the method provided in the first aspect or the second aspect, the terminal and the radio access network device may determine, based on at least each SSB in an SSB group, the monitoring periodicity of the PDCCH, the duration of the PDCCH, and the plurality of parameters, a position of a PMO that is in a corresponding search space group and that corresponds to each SSB. The monitoring periodicity of the PDCCH and the duration of the PDCCH may be used to determine the position of the PMO, and the determined position of each PMO may correspond to an index of a PMO. An index of each SSB in an SSB group may be used to determine an index of each PMO in a corresponding search space group, so that a position of a PMO corresponding to each SSB may be determined. However, because the SSB groups and the search space groups are distributed alternately in time domain, system frames in which some PMOs in corresponding PMOs determined based on SSBs in an SSB group are located may overlap a system frame in which a next SSB group is located, and positions of some PMOs may overlap positions of the SSBs and SIB messages. Therefore, in this application, the index of the PMO corresponding to each SSB in the SSB group is restricted in combination with the plurality of parameters, to exclude the PMOs that may have position overlapping, and the terminal does not perform PDCCH blind detection on these PMOs. Therefore, unnecessary blind detection of the terminal can be avoided, and power consumption can be reduced.

In addition, because the monitoring periodicity of the PDCCH is greater than the duration of the PDCCH, a plurality of PMOs in the search space group are non-consecutive in time domain. Therefore, the terminal receives other signaling such as a RAR message in a slot that is not occupied by the PMOs. This helps the terminal successfully receive the RAR message, ensuring access performance.

In this application, for ease of differentiation and description, a PMO determined based on the monitoring periodicity of the PDCCH and the duration of the PDCCH is denoted as a candidate PMO. An index of a PMO that is directly determined based on an index of an SSB without reference to a first parameter to a fourth parameter is denoted as an index of a candidate PMO. With reference to at least two of the first parameter to the fourth parameter, a PMO may be determined in a range of the candidate PMO. It may be understood that the position of each PMO corresponds to an index of a candidate PMO.

With reference to the first aspect or the second aspect, in some possible implementations, the plurality of parameters include at least two of the first parameter, a second parameter, a third parameter, and the fourth parameter. A value of the first parameter is equal to the quantity of PMOs included in each search space group. A value of the second parameter is equal to the quantity of system frames included in the offset between two adjacent search space groups. A value of the third parameter is equal to a product of the value of the first parameter and the value of the second parameter. A value of the fourth parameter is equal to a difference between the value of the third parameter and the value of the first parameter.

In an example, the plurality of parameters may include the first parameter and the second parameter. That the values of the plurality of parameters are related to the quantity of PMOs included in each search space group and the quantity of system frames included in the offset between two adjacent search space groups includes: The value of the first parameter is equal to the quantity of PMOs included in each search space group, and the value of the second parameter is equal to the quantity of system frames included in the offset between two adjacent search space groups.

In another example, the plurality of parameters may include the third parameter and the fourth parameter. That the values of the plurality of parameters are related to the quantity of PMOs included in each search space group and the quantity of system frames included in the offset between two adjacent search space groups includes: The value of the third parameter is equal to a product of the quantity of PMOs included in each search space group and the quantity of system frames included in the offset between two adjacent search space groups, and the value of the fourth parameter is equal to the product of the quantity of PMOs included in each search space group and the quantity of system frames included in the offset between two adjacent search space groups minus the quantity of PMOs included in each search space group.

The foregoing examples of the plurality of parameters are merely provided for ease of understanding, and shall not constitute any limitation on this application.

Because the plurality of search space groups are in one-to-one correspondence with the plurality of SSB groups, and the plurality of search space groups and the plurality of SSBs are distributed alternately in time domain, an offset between every two adjacent search space groups is equal to an offset between every two adjacent SSB groups. Therefore, a quantity of system frames included in the offset between every two adjacent search space groups described above may alternatively be a quantity of system frames included in the offset between every two adjacent SSB groups.

For ease of description, one of the plurality of search space groups is denoted as a first search space group, and the first PMO may be one or more PMOs in the first search space group. An SSB group corresponding to the first search space group is denoted as a first SSB group, and the first SSB may be an SSB in the first SSB group. The first SSB group is one of the plurality of SSB groups.

In a possible design, an index $p$ of a candidate PMO corresponding to a position of each PMO in the first search space group in the plurality of search space groups satisfies $p=x \cdot s+(i\text{-}1) \cdot M \cdot L+k \bmod s$, and $(i\text{-}1) \cdot M \cdot L \leq p<(i\text{-}1) \cdot M \cdot L+M \cdot (L\text{-}1)$, where x=0, 1, ..., or X-1, X is a maximum quantity of candidate PMOs corresponding to each SSB, X is a positive integer, s is a quantity of SSBs included in each SSB group, s is a positive integer, $i$ is a group index of the first SSB group in the plurality of SSB groups, $i$ is a positive integer, $k$ is an index of an SSB in the plurality of SSB groups, $k$ is a natural number less than or equal to S-1, S is a total quantity of SSBs included in the plurality of SSB groups, S is a positive integer, M is the value of the first parameter, M is a positive integer, L is the value of the second parameter, L is a positive integer greater than or equal to 2, M·L is the value of the third parameter, M·(L-1) is the value of the fourth parameter, and mod represents a modulo operation.

It can be learned that when any two or more of the first parameter to the fourth parameter are known, the foregoing formula may be deduced.

Herein, $p=x \cdot s+(i\text{-}1) \cdot M \cdot L+k \bmod s$ may be used to determine an index of a candidate PMO corresponding to an index of each SSB in the first SSB group, and $(i\text{-}1) \cdot M \cdot L \leq p<(i\text{-}1) \cdot M \cdot L+M \cdot (L\text{-}1)$ may be used to limit a value range of the index of the candidate PMO, to control the position of each PMO corresponding to the SSB, and avoid overlapping between the position of the PMO and a position of a next SSB group or the other signaling.

The indexes of the SSBs may be used to sequentially number the SSBs from 0 based on the total quantity of SSBs, for example, 0, 1, ..., and S-1. The indexes of the candidate PMOs may be sequentially numbered from 0 by using a 1st PMO in a time domain range in which the terminal performs blind detection as a start position, for example, 0, 1, ..., and M-1. For example, the time domain range may be predefined, or may satisfy a condition, for example, a paging frame set or a paging occasion (paging occasion, PO) described below.

It should be understood that the foregoing formula is merely an example, and a person skilled in the art may make a simple mathematical transformation based on a same concept. For example, the indexes of the SSBs and the indexes of the PMO are not necessarily sequentially numbered from 0, or are not necessarily consecutively numbered, and when a different index numbering manner is used, the foregoing formula may change accordingly. For another example, the third parameter and/or the fourth parameter are represented by other letters, and the foregoing formula also changes accordingly. For another example, one or more operations are performed on M and/or L, for example, adding any value, subtracting any value, multiplying any value, or dividing any value, and the foregoing formula may also change accordingly. Details are not described again. It may be understood that these changes are simple mathematical transformations performed based on the same concept, and shall fall within the protection scope of this application.

Optionally, the group index $i$ of the first SSB group satisfies $i=\left\lceil (k+1)/s \right\rceil$, where $\lceil\ \rceil$ indicates rounding up.

Because the indexes of the SSBs in the SSB groups are sequentially numbered by using a 1st SSB in the S SSBs as a start point, when the quantity of SSBs in each SSB group is fixed, group indexes of the SSB groups correspond to the indexes of the SSBs. If the indexes of the SSBs are consecutively numbered from 0, and the group indexes i are consecutively numbered from 1, a relationship of $i=\left\lceil (k+1)/s \right\rceil$ may be obtained.

Certainly, a relationship between the group index of the SSB group and the index of the SSB is not limited thereto. When a start number of the group index of the SSB group and/or a start number of the index of the SSB are/is different, the relationship between the group index of the SSB group and the index of the SSB also changes. A person skilled in the art may obtain the relationship by performing a simple mathematical transformation based on the same concept. Details are not described again.

It can be learned from the foregoing formula that M·L and M·(L-1) may be determined if any two of the first parameter to the fourth parameter are given, and $p$ with different values corresponding to $k$ with different values and a value range of $p$ are determined. Therefore, the position of the PMO corresponding to the SSB in each SSB group may be determined.

Optionally, the plurality of parameters are predefined, for example, predefined in a protocol.

For example, the values of the plurality of parameters are predefined, so that indication overheads for the parameters can be reduced.

Optionally, at least two of the plurality of parameters are separately configured by a network device, for example, configured by the radio access network device by using signaling (for example, a SIB1).

Therefore, the network device may flexibly configure each parameter for different terminals.

Because the values of the plurality of parameters are related to the quantity of PMOs included in each search space group and the quantity of system frames included in the offset between every two adjacent search space groups, in another implementation, the quantity of PMOs included in each search space group may be predefined, or configured by the network device, and the quantity of system frames included in the offset between every two adjacent search space groups may also be predefined, or configured by the network device, the offset between every two adjacent search space groups may also be predefined, or configured by the network device, or the offset between every two adjacent SSB groups or the quantity of system frames included in the offset may also be predefined, or configured by the network device.

According to a third aspect, a communication method is provided. The method may be applied to a terminal, for example, may be performed by the terminal, may be performed by a component (for example, a chip or a chip system) configured in the terminal, or may be implemented by a logical module or software that can implement all or some functions of the terminal. This is not limited in this application.

For example, the method includes: receiving a first SSB, where the first SSB belongs to an SSB group, and the SSB group is one of a plurality of SSB groups; and determining a first PMO based on the first SSB, and performing PDCCH blind detection on the first PMO. The plurality of SSB groups are in one-to-one correspondence with a plurality of search space groups. Each search space group includes one or more PMOs. Each SSB group includes one or more SSBs. The one or more PMOs included in one of the plurality of search space groups include the first PMO. A position of the one or more PMOs in each search space group is determined by at least each SSB in a corresponding SSB group, a monitoring periodicity of a PDCCH, monitoring duration of the PDCCH, a first parameter, and a fifth parameter. The determined position of the PMO in each search space group satisfies the following conditions: A system frame in which the PMO in each search space group is located is between system frames in which two adjacent SSB groups are located, and an offset between at least two adjacent PMOs in each search space group includes more than one slot. The monitoring periodicity is greater than the monitoring duration. A value of the first parameter is related to a quantity of PMOs included in each search space group. The fifth parameter indicates time domain distribution of the one or more PMOs in each search space group.

In other words, because the first PMO corresponds to the first SSB, a position of the first PMO is determined by at least the first SSB, the monitoring periodicity of the PDCCH, the monitoring duration of the PDCCH, the first parameter, and the fifth parameter. It may be understood that each SSB may correspond to one or more PMOs, and the first SSB may correspond to one or more first PMOs.

Because the terminal may receive the SSB in at least one SSB group in the plurality of SSB groups, the terminal may determine a position of each PMO in at least one corresponding search space group based on the at least one SSB group to which the received SSB belongs. Therefore, another possible implementation of the method provided in the third aspect is: determining a position of each PMO in at least one search space group, where the at least one search space group is included in a plurality of search space groups, the plurality of search space groups are in one-to-one correspondence with a plurality of SSB groups, each search space group includes one or more PMOs, each SSB group includes one or more SSBs, a position of the one or more PMOs in each search space group is determined by at least each SSB in a corresponding SSB group, a monitoring periodicity of a PDCCH, monitoring duration of the PDCCH, a first parameter, and a fifth parameter, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the monitoring duration of the PDCCH, a value of the first parameter is related to a quantity of PMOs included in each search space group, and the fifth parameter indicates time domain distribution of the one or more PMOs in each search space group; and performing PDCCH blind detection on the PMO in the at least one search space group.

It may be understood that the first PMO is a PMO in the at least one search space group, and the first SSB is an SSB in at least one SSB group corresponding to the at least one search space group.

It should be understood that the terminal does not necessarily determine positions of all PMOs in the at least one search space group. When receiving the first SSB, the terminal may determine, based on the received first SSB, the monitoring periodicity of the PDCCH, the monitoring duration of the PDCCH, the first parameter, and the fifth parameter, the position of the first PMO corresponding to the first SSB. However, it may be understood that regardless of whether the terminal determines the positions of all the PMOs in the at least one search space group, the position of the PMO in each search space group may satisfy the following conditions: The system frame in which the PMO in each search space group is located is between the system frames in which the two adjacent SSB groups are located, and the offset between the at least two adjacent PMOs in each search space group includes more than one slot.

According to a fourth aspect, a communication method is provided. The method may be applied to a radio access network device, and may be performed by the radio access network device, may be performed by a component (for example, a chip or a chip system) configured in the radio access network device, or may be implemented by a logical module or software that can implement all or some functions of the radio access network device. This is not limited in this application. The radio access network device may be, for example, a satellite base station.

For example, the method includes: determining a position of each PMO in at least one search space group, where the at least one search space group is included in a plurality of search space groups, the plurality of search space groups are in one-to-one correspondence with a plurality of SSB groups, each search space group includes one or more PMOs, each SSB group includes one or more SSBs, a position of the one or more PMOs in each search space group is determined by at least each SSB in a corresponding SSB group, a monitoring periodicity of a PDCCH, monitoring duration of the PDCCH, a first parameter, and a fifth parameter, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the monitoring duration of the PDCCH, a value of the first parameter is related to a quantity of PMOs included in each search space group, and the fifth parameter indicates time domain distribution of the one or more PMOs in each search space group; and transmitting the PDCCH on the PMO in the at least one search space group.

Because the radio access network device does not necessarily send SSBs at positions of the plurality of SSB groups, the radio access network device does not necessarily determine the positions of the PMOs in the plurality of search space groups corresponding to the plurality of SSB groups. The radio access network device may determine a position of each PMO in at least one corresponding search space group based on at least one SSB group sent, or may determine a position of a corresponding PMO based on a sent SSB.

Therefore, the fourth aspect further provides another possible manner as follows:
determining a position of a first PMO corresponding to a first SSB, where the first SSB is one of a first SSB group, the first SSB group is one of a plurality of SSB groups, the plurality of SSB groups are in one-to-one correspondence with a plurality of search space groups, each search space group includes one or more PMOs, each SSB group includes one or more SSBs, the one or more PMOs included in one of the plurality of search space groups include the first PMO, a position of the one or more PMOs in each search space group is determined by at least each SSB in a corresponding SSB group, a monitoring periodicity of a PDCCH, monitoring duration of the PDCCH, a first parameter, and a fifth parameter, and the determined position of the PMO in each search space group satisfies the following conditions: a system frame in which the PMO in each search space group is located is between system frames in which two adjacent SSB groups are located, and an offset between at least two adjacent PMOs in each search space group includes more than one slot, where the monitoring periodicity of the PDCCH is greater than the monitoring duration of the PDCCH, a value of the first parameter is related to a quantity of PMOs included in each search space group, and the fifth parameter indicates time domain distribution of the one or more PMOs in each search space group; and transmitting the PDCCH on the first PMO.

It should be understood that the method according to the third aspect corresponds to the method according to the fourth aspect. The terminal and the radio access network device may determine the position of the PMO in the at least one search space group according to a same method. Then, the terminal may perform PDCCH blind detection on the one or more PMOs in the at least one search space group, and the radio access network device may also transmit the PDCCH on the one or more PMOs in the at least one search space group. In other words, the terminal does not necessarily perform PDCCH blind detection on all the PMOs in the plurality of search space groups corresponding to the plurality of SSB groups, and the radio access network device does not necessarily transmit the PDCCH on all the PMOs in the plurality of search space groups corresponding to the plurality of SSB groups. A PMO used by the terminal to perform blind detection and a PMO used by the radio access network device to transmit the PDCCH may be a same PMO, or may be different PMOs. This is not limited in this application.

Each search space group may be considered as a set of one or more PMOs corresponding to each SSB in an SSB group.

The monitoring periodicity of the PDCCH is greater than the monitoring duration of the PDCCH, that is, the terminal performs PDCCH blind detection periodically, but does not keep performing PDCCH blind detection in the monitoring periodicity of the PDCCH, and the terminal may perform PDCCH blind detection in the monitoring duration of the PDCCH. In other words, the PMOs are distributed in the monitoring duration of the PDCCH. The monitoring duration of the PDCCH is related to an offset between a 1st PMO and a last PMO in the monitoring periodicity of the PDCCH. Specifically, the monitoring duration of the PDCCH does not exceed the offset between the 1st PMO and the last PMO in the monitoring periodicity of the PDCCH. The monitoring duration of the PDCCH may also be represented by a quantity of slots, for example, may be greater than or equal to a quantity of slots included in the offset between the 1st PMO and the last PMO in the monitoring periodicity of the PDCCH.

Different from duration of the PDCCH, in the monitoring duration of the PDCCH, slots occupied by the PMOs may be non-consecutive. In other words, there may be one or more slots that can be used to transmit other signaling in the duration of the PDCCH, and these slots are not used for PDCCH transmission and blind detection.

The monitoring periodicity of the PDCCH may be equal to an offset between system frames in which two adjacent SSB groups are located, and the monitoring periodicity of the PDCCH may be greater than the monitoring duration of the PDCCH. The PMO is distributed in a range of the monitoring duration of the PDCCH, and a position in the monitoring periodicity of the PDCCH other than the range of the monitoring duration of the PDCCH may be used to transmit an SSB in a next SSB group or the other signaling. In this way, the monitoring periodicity of the PDCCH and the monitoring duration of the PDCCH are set, so that overlapping between the position of the PMO and a position of the other signaling can be avoided.

In the method provided in the third aspect or the fourth aspect, the terminal and the radio access network device may determine, based on at least each SSB in an SSB group, the monitoring periodicity of the PDCCH, the monitoring duration of the PDCCH, the first parameter, and the fifth parameter, a position of each PMO in a corresponding search space group. The monitoring periodicity of the PDCCH, the monitoring duration of the PDCCH, and the time domain distribution of the PMO indicated by the fifth parameter may be used to determine the position of the PMO, and the first parameter and each SSB in the SSB group may be used to determine a PMO corresponding to the SSB. In this way, the determined PMOs corresponding to the SSBs are non-consecutive in time domain. Therefore, the terminal receives the other signaling such as a RAR message in a slot that is not occupied by the PMOs. This helps the terminal successfully receive the RAR message, ensuring access performance. In addition, the monitoring periodicity of the PDCCH and the monitoring duration of the PDCCH are designed, so that the position occupied by the PMO falls in the range of the monitoring duration of the PDCCH, and does not overlap the position of the other signaling. Therefore, invalid blind detection of the terminal can be avoided, and power consumption caused by unnecessary blind detection can be avoided.

It should be understood that in the method provided in the third aspect or the fourth aspect, because the monitoring periodicity of the PDCCH is equal to the offset between system frames in which two adjacent SSBs are located, that is, is equal to an offset between two adjacent search space groups, and the monitoring duration of the PDCCH is less than the monitoring periodicity of the PDCCH, a PMO in the monitoring duration of the PDCCH is a PMO in one search space group.

The following provides two possible designs of the fifth parameter as examples.

In a possible design, the fifth parameter includes a quantity of slots included in the offset between the at least two adjacent PMOs in each search space group.

In other words, the fifth parameter may indicate an offset existing between adjacent PMOs in the search space group, and the offset may be represented by using a quantity of slots. Time domain distribution of the PMOs in the search space group may be determined based on the offset.

The distribution of the PMOs in each search space group may be the same or different. When the distribution of the PMOs in each search space group is different, the fifth parameter may indicate an offset between adjacent PMOs for the distribution of the PMOs in each search space group.

In a possible case, a plurality of PMOs in each search space group are distributed at equal intervals, and the distribution of the PMOs in each search space group is the same. In this way, the fifth parameter indicates an offset between any two adjacent PMOs in any search space group, so that the time domain distribution of the PMOs in each search space group can be determined.

In another possible design, the fifth parameter includes a bitmap, the bitmap includes a plurality of bits, the plurality of bits are in one-to-one correspondence with a plurality of slots, and a value of each bit indicates whether a corresponding slot is occupied by a PMO.

The time domain distribution of the PMOs is indicated by the bitmap, so that distribution of PMOs in a search space group can be more flexibly indicated.

The plurality of slots corresponding to the plurality of bits may be a plurality of slots included in the monitoring duration of the PDCCH, or may be a plurality of slots included in the monitoring periodicity of the PDCCH. This is not limited in this application. It may be understood that when the plurality of bits are in one-to-one correspondence with the plurality of slots in the monitoring duration of the PDCCH, the time domain distribution of the PMOs may be indicated by a small quantity of bits, so that bit overheads can be reduced.

Optionally, the fifth parameter is predefined.

Predefinition of the fifth parameter may be considered as predefinition of the time domain distribution of the PMOs in the search space group. Predefining the fifth parameter can reduce signaling overheads.

Optionally, the fifth parameter is configured by a network device.

That the network device configures the fifth parameter may also be considered as that the network device configures the time domain distribution of the PMOs in the search space group. The network device may flexibly configure the time domain distribution of the PMOs in the search space group based on a transmission requirement of the other signaling.

With reference to the third aspect or the fourth aspect, in some possible implementations, that the value of the first parameter is related to the quantity of PMOs included in each search space group includes: The value of the first parameter is equal to the quantity of PMOs included in each search space group.

Optionally, the first parameter is predefined.

Predefinition of the first parameter may be considered as predefinition of the quantity of PMOs in the search space group. Predefining the first parameter can reduce the signaling overheads.

Optionally, the first parameter is configured by the network device.

That the network device configures the first parameter may be considered as that the network device configures the quantity of PMOs in the search space group. The network device may flexibly configure a quantity of PMOs in one search space group based on a current network status, a resource utilization status, and the like.

Because the first parameter may be equal to the quantity of PMOs included in each search space group, in another implementation, the quantity of PMOs included in each search space group may be predefined, or configured by the network device.

Optionally, the first parameter is determined based on the fifth parameter and the monitoring duration of the PDCCH.

When the PMOs in the search space group are distributed at equal intervals, the fifth parameter may indicate an offset between every two PMOs in each search space group. In this case, the offset indicated by the fifth parameter, the monitoring duration of the PDCCH, and the value of the first parameter are related. Therefore, the value of the first parameter may alternatively be determined based on the fifth parameter and the monitoring duration of the PDCCH. Therefore, the signaling overheads can be further reduced.

It should be understood that the value of the first parameter is not necessarily equal to the quantity of PMOs included in each search space group. For example, the first parameter may alternatively be obtained by performing any one or more mathematical transformations based on the quantity of PMOs included in each search space group. The mathematical transformation includes, for example, adding any value, subtracting any value, multiplying any value, or dividing any value. Details are not described again.

For ease of description, one of the plurality of search space groups is denoted as a first search space group, and the first PMO may be one or more PMOs in the first search space group. An SSB group corresponding to the first search space group is denoted as a first SSB group, and the first SSB may be an SSB in the first SSB group. The first SSB group is one of the plurality of SSB groups.

In a possible design, an index $p$ of each PMO in the first search space group in the plurality of search space groups satisfies $p=x \cdot s+(i\text{-}1) \cdot M \cdot L+k \bmod s$, where $x=0, 1, ..., $ or $X\text{-}1$, $X$ is a maximum quantity of PMOs corresponding to each SSB, $X$ is a positive integer, $s$ is a quantity of SSBs included in each SSB group, $s$ is a positive integer, $i$ is a group index of the first SSB group corresponding to the first search space group in the plurality of SSB groups, $k$ is an index of an SSB in the plurality of SSB groups, $k$ is a natural number less than or equal to S-1, S is a total quantity of SSBs included in the plurality of SSB groups, S is a positive integer, M is the value of the first parameter, M is a positive integer, and mod represents a modulo operation.

For the index of the SSB, the index of the PMO, and a relationship between a group index of an SSB group and an index of an SSB, refer to the foregoing descriptions. Details are not described again.

It should be understood that the foregoing formula is merely an example. As described above, a person skilled in the art may make simple mathematical transformations based on the same concept, and these changes shall fall in the protection scope of this application. For example, one or more operations are performed on M, for example, adding any value, subtracting any value, multiplying any value, or dividing any value, and the foregoing formula may also change accordingly. Details are not described again.

With reference to the first aspect to the fourth aspect, in some possible implementations, the quantity of SSBs included in each SSB group is predefined, or is configured by the network device.

In different communication systems, the total quantity of SSBs may be defined in advance. The terminal and the radio access network device may determine a quantity of SSB groups based on the total quantity of SSBs and the quantity of SSBs included in each SSB group.

Because the SSB groups are in one-to-one correspondence with the search space groups, the quantity of SSB groups is equal to a quantity of search space groups. Therefore, a quantity of search space groups included in the paging frame set may be determined.

With reference to the first aspect to the fourth aspect, in some possible implementations, the maximum quantity of PMOs corresponding to each SSB is predefined, or is configured by the network device.

The maximum quantity of PMOs corresponding to each SSB is defined, so that a quantity of rounds for mapping the index of the SSB to obtain the index of the PMO may be determined, that is, a quantity of values that can be used for $x$ in the foregoing formula, to determine the PMO corresponding to each SSB.

With reference to the first aspect to the fourth aspect, in some possible implementations, each search space group is located in one or more system frames.

In other words, a quantity of system frames occupied by a PMO in one search space group in time domain is not limited in this application. A PMO in one search space group may be distributed in one system frame, or may be distributed in a plurality of system frames.

Optionally, the plurality of search space groups are search space groups in one paging frame set, and the paging frame set occupies a plurality of consecutive system frames in time domain.

In other words, the PMOs in the plurality of search space groups are PMOs in one paging frame set. The paging frame set is an example of the foregoing time domain range in which the terminal performs blind detection. When the time domain range in which the terminal performs blind detection is the paging frame set, indexes of the PMOs are sequentially numbered from a 1st PMO in the paging frame set.

Different from a paging frame (paging frame, PF), the paging frame set may occupy a plurality of consecutive system frames. The terminal may perform PDCCH blind detection in the plurality of consecutive system frames.

The paging frame set corresponds to the terminal, or is terminal-level. Each terminal may determine a paging frame set for the terminal, and perform PDCCH blind detection on a PMO in the paging frame set corresponding to the terminal.

In a possible design, a start position of the paging frame set is related to an identifier of the terminal. The terminal may determine the start position of the paging frame set based on the identifier.

Optionally, a system frame in which the start position of the paging frame set is located satisfies $(SFN+O) \bmod T = (T \text{ div } N') \times (UE\_ID \bmod N')$, where SFN is a system frame number of the system frame, O is a quantity of system frames included in an offset between the system frame in which the start position of the paging frame set is located and a reference position, N' is a quantity of paging frame sets included in one paging periodicity, N' is a positive integer, UE_ID is the identifier of the terminal, T is duration of the paging periodicity, div represents an operation of returning a quotient, and mod represents a modulo operation. The reference position is predefined in a protocol or configured. For example, the reference position is a start position of a system frame whose frame number is 0.

Optionally, an end position of the paging frame set is determined by the start position of the paging frame set and a sixth parameter. The sixth parameter includes duration of the paging frame set in time domain, a quantity of system frames included in the paging frame set, or a quantity of search space groups included in the paging frame set.

When the start position of the paging frame set is determined, the end position may be determined with reference to the duration of the paging frame set. The duration of the paging frame set may be represented by the sixth parameter, and may be represented as duration, or may be represented as the quantity of included system frames or the quantity of included search space groups. This is not limited in this application.

Optionally, the sixth parameter is predefined.

Predefinition of the sixth parameter may be considered as predefinition of the duration of the paging frame set. In other words, duration of a paging frame set for each terminal may be the same and fixed.

Optionally, the sixth parameter is configured by the network device.

The sixth parameter may be flexibly configured. For example, the network device may flexibly configure the paging frame set for the terminal based on the current network status, the resource utilization status, and the like.

Further, the paging frame set includes one or more POs, and each PO occupies a plurality of consecutive system frames in time domain.

That the plurality of search space groups are search space groups in one paging frame set includes: The plurality of search space groups are search space groups in one PO in the one or more POs included in the paging frame set.

The PO is another example of the time domain range in which the terminal performs blind detection. A granularity of the PO is less than that of the paging frame set, and the PO is a part of the paging frame set. When the PO is the time domain range in which the terminal performs blind detection, the indexes of the PMOs are sequentially numbered from a 1st

PMO in the PO.

The PO also corresponds to the terminal, or in other words, is terminal-level. Each terminal may further determine a PO for the terminal in the determined paging frame set, and perform PDCCH blind detection on a PMO in the PO.

Optionally, an index i_s corresponding to the PO satisfies $i\_s= \left\lfloor (UE\_ID / N') \bmod Ns' \right\rfloor$, where Ns' is a quantity of POs included in one paging frame set, Ns' is a positive integer, N' is a quantity of paging frame sets included in one paging periodicity, and N' is a positive integer.

The time domain range in which the terminal performs blind detection may be the PO whose index is i_s in the paging frame set. In other words, the terminal may perform blind detection in a range of the PO whose index is i_s in the paging frame set.

According to a fifth aspect, this application provides a communication apparatus, to implement the communication method in any one of the first aspect to the fourth aspect and the possible implementations of the first aspect to the fourth aspect. The apparatus includes a corresponding unit or module configured to perform the method. The unit or module included in the apparatus can be implemented by software and/or hardware. The apparatus may be, for example, a terminal or a network device, may be a chip, a chip system, a processor, or the like that supports a terminal or a radio access network device in implementing the foregoing method, or may be a logical module or software that can implement all or some functions of a terminal or a radio access network device.

According to a sixth aspect, this application provides a communication apparatus, including a processor. The processor is configured to perform the communication method in any one of the first aspect to the fourth aspect and the possible implementations of the first aspect to the fourth aspect.

Optionally, the apparatus may further include a memory, configured to store instructions and data. The memory is coupled to the processor. When the processor executes the instructions stored in the memory, the method described in the foregoing aspects may be implemented.

Optionally, the apparatus may further include a communication interface. The communication interface is used by the apparatus to communicate with another device. For example, the communication interface may be a transceiver, a circuit, a bus, a module, or another type of communication interface.

According to a seventh aspect, this application provides a chip system. The chip system includes at least one processor, configured to support implementation of a function in any one of the first aspect to the fourth aspect and the possible implementations of the first aspect to the fourth aspect, for example, receiving or processing of data and/or information in the foregoing method.

In a possible design, the chip system further includes a memory, the memory is configured to store program instructions and data, and the memory is located inside or outside the processor.

The chip system may include a chip, or may include a chip and another discrete component.

According to an eighth aspect, this application provides a computer-readable storage medium, including a computer program. When the computer program is run on a computer, the computer is enabled to implement the method in any one of the first aspect to the fourth aspect and the possible implementations of the first aspect to the fourth aspect.

According to a ninth aspect, this application provides a computer program product. The computer program product includes a computer program (which may also be referred to as code or instructions). When the computer program is run, a computer is enabled to perform the method in any one of the first aspect to the fourth aspect and the possible implementations of the first aspect to the fourth aspect.

According to a tenth aspect, an embodiment of this application provides a communication system, including the foregoing terminal and the foregoing radio access network device.

Optionally, the terminal may be configured to implement the method in any one of the first aspect or the possible implementations of the first aspect, and the radio access network device may be configured to implement the method in any one of the second aspect and the possible implementations of the second aspect.

Optionally, the terminal may be configured to implement the method in any one of the third aspect or the possible implementations of the third aspect, and the radio access network device may be configured to implement the method in any one of the fourth aspect and the possible implementations of the fourth aspect.

It should be understood that technical solutions of the fifth aspect to the tenth aspect of this application correspond to the technical solutions of the first aspect to the fourth aspect of this application, and beneficial effects achieved in the aspects and corresponding feasible implementations are similar. Details are not described again.

**BRIEF DESCRIPTION OF DRAWINGS**

FIG. 1 is a diagram of an architecture of a communication system applicable to a method according to an embodiment of this application;

FIG. 2 is a diagram of a communication architecture of satellite communication in a bent pipe (bent pipe) mode and a regenerative (regenerative) mode;

FIG. 3 is a diagram of another architecture of a communication system applicable to a method according to an embodiment of this application;

FIG. 4 is a diagram of coverage of a satellite;

FIG. 5 is a diagram of scanning coverage by a satellite by using a beam;

FIG. 6 is a diagram of a paging periodicity defined in a current 5G protocol;

FIG. 7 is a diagram of two current designs of a paging search space;

FIG. 8 is a schematic flowchart of a communication method according to an embodiment of this application;

FIG. 9 is a diagram of a paging frame set and a PO in a paging periodicity according to an embodiment of this application;

FIG. 10A to FIG. 10C are diagrams of a search space group according to an embodiment of this application;

FIG. 11 is another diagram of a search space group according to an embodiment of this application;

FIG. 12 and FIG. 13 are diagrams of a valid PMO in a search space group corresponding to an SSB group according to an embodiment of this application;

FIG. 14 and FIG. 15 are two other diagrams of a search space group according to an embodiment of this application;

FIG. 16 and FIG. 17 are diagrams of a PMO in a search space group corresponding to an SSB group according to an embodiment of this application;

FIG. 18 is a block diagram of a communication apparatus according to an embodiment of this application; and

FIG. 19 is a diagram of a structure of a terminal according to an embodiment of this application.

## DESCRIPTION OF EMBODIMENTS

The following describes technical solutions of this application with reference to the accompanying drawings.

To facilitate understanding of embodiments of this application, the following descriptions are first provided.

First, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects, but does not exclude an "and" relationship between the associated objects. A specific meaning represented by the character "/" may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

Second, in embodiments of this application, both "when" and "if" mean that an apparatus performs corresponding processing in an objective situation, are not intended to limit time, do not require the apparatus to necessarily have a determining action during implementation, and do not mean another limitation.

Third, in embodiments of this application, prefix words such as "first" and "second" are merely used to distinguish and describe different things belonging to a same name category, and are not intended to limit a sequence, sizes, or a quantity of things. For example, a "first SSB" represents an SSB received by a terminal, and does not represent a 1st SSB. A "first PMO" represents a PMO corresponding to the first SSB, does not represent a 1st PMO, and does not limit a quantity of PMOs. A "first SSB group" represents an SSB group to which the first SSB belongs, and does not represent a 1st SSB group. A "first offset" and a "second offset" are merely offsets defined differently, and there is no time sequence relationship or magnitude relationship between the two offsets. A "first parameter" and a "second parameter" are merely parameters defined differently, and there is no priority relationship, time sequence relationship, or magnitude relationship between the two parameters.

Fourth, "simultaneously" in embodiments of this application may be understood as "at a same time point", may be understood as "in a time period", or may be understood as "in a same periodicity", and may be specifically understood with reference to the context.

Fifth, in embodiments of this application, "B corresponding to A" indicates that B is associated with A, and "determining B based on A" does not mean that B is determined based only on A, and B may alternatively be determined based on A and/or other information.

Sixth, predefinition in this application may be understood as definition, definition in advance, storage, prestorage, pre-negotiation, pre-configuration, solidifying, or pre-burning.

Configuring by a network device in this application may be understood as configuring by the network device by sending signaling to a terminal device. Specifically, a radio access network device may perform configuration for the terminal by using signaling, or a core network device may perform configuration for the terminal by forwarding signaling to a radio access network device. This is not limited in this application.

Seventh, storage in this application may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Eighth, mathematical operation symbols are used in a plurality of places in this application, and are described as follows.

mod: indicates that a remainder is returned after two numbers are divided. For example, a mod b=c indicates that a remainder c of a divided by b is returned.

div: indicates that a quotient is returned after by two numbers are divided. For example, a div b=d indicates that a quotient d of a divided by b is returned.

$\lfloor \ \rfloor$: indicates rounding down.

$\lceil \ \rceil$: indicates rounding up.

Ninth, "offsetting" and "offset" are used in a plurality of places in embodiments of this application. "Offsetting" may indicate that there is a deviation, a distance, or the like between two objects. "Offset" may indicate a degree of offsetting between the two objects, or the distance between the two objects, for example, a distance between start positions of the two objects or a distance between end positions of the two objects. An "offset" in time domain may be represented by a quantity of slots or a quantity of system frames included in the distance between the two objects, for example, may be obtained by subtracting one of indexes or numbers of slots (or system frames) in which the start positions of the two objects are located from the other, or may be obtained by subtracting one of indexes or numbers of slots (or system frames) in which the end positions of the two objects are located from the other.

For example, an "offset" between two slots may be a quantity of slots of offsetting between the two slots or a quantity of slots included in the offset between the two slots, and may be obtained by subtracting one of indexes or numbers of the two slots from the other. For example, an offset between a slot 1 and a slot 3 is two slots, where 2 is obtained by 3-1.

In some embodiments, the "offset" is also referred to as an "interval" with a same meaning as the "offset".

Tenth, in embodiments of this application, because a PMO is a monitoring occasion used to monitor a PDCCH, and from a perspective of time domain, a scheduling unit of the PDCCH is one slot, it is assumed that each PMO occupies one slot. Certainly, this application does not exclude a possibility that a quantity of slots occupied by each PMO is defined as another value in a future protocol. In this case, the solutions provided in this application are still applicable.

Eleventh, in embodiments of this application, terms such as a paging frame set and a search space group are introduced. These terms are introduced only for ease of description, and should not constitute any limitation on this application. The paging frame set may be considered as a time period, and may occupy one or more system frames in time domain, but does not represent a set of paging frames. The paging frame set may be used to limit a time domain range in which a terminal performs blind detection. The search space group may be considered as a set of PMOs corresponding to SSBs in a same SSB group. Names shown in this specification are merely examples, and should not constitute any limitation on this application. For example, the paging frame set may also be referred to as a paging superframe, and the search space group may also be referred to as a PMO group, a PMO set, or the like.

The solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) mobile communication system, a new radio (new radio, NR) system or another evolved communication system, a next generation mobile communication system beyond a 5G communication system, a 6th generation (6th generation, 6G) communication system, or a future communication system.

In embodiments of this application, the radio access network (radio access network, RAN) device may be a device having a wireless transceiver function. The radio access network device may be a device that provides a wireless communication function service, is usually located on a network side, and includes but is not limited to: a next generation base station (gNodeB, gNB) in the 5th generation (5th generation, 5G) communication system; a next generation base station in a 6th generation (6th generation, 6G) mobile communication system; a base station in a future mobile communication system; an evolved NodeB (evolved NodeB, eNB), a radio network controller (radio network controller, RNC), a NodeB (NodeB, NB), a base station controller (base station controller, BSC), a home base station (home evolved NodeB, or home NodeB, HNB), a baseband unit (baseband unit, BBU), a transmission reception point (transmission reception point, TRP), a transmitting point (transmitting point, TP), a base transceiver station (base transceiver station, BTS), and the like in the LTE system; and an access node, a wireless relay node, a wireless backhaul node, and the like in a wireless fidelity (wireless fidelity, Wi-Fi) system. Alternatively, the radio access network device may be a radio controller in a cloud radio access network (cloud radio access network, CRAN) scenario, a relay station, an in-vehicle device, a wearable device, a network device in a future evolved network, or the like.

In a network structure, the radio access network device may include a central unit (central unit, CU) node or a distributed unit (distributed unit, DU) node, include a CU node and a DU node, or include a control plane (control plane, CP) CU node, a user plane (user plane, UP) CU node, and a DU node.

The radio access network device may be deployed on the land, including an indoor or outdoor device, or may be deployed in the air, for example, on a plane, a balloon, or a satellite. The radio access network device in embodiments of this application may be a radio access network device used in an NTN, for example, a satellite base station.

In embodiments of this application, an apparatus configured to implement a function of a radio access network may be the radio access network device, or may be an apparatus that can support the radio access network device in implementing the corresponding function, for example, a chip system, a communication module, or a modem, where the apparatus may be installed in the radio access network device. The chip system may include a chip, or may include a chip and another discrete component. A specific technology and a specific device form used by the radio access network device are not limited in embodiments of this application.

For ease of description, the following provides descriptions by using an example in which the satellite base station is used as the radio access network device. The satellite base station may communicate with the terminal, or may communicate with the terminal via a relay station. The terminal may communicate with a plurality of base stations using different technologies. For example, the terminal may communicate with a base station supporting an LTE network, may communicate with a base station supporting a 5G network, or may support a dual connection to a base station in an LTE network and a base station in a 5G network.

A core network may be used to implement three major functions of registration, connection, and session management. Based on different functions, the core network may be divided into different modules, such as an access and mobility management function (access and mobility management function, AMF) module, a session management function (session management function, SMF) module, and a user plane function (user plane function, UPF) module. For specific names and functions of the modules, refer to the conventional technology. This is not limited in this application. In addition, a specific technology and a specific device form used by each module are not limited in this application.

In embodiments of this application, the network device may include at least one of the radio access network device and the core network device.

The terminal may be a device having a wireless transceiver function. The terminal may also be referred to as a terminal, user equipment (user equipment, UE), a mobile station (mobile station, MS), a mobile terminal (mobile terminal, MT), or the like, and may be an entity configured on a user side to receive or transmit a signal, for example, a mobile phone. The terminal includes a handheld device, an in-vehicle device, a wearable device, or a computing device that has a wireless communication function. For example, the UE may be a mobile phone (mobile phone), a tablet computer, or a computer with a wireless transceiver function. The terminal may alternatively be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IoT), virtual reality, augmented reality, industrial control, self-driving, telemedicine, the smart grid, smart furniture, a smart office, a smart wearable, smart transportation, and the smart city. The terminal may be a mobile phone, a tablet computer, a computer with a wireless transceiver function, a wearable device, a vehicle, an uncrewed aerial vehicle, a helicopter, a plane, a ship, a robot, a robot arm, a smart home device, or the like.

The terminal may be deployed on the land, including an indoor, outdoor, handheld, wearable, or in-vehicle device; may be deployed on the water, for example, on a ship; or may be deployed in the air, for example, on a plane, a balloon, or a satellite.

In embodiments of this application, an apparatus configured to implement a function of the terminal may be the terminal, or may be an apparatus that can support the terminal in implementing the function, for example, a chip system, a communication module, or a modem, where the apparatus may be installed in the terminal. The chip system may include a chip, or may include a chip and another discrete component. A specific technology and a specific device form used by the terminal are not limited in this application.

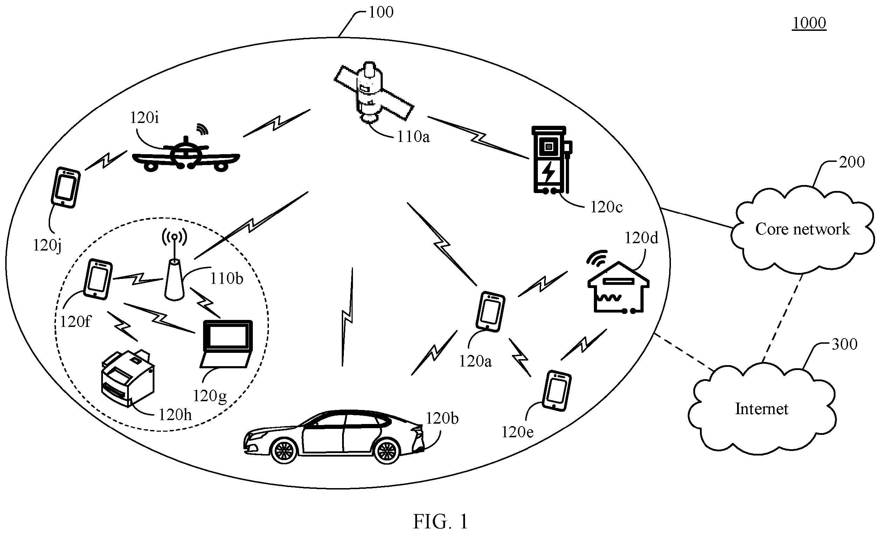

FIG. 1 is a diagram of an architecture of a communication system 1000 applicable to a method according to an embodiment of this application. As shown in FIG. 1, the communication system 1000 includes a radio access network 100 and a core network 200. Optionally, the communication system 1000 may further include an internet 300. The radio access network 100 may include at least one base station (for example, 110a and 110b in FIG. 1), and may further include at least one terminal (for example, 120a to 120j in FIG. 1).

The base station may be a base station deployed in the air, for example, may be a satellite base station 110a; or may be a base station deployed indoors, for example, may be a micro base station or an indoor base station 110b.

The terminal may be a terminal deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 110b, and a printer 120h in FIG. 1.

The base station and the terminal may be fixed or movable. For example, the base station and the terminal may be deployed on the land, including an indoor, outdoor, handheld, or in-vehicle device; may be deployed on the water; or may be deployed on a plane, a balloon, and an artificial satellite in the air.

Roles of the base station and the terminal may be relative. For example, the helicopter or uncrewed aerial vehicle 120i in FIG. 1 may be configured as a mobile base station. For 120j accessing the radio access network 100 via 120i, 120i is a base station. However, for 110a, 120i is a terminal. In other words, 110a and 120i communicate with each other based on a wireless air interface protocol. Certainly, 110a and 120i may alternatively communicate with each other based on an interface protocol between base stations. In this case, for 110a, 120i is also a base station. Therefore, both the base station and the terminal may be collectively referred to as communication devices, and 110a, 110b, and 120a to 120j in FIG. 1 may be referred to as communication devices that have respective corresponding functions, for example, communication devices having a base station function or communication devices having a terminal function.

Communication between a base station and a terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource for wireless communication is not limited in embodiments of this application.

In embodiments of this application, a function of the satellite base station may alternatively be performed by a module (for example, a chip) in a wireless base station, or may be performed by a control subsystem including the function of the satellite base station. The control subsystem including the function of the satellite base station herein may be a control center in the foregoing application scenarios of the terminal, such as the smart grid, industrial control, smart transportation, the smart city, environment monitoring, public safety, the smart home, and a smart hospital. The function of the terminal may alternatively be performed by a module (for example, a chip or a modem) in the terminal, or may be performed by an apparatus including the function of the terminal.

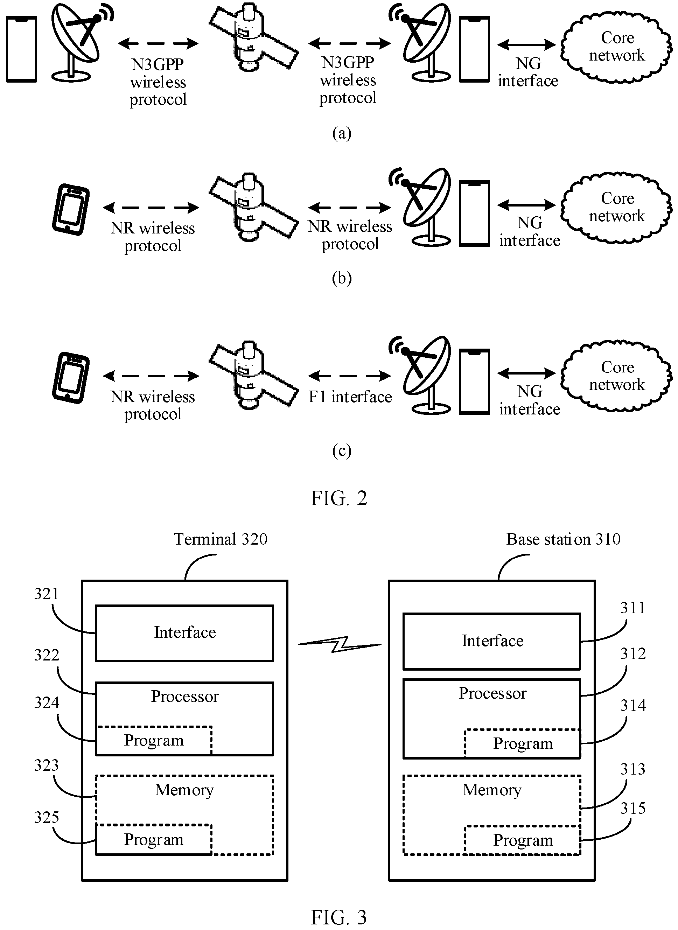

A method provided in this application may be applied to NTN communication, for example, satellite communication. FIG. 2 is a diagram of an architecture of satellite communication.

(a) and (b) in FIG. 2 show a communication architecture of satellite communication in a bent pipe mode. The figures show a radio access network, a core network, and a terminal connected to the radio access network in a 5G system. The radio access network includes a satellite and the terminal. In the bent pipe mode, the satellite may be configured to perform amplification, frequency conversion, and another process on a received signal, and then forward the signal without performing other processing. The satellite may also be referred to as a bent pipe satellite (bent pipe satellite). The satellite transparently transmits the signal, so that this mode may also be referred to as a transparent transmission mode.

The satellite may access a network by using a non-3GPP (non-3GPP, N3GPP) access technology or an NR access technology. The terminal may also access the network by using the N3GPP access technology or the NR access technology.

(a) in FIG. 2 is a diagram in which the satellite and the terminal separately access the network by using the N3GPP access technology. The satellite may be connected to a non-3GPP interworking function (non-3GPP interworking function, N3IWF) module by using an N3GPP wireless protocol. The N3IWF may be responsible for connecting a non-3GPP access network to a 5G core network (5G core, 5GC). An interface between the N3IWF and the 5GC is an NG interface, and may specifically include a control plane (NG-C) interface (also referred to as an N2 interface) used between an NG-RAN and the 5GC and a user plane (NG-U) interface (also referred to as an N3 interface) used between the NG-RAN and the 5GC. For a specific process in which the terminal accesses the satellite based on the N3GPP access technology, refer to the conventional technology. Details are not described herein.

(b) in FIG. 2 is a diagram in which the satellite and the terminal separately access the network by using the NR access technology. The satellite may access a terrestrial radio access network device, for example, a gNB, by using an NR wireless protocol. The terrestrial radio access network device may be connected to a 5GC through an NG interface. The terminal may access the satellite by using the NR wireless protocol. For a specific process in which the terminal accesses the satellite based on the NR wireless protocol, refer to the conventional technology. Details are not described herein. The satellite communicates with the terminal and the ground by using an NR technology, so that the satellite may also be referred to as a wireless relay station (radio frequency repeater, RF repeater).

(c) in FIG. 2 shows a communication architecture of satellite communication in a regenerative mode. (c) in FIG. 2 shows a radio access network, a core network, and a terminal connected to the radio access network in a 5G system. The radio access network includes a satellite and the terminal. In the regenerative mode, the satellite has some or all functions of a base station, and can perform onboard processing on a received signal. Therefore, the satellite is also referred to as a regenerative satellite (regenerative satellite). The satellite transmits the signal in a non-transparent mode, so that this mode is also referred to as a non-transparent transmission mode.

The satellite in (c) in FIG. 2 may be connected to a terrestrial connection device through an F1 interface. The connection device may be, for example, a terrestrial base station, an NTN gateway, or another device. The connection device may access a 5GC through an NG interface. The terminal in (c) in FIG. 2 may access the satellite based on an NR wireless protocol. For a specific process in which the terminal accesses the satellite based on the NR wireless protocol, refer to the conventional technology. Details are not described herein.

FIG. 3 is a simplified diagram of a communication system according to an embodiment of this application. For simplicity, FIG. 3 shows only a base station 310 and a terminal 320. The base station 310 may be a satellite base station. The base station 310 includes an interface 311 and a processor 312. The processor 312 may optionally store a program 314. The base station 310 may optionally include a memory 313. The memory 313 may optionally store a program 315. The terminal 320 includes an interface 321 and a processor 322. The processor 322 may optionally store a program 324. The terminal 320 may optionally include a memory 323. The memory 323 may optionally store a program 325. These components operate together, to provide various functions described in this application. For example, the processor 312 and the interface 311 operate together, to provide a wireless connection between the base station 310 and the terminal 320. The processor 322 and the interface 321 operate together, to implement downlink transmission and/or uplink transmission of the terminal 320.

The processor (for example, the processor 312 and/or the processor 322) may include one or more processors and is implemented as a combination of computing devices. The processor (for example, the processor 312 and/or the processor 322) may separately include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other proper hardware or firmware and/or a combination of hardware and software, to perform various functions described in this application. The processor (for example, the processor 312 and/or the processor 322) may be a general-purpose processor or a dedicated processor. For example, the processor 312 and/or the processor 322 may be a baseband processor or a central processing unit. The baseband processor may be configured to process a communication protocol and communication data. The central processing unit may be configured to enable the base station 310 and/or the terminal 320 to perform a software program and process data in the software program.

The interface (for example, the interface 311 and/or the interface 321) may be configured to implement communication with one or more computer devices (for example, a terminal and a base station (base station, BS)). In some embodiments, the interface may include a wire for coupling a wired connection, a pin for coupling a wireless transceiver, or a chip and/or a pin for a wireless connection. In some embodiments, the interface may include a transmitter, a receiver, a transceiver, and/or an antenna. The interface may be configured to use any available protocol (for example, the 3rd generation partnership project (3rd generation partnership project, 3GPP) standard).

The program in this application represents software in a broad sense. A non-limiting example of the software is program code, a program, a subprogram, an instruction, an instruction set, code, a code segment, a software module, an application, a software application, or the like. The program may be run in the processor and/or a computer, so that the base station 310 and/or the terminal 320 perform/performs various functions and/or processes described in this application.

The memory (for example, the memory 313 and/or the memory 323) may store data manipulated by the processor (for example, the processor 312 and/or the processor 322) when executing software. The memory 313 and the memory 323 may be implemented by using any storage technology. For example, the memory may be any available storage medium that can be accessed by the processor and/or the computer. A non-limiting example of the storage medium includes a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a compact disk read-only memory (compact disk read-only memory, CD-ROM), a removable medium, an optical disk memory, a magnetic disk storage medium, a magnetic storage device, a flash memory, a register, a state memory, a remote mounted memory, a local or remote memory component, or any other medium that can carry or store software, data, or information and that can be accessed by the processor/the computer.

The memory (for example, the memory 313 and/or the memory 323) and the processor (for example, the processor 312 and/or the processor 322) may be separately disposed or integrated together. The memory may be configured to be connected to the processor, so that the processor can read information from the memory, and store information in and/or write information into the memory. The memory 313 may be integrated into the processor 312. The memory 323 may be integrated into the processor 322. The processor (for example, the processor 312 and/or the processor 322) and the memory (for example, the memory 313 and/or the memory 323) may be disposed in an integrated circuit (for example, the integrated circuit may be disposed in UE, a base station, or another network node).

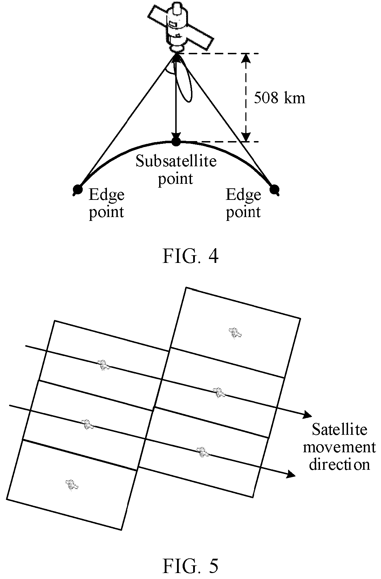

Satellite communication has a characteristic of a large coverage area of a single satellite. Coverage of a satellite is related to a scanning angle of the satellite. A low-orbit satellite with an orbit height of 500 kilometers (kilometers, km) is used as an example. It is assumed that a scanning angle of a phased array antenna is $(\pm30°)\times(\pm45°)$, where $\pm45°$ is a scanning angle in a moving direction of the satellite, and $\pm30°$ is a scanning angle in a direction perpendicular to the moving direction of the satellite. If coverage of the satellite on the ground is calculated based on rectangular coverage, a long side of the rectangular coverage in the moving direction of the satellite is about 1000 km, and a short side of the rectangular coverage in the direction perpendicular to the moving direction of the satellite is about 650 km. Therefore, a total area of the coverage of the satellite is about $650\times1000=650,000$ square kilometers. FIG. 4 is a diagram of the coverage of the satellite. Each rectangle in FIG. 4 represents the coverage of the satellite when a center point of the rectangle is a subsatellite point. As the satellite moves, the coverage of the satellite also moves in a running direction of the satellite.

Similar to a terrestrial network, in a satellite communication system, a satellite having a base station function may use a beam to scan a coverage area to provide user access. FIG. 5 is a diagram of scanning the coverage by the satellite by using the beam. A single-beam coverage area is limited due to a hardware limitation of the satellite and a link budget limitation of user access. For example, considering that the satellite uses a single channel for beam scanning, and an array scale is $40\times40$, for a beam at the subsatellite point, a beam width at which access can be implemented is about 4.5 degrees, a single-beam coverage area at which access can be implemented at the subsatellite point is about 1200 square kilometers, and more than 530 beams are required for single-satellite coverage; and for a beam at an edge point, a beam width at which access can be implemented is about 1.5 degrees, a single-beam coverage area at which access can be implemented at the edge point is about 840 square kilometers, and more than 790 beams are required for single-satellite coverage. The subsatellite point is an intersection point of a connection line between the earth center and the satellite on the surface of the earth, and the edge point is a point on the surface of the earth that is located at an edge of the coverage of the satellite. FIG. 5 shows the subsatellite point and the edge point in the coverage of the satellite.

Based on the foregoing analysis, according to unequal-area coverage of beams, to achieve effects of seamless coverage in the coverage of the satellite, 530 to 790 beams are required for implementing continuous random access in coverage of a single satellite, so that a large quantity of scanning beams are required. Similar to the terrestrial network, the satellite may also use an SSB to perform beam scanning. Therefore, 530 to 790 SSBs are also required for beam scanning.

It should be understood that the foregoing descriptions provided with reference to FIG. 4 and FIG. 5 for the scanning angle, the coverage, the beam width, and the quantity of required beams for the satellite in the satellite communication system are all for ease of understanding, and should not constitute any limitation on this application. It may be understood that the coverage of the satellite and the quantity of required beams are further related to a plurality of parameters such as a height of the satellite from the surface of the earth, the scanning angle of the satellite, and the beam width. For brevity, details are not described herein.

On the other side, packet-based data flows are usually bursty. In consideration of power consumption, if a terminal does not transmit data for a long time, a radio access network device releases an RRC connection of the terminal, and requests a core network to release a corresponding connection of the terminal. The terminal enters an idle state. In the idle state, if the terminal needs to transmit uplink data, the terminal may initiate an RRC connection request to the radio access network device; and if downlink data arrives, a network device may page the terminal. Therefore, the terminal in the idle state may listen to a paging message.

The terminal in the idle state may periodically listen to a PDCCH on a PO on a PF corresponding to the terminal in a specific paging periodicity of the terminal, and if a P-RNTI is obtained from the PDCCH through decoding, obtain the paging message based on one or more of resource allocation and a modulation and coding scheme (modulation and coding scheme, MCS) indicated by the PDCCH, and the like. If the paging message carries an identifier of the terminal, the terminal initiates a paging response; or if the paging message does not carry an identifier of the terminal, the terminal continues to listen to the PDCCH in a next paging periodicity. The identifier of the terminal may be an identifier allocated by a core network to the terminal after the terminal registers with the network, for example, may be a 5G-S-TMSI.

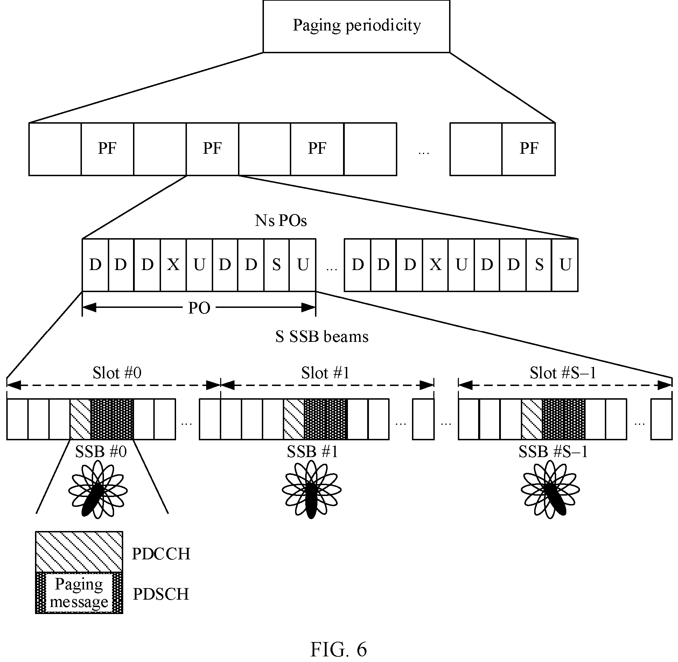

The following describes, with reference to FIG. 6, a rule for listening to the paging message by the terminal in a current 5G protocol.

FIG. 6 is a diagram of a paging periodicity defined in the current 5G protocol. As shown in FIG. 6, a paging periodicity may include N (N is a positive integer) PFs, a PF may include Ns (Ns is a positive integer) POs, a PO may include one group of PMOs, and a group of PMOs may include one or more PMOs. A PO may last for a plurality of slots (slots). A PF may be one system frame, and may include one or more POs or a start position of one or more POs.

In a possible implementation, the terminal may calculate, according to the following rules, a PF and a PO for receiving the paging message:

a system frame number (system frame number, SFN) corresponding to the PF may satisfy (SFN+PF_offset) mod T=(T div N)×(UE_ID mod N); and

an index i_s corresponding to the PO may satisfy $i\_s = \left\lfloor (UE\_ID / N) \bmod Ns \right\rfloor$.

T is duration of the paging periodicity of the terminal, for example, may be equal to duration of a discontinuous reception (discontinuous reception, DRX) periodicity of the terminal. If an RRC layer or an upper layer configures a dedicated DRX value for the terminal, T is a minimum value between the dedicated DRX value and a default DRX value broadcast in a system message (for example, a SIB 1); or if an RRC layer or an upper layer does not configure a dedicated DRX value for the terminal, T is a default DRX value broadcast in a system message.

PF_offset is an offset of the PF relative to a reference position (for example, an SFN 0), and may be represented by a quantity of slots of offsetting. N is a quantity of PFs in one paging periodicity. Ns is a quantity of POs in one PF. Values of N and PF_offset may both be derived from a parameter "n and paging frame offset (nAndPagingFrameOffset)" in the SIB1. Ns may be configured in the SIB1.

UE_ID is the identifier of the terminal, and may be obtained through calculation by using the following formula: 5G-S-TMSI mod 1024. If the terminal does not have the 5G-S-TMSI, it indicates that the terminal has not registered with the network.

The terminal may determine a PMO based on parameters "paging search space (pagingSearchSpace)" and "1st PDCCH monitoring occasion in the PO (firstPDCCH-MonitoringOccasionOfPO)" configured by the network device in the SIB1. When a "paging search space identifier (pagingSearchSpaceId)" in the parameter "pagingSearchSpace" is 0, a position of the PMO is the same as that in the SIB1, and Ns is 1 or 2. When Ns is 1, each PF includes only one PO, and the PO starts from a 1st PMO (that is, a start PMO, or an initial PMO) of the PF. When Ns is 2, the PO is in a first half-frame (i_s=0) or a second half-frame (i_s=1) of the PF. When "pagingSearchSpaceId" in the parameter "pagingSearchSpace" is not 0, the terminal monitors the PO whose index is i_s.

There is one or more consecutive PMOs in a PO, and an $(x \cdot S + k)^{th}$ PMO corresponds to a $k^{th}$ SSB. A value of $x$ is an integer from 0 to X-1, that is, $x$=0, 1, ..., or X-1. A value of $k$ is an integer from 0 to S-1, that is, $k$=0, 1, ..., or S-1. Both X and S are positive integers. S is a maximum quantity of transmittable SSBs configured by using a parameter "SSB positions in a pulse (ssb-PositionsInBurst)" in the SIB 1. X is a quantity of PMOs corresponding to each SSB in each PO, which is configured by using a parameter "quantity of PMOs corresponding to each SSB in the PO in R16 (nrofPDCCH-MonitoringOccasionPerSSB-InPO-r16)" in the SIB1. Indexes of the PMOs may be sequentially numbered from 0 by using a 1st PMO in the PO as a start position. Indexes of SSBs are sequentially numbered from 0 based on the maximum quantity S of SSBs configured by using the parameter "ssb-PositionsInBurst" in the SIB 1, for example, 0, 1, ..., and S-1. The terminal may detect the PDCCH on a PMO at a corresponding position based on an index of a received SSB and the foregoing correspondence.

It should be noted that the parameter "ssb-PositionsInBurst" may be a bitmap (bitmap), and indicates which SSBs in an SSB pattern are actually transmitted. The SSB pattern includes bits respectively corresponding to a maximum quantity of transmittable SSBs. A specific value of the bit, for example, 1, indicates actual transmission of the SSB. Each bit in the SSB pattern may correspond to an index of an SSB. For example, when "ssb-PositionsInBurst" includes eight bits, it may indicate that the maximum quantity of SSBs is 8, and indexes of SSBs respectively corresponding to the eight bits are 0 to 7. For another example, when "ssb-PositionsInBurst" includes 64 bits, it may indicate that the maximum quantity of SSBs is 64, and indexes of SSBs respectively corresponding to the 64 bits are 0 to 63. The index of the SSB may alternatively be carried in the SSB. After receiving the SSB, the terminal may determine the index of the received SSB based on index-related information carried in the received SSB. For example, the index of the SSB is determined by using one or more of a sequence of a demodulation reference signal (demodulation reference signal, DMRS) included in the received SSB, a scrambling code of a physical broadcast channel (physical broadcast channel, PBCH) included in the SSB, information in a payload (payload) included in a PBCH, or the like. In other words, the index of the SSB may be carried by using one or more of the sequence of the DMRS included in the SSB, the scrambling code of the PBCH included in the SSB, the information in the payload included in the PBCH, or the like. For example, some high-order bits of the index of the SSB are explicitly carried in the payload, and some low-order bits are implicitly carried by using the sequence of the DMRS or the scrambling code of the PBCH. A specific manner is not limited herein. The SSB pattern may be used to determine the maximum quantity of transmittable SSBs, and an index and distribution of each SSB in the SSB pattern. A total quantity of actually transmitted SSBs configured by using the parameter "ssb-PositionsInBurst" does not exceed the maximum quantity of SSBs determined based on the SSB pattern. Further, if the SSBs are grouped, a quantity of SSBs in each SSB group may be further determined based on the SSB pattern. For example, ssb-PositionInBurst may include 64 bits, to indicate an SSB that is actually transmitted in 64 SSBs. Indexes of the 64 SSBs are 0 to 63. The 64 SSBs include eight groups of SSBs, and each group of SSBs includes eight SSBs. For example, a bit whose value is 0 indicates that an SSB corresponding to the bit is not sent, and a bit whose value is 1 indicates that an SSB corresponding to the bit is actually transmitted. It may be understood that in embodiments of this application, an example in which one group of SSBs includes eight SSBs is used for description. However, a quantity of SSBs included in one group of SSBs may be another value. This is not limited in this application.

According to the foregoing rules, the terminal may determine to perform PDCCH blind detection on a PMO in one PO of one PF in one paging periodicity. It can be learned that the PF and the PO are determined based on the identifier of the terminal, and are terminal-level. The PMO is determined based on a related parameter of the paging search space, and is cell-level. The terminal may perform, based on the PO corresponding to the terminal, PDCCH blind detection on the PMO in a range of the PO.

In consideration of compatibility with a 5G SSB design, the maximum quantity of SSBs configured by using the parameter "ssb-PositionsInBurst" in the SIB1 is 8 or 64, which is far less than a requirement for SSBs in satellite communication. To meet the requirement of satellite communication and achieve compatibility with the 5G SSB design, a possible solution is grouping the SSBs, where SSBs in each SSB group may be centrally distributed in first several slots of a same radio frame. To ensure that the terminal in satellite communication can complete an uplink synchronization procedure as soon as possible to access the network after receiving the SSB, a position close to the SSB may be used to send the SIB1 and an SIBX corresponding to the SSB group. The SIB1 is basic system information of a satellite cell. The SIBX includes ephemeris information of a satellite, and may be used to determine a position of the satellite in space. In a system frame between two SSB groups, a paging message, a RAR message, and the like corresponding to each SSB may be sent.

The SIB1, the SIBX, and the paging message corresponding to the SSB may be understood as follows: The SSB may carry a MIB of the satellite cell, and the MIB may indicate one or more of the following: whether the current cell can be accessed, whether the terminal is supported in performing intra-frequency cell reselection, information required by the terminal to receive further system information (for example, the SIB1 and the SIBX), and the like. The terminal may determine resource positions for the SIB1 and the SIBX based on the MIB in the received SSB, and receive the SIB1 and the SIBX on corresponding resources. The SIB1 includes information required for initial access, for example, includes related parameters "pagingSearchSpace", "firstPDCCH-MonitoringOccasionOfPO", and "nrofPDCCH-MonitoringOccasionPerSSB-InPO-r16" of the paging search space (paging search space). Therefore, a position of the paging search space may be determined based on the information in the SIB1. In other words, the SSB corresponds to the paging search space. The terminal may perform PDCCH blind detection in the paging search space, and then receive the paging message on a PDSCH based on a resource position of the physical downlink shared channel (physical downlink share channel, PDSCH) that is indicated in the received PDCCH. Because the position of the PDSCH carrying the paging message is determined based on the PDCCH obtained through blind detection, and the PDCCH is transmitted in the paging search space, it can be obtained that the SSB corresponds to the paging message. In short, that the SSB corresponds to the SIB1, the SIBX, and the paging message may be understood as that the SIB1, the SIBX, and the paging message corresponding to the SSB may be received based on the information in the SSB.

It should be understood that the paging search space is essentially also a search space. Because the resource position of the PDSCH used to carry the paging message is indicated in the PDCCH sent in the search space, the search space may be named as the paging search space. This application does not exclude a possibility of defining the search space as another name.

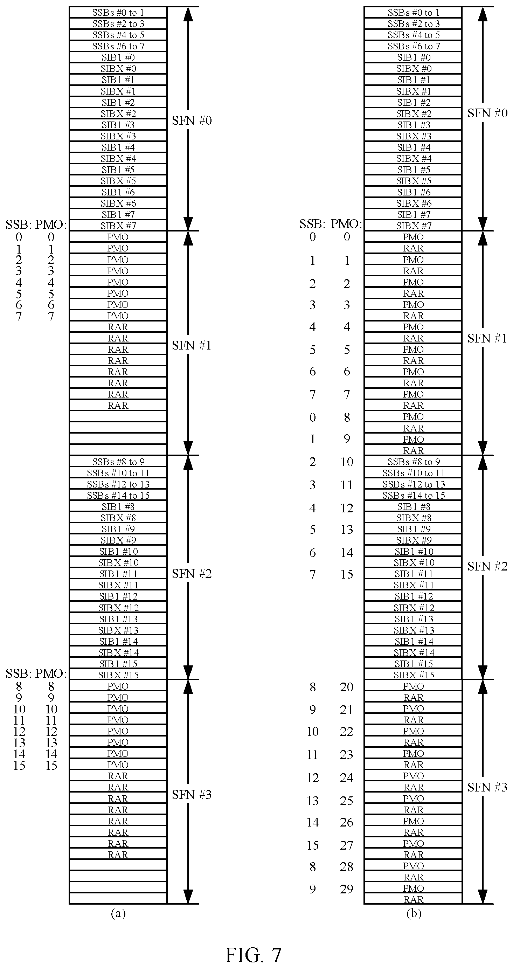

To better understand a correspondence between the SSB and the SIB1, the SIBX, and the paging search space, the following describes, with reference to FIG. 7, the SSB, and the SIB1, the SIBX, and the paging search space corresponding to the SSB.

(a) and (b) in FIG. 7 are diagrams of two designs of the paging search space.

For ease of understanding, a common feature of the patterns (patterns) shown in (a) and (b) in FIG. 7 is first described as follows: Four system frames, an SFN #0 to an SFN #3, are respectively shown in (a) and (b) in FIG. 7. Each system frame includes 20 slots (it is assumed that a subcarrier spacing (subcarrier spacing, SCS) is 30 kilohertz (kilohertz, kHz), and a length of each slot is 0.5 milliseconds (ms)). The plurality of SSB groups are distributed in an evennumbered system frame, for example, the SFN #0 and an SFN #2 shown in (a) and (b) in FIG. 7. An SSB group includes eight SSBs centrally distributed in first four slots of a system frame, and each slot is used to transmit two SSBs. For example, as shown in (a) and (b) in FIG. 7, an SSB #0 to an SSB #7 are distributed in first four slots of the SFN #0, and an SSB #8 to an SSB #15 are distributed in first four slots of the SFN #2. To ensure that the terminal can quickly complete initial access, a slot close to each SSB group is used to send a SIB1 (a SIB1 #0 to a SIB1 #7 and a SIB 1 #8 to a SIB1 #15 respectively shown in (a) and (b) in FIG. 7) and a SIBX (a SIBX #0 to a SIBX #7 and a SIBX #8 to a SIBX #15 respectively shown in (a) and (b) of FIG. 7) corresponding to the SSB group at intervals. It can be learned that in (a) and (b) in FIG. 7, the SSB #0 may correspond to the SIB1 #0 and the SIBX #0, an SSB #1 may correspond to a SIB1 #1 and a SIBX #1, and so on. Details are not listed herein one by one.

A correspondence between an SSB and a paging search space may be represented by using a correspondence between an SSB and a PMO. For example, the PMO whose index is $(x \cdot S + k)$ corresponds to the SSB whose index is $k$. Therefore, based on an index of each SSB, an index of a PMO corresponding to the SSB may be determined based on the foregoing correspondence, to determine the correspondence between an SSB and a PMO.

For example, if X=2, a value of $x$ may be 0 or 1. It can be obtained that in (a) and (b) in FIG. 7, PMOs corresponding to the SSB #0 to the SSB #7 are as follows: the SSB #0 corresponds to a PMO #0 and a PMO #8; the SSB #1 corresponds to a PMO #1 and a PMO #9; an SSB #2 corresponds to a PMO #2 and a PMO #10; an SSB #3 corresponds to the PMO #3 and a PMO #11; an SSB#4 corresponds to a PMO #4 and a PMO #12; an SSB #5 corresponds to a PMO #5 and a PMO #13; an SSB #6 corresponds to a PMO #6 and a PMO #14; and the SSB #7 corresponds to a PMO #7 and a PMO #15.

On the other side, a position of a PMO corresponding to each index may be determined based on a configuration. A parameter used to configure the position of the PMO includes a monitoring periodicity of the PDCCH, an offset (offset), and duration (duration) of the PDCCH. The duration of the PDCCH may be represented by a quantity of slots included in duration of the PDCCH in time domain. The monitoring periodicity of the PDCCH is a PDCCH blind detection periodicity of the terminal. The offset is used to determine a PMO in the monitoring periodicity of the PDCCH, and may be represented by a quantity of slots of offsetting of a position of a 1st PMO in the monitoring periodicity of the PDCCH relative to a start position of the monitoring periodicity of the PDCCH. The duration of the PDCCH is the duration of the PDCCH in time domain, and may be represented by a quantity of consecutive slots occupied by the PDCCH. The start position of the monitoring periodicity of the PDCCH may be predefined, for example, predefined as a start position of the SFN #0. The monitoring periodicity of the PDCCH may be consecutive in time domain. Therefore, a position of each PMO in each monitoring periodicity of the PDCCH may be determined based on the monitoring periodicity of the PDCCH, the offset, and the duration of the PDCCH.

A possible form of the parameter used to configure the position of the PMO in a protocol is an information element (information element, IE) "search space (SearchSpace)" carried in the SIB1. The "SearchSpace" may be used to determine the position of the PMO. Specifically, the monitoring periodicity of the PDCCH and the offset may be configured by using a parameter "monitoring slot periodicity and offset (monitoringslotperiodicityAndOffset)", and the duration of the PDCCH may be configured by using a parameter "duration".

In FIG. 7, an odd-numbered system frame between two adjacent SSB groups may be used to send a paging message, a RAR message, another system message, or the like corresponding to each SSB. For example, the SFN #1 and the SFN #3 in the figure may be used to send the paging message, the RAR message, the another system message, and the like. Therefore, the paging search space may be configured in an odd-numbered system frame between two SSBs.

The following describes, with reference to (a) and (b) in FIG. 7, patterns obtained based on the two different designs.

An example of a design (a design 1 for short) of the paging search space is shown in (a) in FIG. 7. The paging search space shown in the figure may be configured as follows: The monitoring periodicity of the PDCCH is 40 slots, the offset is 20 slots, and the duration of the PDCCH is eight slots. If the reference position is a 1st slot of the SFN #0, it may be determined, based on the offset of 20 slots, that a position of a 1st PMO in the paging search space is a 1st slot of the SFN #1. Because the monitoring periodicity of the PDCCH is 40 slots, the paging search space includes 40 slots, and it may be determined, with reference to the offset, that the paging search space is in a range of the SFN #0 and the SFN #1. Because the duration of the PDCCH is eight slots, a PMO in the paging search space occupies eight consecutive slots. In conclusion, it may be determined that the paging search space includes eight PMOs (denoted as the PMO #0 to the PMO #7 respectively) occupying eight consecutive slots starting from the 1st slot of the SFN #1, that is, the eight PMOs are consecutively distributed in time domain.

Based on the foregoing parameter configuration of the paging search space and the foregoing indexes of the corresponding PMOs determined based on the indexes of the SSBs, it can be learned that the PMOs corresponding to the SSB #0 to the SSB #7 in the SFN #0 are the PMO #0 to the PMO #7 distributed in first eight slots of the SFN #1.

Based on the monitoring periodicity of 40 slots, it can be obtained that a PMO in a next paging search space is mapped from a 1st slot of the SFN #3. The PMOs corresponding to the SSB #8 to the SSB #15 in the SFN #2 are the PMO #8 to the PMO #15 distributed in first eight slots of the SFN #3.

The foregoing parameters are configured, so that it can be avoided that the PMO #8 to the PMO #15 are mapped to a slot of the SFN #1 after the PMO #7 and a slot of the SFN #2, to avoid position overlapping between the PMO and other signaling. The slot of the SFN #1 after the PMO #7 and a slot of the SFN #3 after the PMO #15 may be used to transmit the other signaling, for example, the RAR message and the another system message. For example, as shown in (a) in FIG. 7, eight consecutive slots after the PMO #7 and eight consecutive slots after the PMO #15 may be used to transmit the RAR message.

In this way, a pattern in which the PMO and the other signaling respectively occupy a first half-frame and a second half-frame of a system frame is formed. Certainly, a quantity of slots occupied by the PMO and a quantity of slots occupied by the RAR message are not limited in this application. For example, the quantity of slots occupied by the PMO may be limited by the duration of the PDCCH.

(a) in FIG. 7 shows only one possible pattern. In another possible design, relative positions of the PMO and the other signaling in the system frame may be interchanged. For example, the other signaling is located in the first half-frame of the system frame, and the PMO is located in the second half-frame of the system frame.

However, because the RAR message has a receive window length, if the receive window length of the RAR message ends in a slot in the first eight slots of the SFN #1, and the RAR message is sent in the first half-frame or the second half-frame of the system frame, some terminals may fail to receive the RAR message, affecting access performance of the terminals, increasing access delays, and deteriorating system performance.

An example of another design (a design 2 for short) of the paging search space is shown in (b) in FIG. 7. The paging search space shown in the figure may be configured as follows: The monitoring periodicity of the PDCCH is two slots, the offset is 20 slots, and the duration of the PDCCH is one slot. If the reference position is a 1st slot of the SFN #0, the offset may use a start position of the SFN #0 as the reference position, and it may be determined, based on the offset of 20 slots, that a start position of a PF to which the paging search space belongs is a 1st slot of the SFN #1. Because the monitoring periodicity of the PDCCH is two slots, the paging search space includes two slots, and it may be determined, with reference to the offset, that the paging search space is located in first two slots of the SFN #1. Because the duration of the PDCCH is one slot, a PMO in the paging search space occupies one slot. In conclusion, it may be determined that the PMO in the paging search space occupies the 1st slot of the SFN #1. In other words, a PMO corresponding to the SSB #0 is the PMO #0 distributed in the 1st slot of the SFN #1.

Based on the monitoring periodicity of two slots, it can be obtained that a next paging search space is located in a 3rd slot and a 4th slot of the SFN #1. With reference to the offset and the duration of the PDCCH, it may be determined that a PMO in the next paging search space occupies the 3rd slot of the SFN #1. In other words, a PMO corresponding to the SSB #1 is the PMO #1 distributed in the 3rd slot of the SFN #1.

By analogy, it can be obtained that PMOs corresponding to the SSB #0 to the SSB #7 are the PMO #0 to the PMO #9 distributed in the SFN #1 and the PMO #10 to the PMO #15 distributed in the SFN #2, and PMOs corresponding to the SSB #8 to the SSB #15 are a PMO #20 to a PMO #29 distributed in the SFN #3 and a PMO #30 to a PMO #35 distributed in an SFN #4 (not shown in the figure).

It can be learned that the monitoring periodicity of the PDCCH and the duration of the PDCCH are configured, so that the PMOs may be non-consecutive in time domain. As shown in (b) in FIG. 7, there is one slot between every two adjacent PMOs, and the slot between the two adjacent PMOs may be used to transmit a RAR message, another system message, and the like. In this way, a pattern in which the PMO and the other signaling are distributed alternately in time domain is formed. Therefore, a resource used to transmit the RAR message can be discretely distributed in the entire system frame. This is more conducive to successful receiving of the RAR message by the terminal, so that the terminal can access the network more quickly, and the system performance is improved.

However, it can also be learned that positions of some PMOs overlap positions of other signaling. For example, a slot occupied by the PMO #10 and a slot occupied by the SSBs #8 to #9 are a same slot, a slot occupied by the PMO #11 and a slot occupied by the SSBs #12 to #13 are a same slot, and slots occupied by the PMO #12, the PMO #13, the PMO #14, and the PMO #15 are respectively the same as slots occupied by the SIB #8, the SIB #9, the SIB #10, and the SIB #11.

It should be understood that the positions of the PMOs listed above are positions determined by the terminal for PDCCH blind detection. If an access network device transmits the other signaling in the slots that are listed above and whose positions overlap, the PDCCH cannot be obtained through blind detection in these slots, and blind detection performed by the terminal in these slots is invalid blind detection, causing unnecessary power consumption.

Based on the foregoing two designs of the paging search space with reference to (a) and (b) in FIG. 7, it can be learned that the current designs cannot consider both the access performance of the terminal and power consumption caused by invalid blind detection. In view of this, a communication method provided in this application is improved for the design 1 and the design 2, to avoid invalid blind detection of the terminal while ensuring the access performance of the terminal, reducing the power consumption.

For the design 1, monitoring duration of the PDCCH and a parameter indicating distribution of a PMO in each search space group are introduced in this application. Different from the duration of the PDCCH, the monitoring duration of the PDCCH may be non-consecutive in time domain. On the one side, the monitoring periodicity of the PDCCH is limited to be greater than the monitoring duration of the PDCCH, so that a system frame in which a search space group is located does not fall in a system frame in which an SSB is located, avoiding overlapping between positions of the PMO and signaling such as the SSB, avoiding invalid blind detection of the terminal, and reducing the power consumption. On the other side, the distribution of the PMO in each search space group is indicated, so that slots occupied by PMOs in a same search space group can be consecutively distributed in time domain, and another slot that is not occupied by the PMOs may be used to transmit the other signaling. This helps the terminal successfully receive the RAR message, and helps ensure the access performance of the terminal.

For the design 2, a plurality of parameters are introduced in this application to determine the position of the PMO in each search space group. The PMO determined by using the plurality of parameters can avoid a position of signaling such as the SSB, so that invalid blind detection of the terminal can be avoided, reducing the power consumption. On the other side, the monitoring periodicity of the PDCCH is limited to be greater than the duration of the PDCCH, so that slots occupied by PMOs in a search space group can be non-consecutively distributed in time domain, and another slot that is not occupied by the PMOs may be used to transmit the other signaling. This helps the terminal successfully receive the RAR message, and helps ensure the access performance of the terminal.

The following describes, in detail with reference to the accompanying drawings, the method provided in this application.

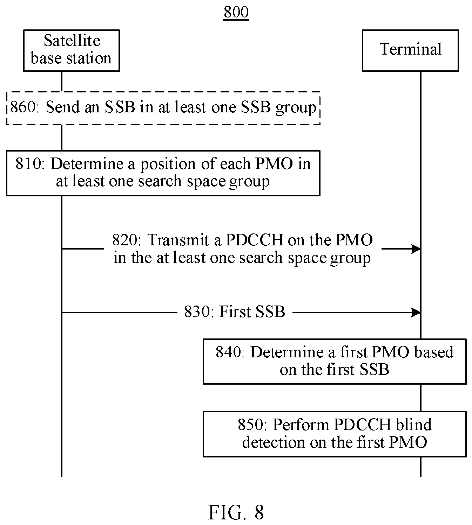

FIG. 8 is a schematic flowchart of a communication method according to an embodiment of this application. In the flowchart shown in FIG. 8, interaction between a terminal and a satellite base station (that is, an example of a radio access network device) is used as an example to describe the method. However, this should not constitute any limitation on this application.

The communication method 800 shown in FIG. 8 may include the following steps.

Step 810: The satellite base station determines a position of each PMO in at least one search space group.

Step 820: The satellite base station transmits a PDCCH on the PMO in the at least one search space group.

Step 830: The terminal receives a first SSB.

Step 840: The terminal determines a first PMO based on the first SSB.

Step 850: The terminal performs PDCCH blind detection on the first PMO.

The at least one search space group in step 810 and step 820 is included in a plurality of search space groups. The plurality of search space groups are search space groups in one-to-one correspondence with a plurality of SSB groups. The plurality of SSB groups may be a plurality of SSB groups in a predefined pattern. The predefined pattern is, for example, a pattern defined for satellite communication. Because the plurality of search space groups may be in one-to-one correspondence with the plurality of SSB groups, a quantity of SSB groups is the same as a quantity of search space groups. Each of the plurality of SSB groups includes one or more SSBs, and each of the plurality of search space groups includes one or more PMOs. A correspondence between a search space group and an SSB group may specifically mean that an index of the PMO in each search space group may be obtained by mapping an index of an SSB in a corresponding SSB group. In other words, a PMO in each search space group may be determined by an SSB in a corresponding SSB group, and one SSB may determine one or more PMOs.

In step 810, the at least one search space group may correspond to at least one SSB group, and the at least one SSB group may be an SSB group to which an SSB sent by the satellite base station belongs. Optionally, the method further includes: Step 860: The satellite base station sends an SSB in the at least one SSB group.

In step 820, the satellite base station may transmit the PDCCH on one or more PMOs in the at least one search space group. Therefore, the position of the PMO determined by the satellite base station in step 810 is a position of a PMO that can be used to transmit the PDCCH. Because PMOs on which the satellite base station transmits the PDCCH are determined by an internal implementation of the device, this is not limited in this application.

In step 830, the terminal may receive the SSB from the satellite base station, and may receive one or more SSBs from the satellite base station. In this embodiment, it is assumed that the SSB received by the terminal from the satellite base station is denoted as the first SSB. The first SSB belongs to an SSB group, for example, denoted as a first SSB group. The first SSB group is one of the plurality of SSB groups.

In step 840, the terminal may determine a corresponding PMO based on the first SSB. Because each SSB may correspond to one or more PMOs, the first SSB may correspond to one or more PMOs. In this embodiment, the PMO corresponding to the first SSB is denoted as the first PMO. The first PMO belongs to a search space group, for example, denoted as a first search space group. The first PMO corresponds to the first SSB, and the first search space group to which the first PMO belongs corresponds to the first SSB group to which the first SSB belongs.

In a possible implementation, the terminal may determine the position of each PMO in the at least one search space group, determine a correspondence between the first SSB and the first PMO based on the received first SSB, and determine a position of the first PMO corresponding to the received first SSB. The at least one search space group may include a search space group corresponding to at least one SSB group in the plurality of SSB groups, and the at least one SSB group is the SSB group to which the SSB received by the terminal belongs. Alternatively, the at least one search space group may include the plurality of search space groups corresponding to the plurality of SSB groups. The correspondence between the first SSB and the first PMO includes a quantity and an index of the first PMO corresponding to the first SSB.

In step 850, when finding (or receiving) an SSB (for example, the first SSB), the terminal may perform PDCCH blind detection on a corresponding PMO (for example, the first PMO). In other words, the terminal may perform PDCCH blind detection on the one or more determined PMOs in the at least one search space group. Therefore, the PMO determined by the terminal is a position of a PMO that can be used for blind detection.

It should be understood that the terminal may perform blind detection on the PMO corresponding to the found SSB, or may perform blind detection on all determined PMOs. This is not limited in this application. Because the PMOs on which the terminal performs PDCCH blind detection are determined by the internal implementation of the device, this is not limited in this application.

It should be understood that the steps shown in the figure are merely an example, and should not constitute any limitation on an execution sequence of the steps. For example, a sequence in which the satellite base station performs step 810 and the terminal performs step 830 and step 840 is not limited in this application. Step 810 may be performed at the same time or at different time with step 830 and step 840. For example, step 810 may be performed before step 830 and step 840, or step 830 and step 840 may be performed before step 810. This is not limited in this application.

To reduce power consumption, the terminal does not need to perform blind detection on PMOs corresponding to all SSBs, and different terminals may perform PDCCH blind detection on PMOs in different time domain ranges. A range to which a PMO used by the terminal to perform blind detection belongs in time domain may be referred to as a time domain range in which the terminal performs blind detection.

For example, the time domain range in which the terminal performs blind detection may be predefined. For example, the time domain range is predefined in a protocol. For example, the protocol predefines that a system frame in which a start position of the time domain range is located is an SFN #1, and predefines duration of the time domain range.

In a possible design, the PMO used by the terminal to perform blind detection may be a PMO that falls in a paging frame set. In other words, the paging frame set is an example of the time domain range in which the terminal performs blind detection.

The paging frame set corresponds to the terminal, or is terminal-level, for example, may be determined based on an identifier of the terminal. Different terminals may determine respective paging frame sets, and perform PDCCH blind detection on PMOs in the paging frame sets. The satellite base station may determine, for different terminals, paging frame sets corresponding to the terminals, and then send the PDCCH on PMOs in the paging frame sets corresponding to the terminals.

For example, a system frame (denoted as a paging start frame for ease of differentiation and description) in which the start position of the paging frame set is located may satisfy (SFN+O) mod T=(T div N')x(UE_ID mod N'), where SFN is a system frame number of the paging start frame, O is a quantity of system frames included in an offset between the paging start frame and a reference position, N' is a quantity of paging frame sets included in one paging periodicity, N' is a positive integer, UE_ID is the identifier of the terminal, for example, may be obtained by using 5G-S-TMSI mod 1024, and T is duration of the paging periodicity.

It can be learned that a manner of determining the SFN of the paging start frame is similar to a manner specified in a current 5G protocol for determining an SFN corresponding to a PF. A difference lies in that an offset PF_offset of the PF relative to the reference position is replaced with an offset O of the paging start frame relative to the reference position, PF_offset is replaced with the offset O of the paging start frame relative to the reference position, and a quantity N of PFs included in one paging periodicity is replaced with the quantity N' of paging frame sets included in one paging periodicity. For the other parameters, refer to the foregoing related descriptions. Details are not described herein again.

Certainly, the paging start frame may alternatively be determined in another manner. The foregoing example formula is merely a possible design. This application includes but is not limited to this.

An end position of the paging frame set may be determined based on the foregoing start position and the following parameters: duration of one paging frame set in time domain, a quantity of system frames included in one paging frame set, or a quantity of search space groups included in one paging frame set. In some embodiments, the paging frame set may also be defined as a time domain range including an SSB group. In this case, the foregoing parameters may further include a quantity of SSBs included in one paging frame set. The end position of the paging frame set may be determined based on the start position of the paging frame set and any one of the plurality of parameters. The parameters may be predefined, for example, predefined in a protocol, or may be configured by a network device, for example, configured by the satellite base station by using signaling.

It may be understood that the duration of one paging frame set in time domain, the quantity of system frames included in one paging frame set, the quantity of search space groups included in one paging frame set, and the quantity of SSB groups included in one paging frame set may be considered as several different forms indicating duration of one paging frame set, and are several possible examples of a sixth parameter.

One search space group may occupy one or more system frames in time domain, and a quantity of system frames occupied by one search space group in time domain may be predefined, or may be pre-configured by the network device. Therefore, when the quantity of search space groups included in one paging frame set is determined, the end position of the paging frame set may alternatively be determined with reference to the start position.

Further, the paging frame set may include one or more POs. The terminal may determine the corresponding PO based on the identifier of the terminal. The PO may be another example of the time domain range in which the terminal performs blind detection. In other words, the at least one search space group may be a search space group in a same PO, and the PMO used by the terminal to perform blind detection may be a PMO in a same PO.

For example, an index i_s corresponding to the PO may satisfy $i\_s = \left\lfloor (UE\_ID / N') \bmod Ns' \right\rfloor$, where Ns' is a quantity of POs included in one paging frame set, Ns' is a positive integer, N' is a quantity of paging frame sets included in one paging periodicity, and N' is a positive integer. It can be learned that a manner of determining the PO is similar to a PO determining manner specified in the current 5G protocol. Certainly, a correspondence between the identifier of the terminal and the index of the PO is not limited thereto. This is not limited in this application.

For example, the terminal may perform blind detection in a range of the PO whose index is i_s in the paging frame set. In other words, the PMO used by the terminal to perform blind detection is a PMO that falls in the range of the PO whose index is i_s in the paging frame set.

It should be understood that a manner of determining the paging frame set in which the terminal performs blind detection, a correspondence between a PO and an index, and a manner of determining the index are not limited to the examples listed above. This is not limited in this application.

In addition, duration of each PO in the paging frame set may also be determined based on the following parameters: duration of one PO in time domain, a quantity of system frames included in one PO, a quantity of search space groups included in one PO, or a quantity of SSB groups included in one PO.

A relationship between a PO and a paging frame set is similar to a relationship between a PO and a PF defined in the current protocol, and details are not described herein again. A difference lies in that the PO and the paging frame set are not limited to one system frame, but may be extended to a plurality of system frames.

With reference to the paging frame set and the PO, the foregoing provides examples of a method for determining the time domain range in which the terminal performs blind detection. However, these examples are provided only for ease of understanding, and should not constitute any limitation on this application. It may be understood that if the time domain range in which the terminal performs blind detection is predefined, the satellite base station may directly determine, in the predefined time domain range, the position of each PMO in the at least one search space group, and the terminal may also determine, in the predefined time domain range, the PMO used by the terminal to perform blind detection.

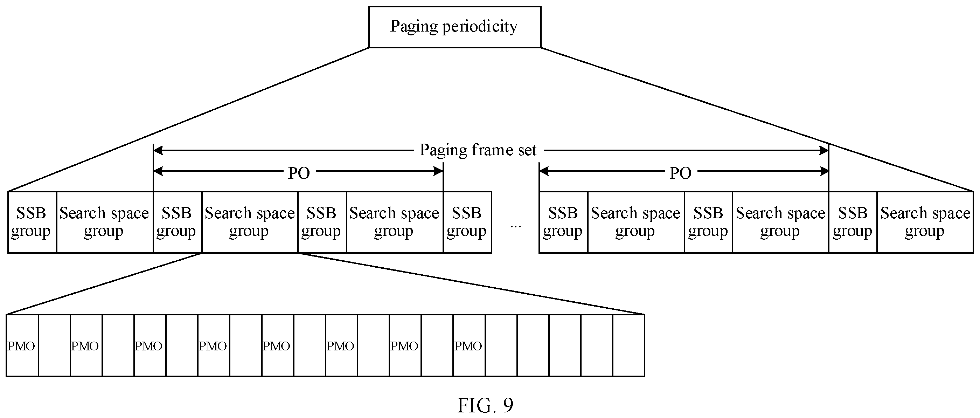

To better understand the method provided in this application, FIG. 9 shows a paging frame set in one paging periodicity and PMOs in one paging frame set that are obtained according to the foregoing method. Different from FIG. 6, the terminal is not limited to performing PDCCH blind detection on a PO in a PF, but performs blind detection on a PMO in a paging frame set. The paging frame set includes a plurality of search space groups, and PMOs in each search space group are non-consecutive in time domain. Further, the paging frame set may further include one or more POs, and the plurality of search space groups may be search space groups in one PO.

The satellite base station may transmit the PDCCH on a PMO in one PO, and the terminal may perform PDCCH blind detection on a PMO in one PO. Because a system frame in which a PMO in each search space is located is between system frames in which two adjacent SSB groups are located, a position of the PMO does not overlap a position of other signaling such as an SSB. Therefore, blind detection of the terminal on some invalid PMOs can be avoided, reducing the power consumption. Because PMOs in a search space group are non-consecutive in time domain, a slot that is not occupied by the PMOs may be used to transmit other signaling such as a RAR message. Therefore, this helps the terminal successfully receive the RAR message, ensuring access performance.

It should be understood that FIG. 9 is merely an example. As described above, the time domain range in which the terminal performs blind detection is not limited to the paging frame set or the PO, and may alternatively be another range, for example, a predefined time domain range or a time domain range defined in another manner. This application includes but is not limited to this.

In a possible implementation, as shown in FIG. 9, a paging periodicity may include one or more paging frame sets, and each paging frame set corresponds to a group of terminals. For example, a system frame (denoted as a paging start frame for ease of differentiation and description) in which a start position of each paging frame set is located may satisfy $(SFN+O) \bmod T = (T \operatorname{div} N') \times (UE\_ID \bmod N')$, where SFN is a system frame number of the paging start frame, O is a quantity of system frames included in an offset between the paging start frame and a reference position, N' is a quantity of paging frame sets included in one paging periodicity, N' is a positive integer, UE_ID is the identifier of the terminal, for example, may be obtained by using 5G-S-TMSI mod 1024, and T is duration of the paging periodicity. The reference position may be predefined in a protocol or configured, for example, is a system frame whose frame number is 0.

It can be learned from $(T \operatorname{div} N') \times (UE\_ID \bmod N')$ that system frames included in the paging periodicity are divided into N' paging frame sets. For example, if the paging periodicity T is 160 ms, and each system frame occupies 10 ms, the paging periodicity occupies 16 system frames. If N' is 2, the paging periodicity is divided into two paging frame sets, and each paging frame set occupies 80 ms, that is, eight system frames. If O is 0, frame numbers in the two paging frame sets are respectively 0 to 7, and 8 to 15. In other words, a frame number of a paging start frame in each paging frame set satisfies $(16 \operatorname{div} 2) \times (UE\_ID \bmod 2)$, that is, the frame numbers of the paging start frames in the two paging frame sets are respectively 0 and 8.

A plurality of paged terminals are divided into N' groups based on UE_IDs. Correspondingly, control information of a paging message for each of the plurality of terminals, that is, a PDCCH, is transmitted in a paging frame in which a paging frame set corresponding to a UE_ID of the terminal is located. For example, if N' is 2, and frame numbers of paging start frames in two paging frame sets are respectively 0 and 8, control information of a paging message for a terminal whose UE_ID mod 2 is 0 is transmitted in the paging frame set in which the frame number of the paging start frame is 0, and control information of a paging message for a terminal whose UE_ID mod 2 is 1 is transmitted in the paging frame set in which the frame number of the paging start frame is 8.

Each paging frame set may be further divided into one or more POs based on the UE_ID of the terminal. For example, the index i_s corresponding to the PO may satisfy $i\_s = \left\lfloor (UE\_ID / N') \bmod Ns' \right\rfloor$, where Ns' is a quantity of POs included in one paging frame set, Ns' is a positive integer, N' is a quantity of paging frame sets included in one paging periodicity, and N' is a positive integer.

For example, if N' is 2, and Ns' is 4, the UE_IDs are first divided into two groups based on the quantity of paging frame sets, and then a remainder is obtained by dividing 4, that is, the UE_IDs corresponding to each paging frame set are further divided into four groups. In other words, control information of a paging message for a terminal whose UE_ID mod 4 is 0 is transmitted in a PO whose i_s is 0, control information of a paging message for a terminal whose UE_ID mod 4 is 1 is transmitted in a PO whose i_s is 1, control information of a paging message for a terminal whose UE_ID mod 4 is 2 is transmitted in a PO whose i_s is 2, and control information of a paging message for a terminal whose UE_ID mod 4 is 3 is transmitted in a PO whose i_s is 3.

It may be understood that when Ns' is 1, that is, when one paging frame set includes only one PO, control information of a paging message for a corresponding terminal is transmitted in a system frame included in the paging frame set. In other words, the system frame included in the paging frame set overlaps with a system frame included in the PO.

Optionally, because a spatial position of each terminal is uncertain, one PO should include PMOs corresponding to all SSBs sent by the satellite base station. In other words, an SSB corresponding to a start PMO in a PO is an SSB whose index is 0, and an SSB corresponding to a last PMO is an SSB whose index is (a maximum quantity of transmittable SSBs minus 1). In other words, the PO includes PMOs corresponding to all SSBs in the maximum quantity of transmittable SSB. Similarly, the PO includes search space groups corresponding to all SSB groups in the maximum quantity of transmittable SSB.

In this way, after determining, based on the UE_ID of the terminal, a to-be-searched paging frame set for the terminal and a to-be-searched PO in the paging frame set, the terminal may determine, based on the SSB received by the terminal and a correspondence between an SSB and a PMO, a to-be-searched PMO for the terminal.

It may be understood that the specific values of the parameters in the foregoing examples are merely for ease of understanding of the foregoing formulas. The specific values of the parameters in the foregoing formulas may be other values, and are not limited to the specific values in the foregoing examples.

The following describes in detail the position of each PMO in the at least one search space group, that is, a position of each PMO in at least one search space group in a PO. It should be understood that the at least one search space group is a search space group that falls in the foregoing time domain range, for example, at least one search space group that falls in a paging frame set (a case in which the paging frame set includes one PO), or at least one search space group that falls in a PO.

In this embodiment of this application, a position of the PMO in each search space group may be determined in the following two manners, that is, satisfies definitions in the following two manners.

Manner 1: The position of the PMO in each search space group is determined based on each SSB in an SSB group corresponding to the search space group, a monitoring periodicity of the PDCCH, duration of the PDCCH, and a plurality of parameters. In other words, each SSB in the SSB group corresponding to the search space group, the monitoring periodicity of the PDCCH, the duration of the PDCCH, and the plurality of parameters satisfy a first relationship. The monitoring periodicity of the PDCCH is greater than the duration of the PDCCH. Values of the plurality of parameters are related to a quantity of PMOs included in each search space group and a quantity of system frames included in an offset between two adjacent search space groups. For details of the first relationship, refer to subsequent detailed descriptions.

For ease of differentiation and description, in this embodiment, the quantity of PMOs included in each search space group is denoted as M, where M is a positive integer; and the quantity of system frames included in the offset between two adjacent search space groups is denoted as L, where L is an integer greater than or equal to 2. Therefore, the values of the plurality of parameters are related to M and L.

Manner 2: The position of the PMO in each search space group is determined based on each SSB in an SSB group corresponding to the search space group, a monitoring periodicity of the PDCCH, monitoring duration of the PDCCH, a first parameter, and a fifth parameter. In other words, each SSB in the SSB group corresponding to the search space group, the monitoring periodicity of the PDCCH, the monitoring duration of the PDCCH, the first parameter, and the fifth parameter satisfy a second relationship. The monitoring periodicity of the PDCCH is greater than the monitoring duration of the PDCCH. A value of the first parameter is related to a quantity (that is, M) of PMOs included in each search space group. The fifth parameter indicates time domain distribution of the one or more PMOs in each search space group. For details of the second relationship, refer to subsequent detailed descriptions.

The following describes Manner 1 and Manner 2 in detail with reference to the accompanying drawings.

Manner 1

It should be understood that Manner 1 may be considered as an improvement made for the foregoing design 2. It can be learned from the foregoing descriptions of the design 2 with reference to (b) in FIG. 7 that positions of some of a plurality of PMOs directly determined by using SSBs in an SSB group overlap positions of other signaling such as the SSB. Therefore, the PMOs whose positions overlap the positions of the other signaling are excluded, the satellite base station does not transmit the PDCCH on the PMOs whose positions overlap the positions of the other signaling, and PDCCH blind detection does not need to be performed on the PMOs. For ease of differentiation and description, the PMO determined based on the monitoring periodicity of the PDCCH, the duration of the PDCCH, a PMO obtained through SSB mapping, and the like is denoted as a candidate PMO in the following. For example, the PMOs whose indexes are 0 to 15 and 20 to 29 in (b) in FIG. 7 may be considered as candidate PMOs. The candidate PMOs include invalid PMOs and valid PMOs. A PMO whose position overlaps a position of other signaling is denoted as an invalid PMO, and a PMO other than the invalid PMO in the candidate PMOs is denoted as a valid PMO. Because the valid PMO is determined from the candidate PMOs, the PMO used by the satellite base station to transmit the PDCCH is one of valid PMOs used by the terminal to perform blind detection, and therefore is also determined from the candidate PMOs.

In Manner 1, the terminal and/or the satellite base station determine/determines a position of the PMO, that is, determine/determines a position of a valid PMO. In a possible implementation, the terminal and/or the satellite base station may determine a position of each candidate PMO based on the monitoring periodicity of the PDCCH, the duration of the PDCCH, and the like. On the other side, the terminal and/or the satellite base station may determine an index of a candidate PMO corresponding to each SSB in the at least one search space group, and exclude, with reference to the plurality of parameters, the invalid PMO from the candidate PMOs, to obtain an index of a candidate PMO that may be used as a valid PMO (referred to as an index corresponding to the valid PMO below). The terminal and/or the satellite base station may determine a position of each valid PMO in the at least one search space group based on the determined index corresponding to the valid PMO and the position of each candidate PMO. As described above, the position of each PMO may be determined based on the monitoring periodicity of the PDCCH and the duration of the PDCCH. In this embodiment, the terminal and/or the satellite base station may determine the position of each candidate PMO based on the monitoring periodicity of the PDCCH and the duration of the PDCCH.

For example, a quantity of slots occupied by each monitoring periodicity in time domain may be determined based on the monitoring periodicity of the PDCCH, and a quantity of slots occupied by a PMO in each monitoring periodicity may be determined based on the duration of the PDCCH. If an offsetting status of the candidate PMO in the monitoring periodicity of the PDCCH is further learned, a position of a candidate PMO in each monitoring periodicity may be determined. The position of the candidate PMO in the at least one search space group corresponding to the plurality of SSB groups may be determined based on the position of the candidate PMO in each monitoring periodicity.

In a possible design, the offsetting status of the candidate PMO in the monitoring periodicity of the PDCCH is described by using a first offset. The first offset is an offset of a $1^{st}$ candidate PMO in the monitoring periodicity of the PDCCH relative to a start position of the monitoring periodicity of the PDCCH, and may be represented by a quantity of slots included in the offset.

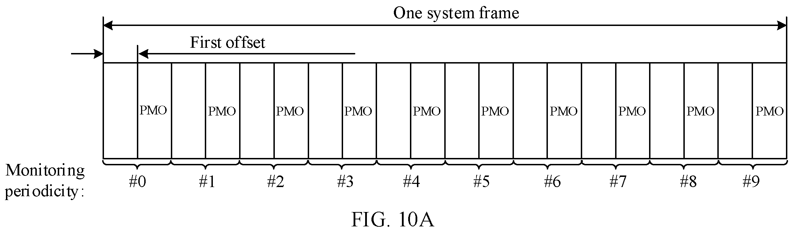

For ease of understanding, FIG. 10A shows an example of the first offset. A $1^{st}$ candidate PMO shown in FIG. 10A is offset by one slot relative to a start position of a monitoring periodicity of the PDCCH to which the $1^{st}$ candidate PMO belongs, that is, the first offset is one slot. A relationship between each candidate PMO and the monitoring periodicity of the PDCCH and the duration of the PDCCH in FIG. 10A is described in detail in the following, and is not described in detail herein.

It may be understood that a meaning of the first offset is the same as a meaning of an offset defined in the current 5G protocol for determining a position of a PMO. The position of each candidate PMO in the monitoring periodicity of the PDCCH may be determined with reference to the foregoing method.

Optionally, the first offset is a fixed value. For example, a value of the first offset may be predefined in a protocol, that is, the offset of the $1^{st}$ candidate PMO in the monitoring periodicity of the PDCCH relative to the start position of the monitoring periodicity of the PDCCH remains unchanged. In this case, it may also be considered that a relative position of the $1^{st}$ candidate PMO in the monitoring periodicity of the PDCCH in the monitoring periodicity of the PDCCH may be fixed. Therefore, starting from the position of the $1^{st}$ candidate PMO, the position of each candidate PMO in the monitoring periodicity of the PDCCH may be directly determined based on the monitoring periodicity of the PDCCH and the monitoring duration of the PDCCH.

Optionally, the first offset may be flexibly configured. For example, the first offset may be configured by the network device. In this case, the position of each candidate PMO in the monitoring periodicity of the PDCCH may be determined based on the start position of the monitoring periodicity of the PDCCH, the first offset, and the duration of the PDCCH.

In another possible design, the at least one search space group is a search space group in the paging frame set. An offsetting status of the candidate PMO in the paging frame set may be described by using a second offset. The second offset is an offset of a $1^{st}$ candidate PMO in the paging frame set relative to a start position of the paging frame set, and may be represented by a quantity of slots included in the offset.

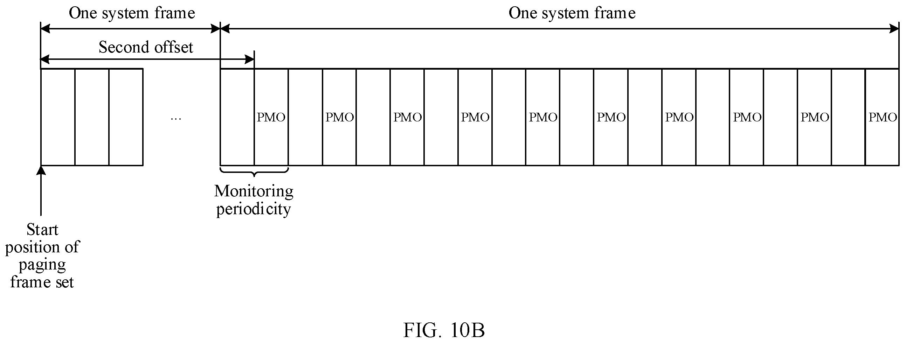

For ease of understanding, FIG. 10B shows an example of the second offset. A start position of a paging frame set shown in FIG. 10B is a start position of a system frame, and a candidate PMO is located in a next system frame. It is assumed that each system frame includes 20 slots. A $1^{st}$ candidate PMO shown in FIG. 10B is offset by 21 slots relative to the start position of the paging frame set, that is, the second offset is 21 slots.

Optionally, the second offset is a fixed value. For example, a value of the second offset may be predefined in a protocol, that is, an offset between the 1st candidate PMO in the paging frame set and the start position of the paging start frame remains unchanged. Therefore, in this case, it may also be considered that a position of the 1st candidate PMO in the paging frame set in the paging frame set is fixed. Therefore, starting from the position of the 1st candidate PMO, a position of each candidate PMO in the paging frame set may be directly determined based on the monitoring periodicity of the PDCCH and the duration of the PDCCH.

Optionally, the second offset may be flexibly configured. For example, the second offset may be configured by the network device. In this case, the position of each candidate PMO in the paging frame set may be determined based on the monitoring periodicity of the PDCCH, the second offset, and the duration of the PDCCH.

In still another possible design, the at least one search space group is a search space group in a paging frame set. An offsetting status of the candidate PMO in the paging frame set may be described by using a third offset. The third offset is an offset of a 1st candidate PMO in the paging frame set relative to the reference position, and may be represented by a quantity of slots included in the offset.

The reference position may be predefined in a protocol or pre-configured. In an example, the reference position may be, for example, a start position of an SFN #0.

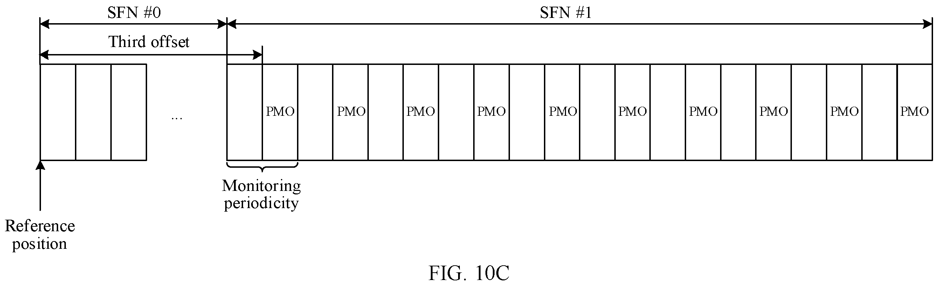

For ease of understanding, FIG. 10C shows an example of the third offset. A reference position shown in FIG. 10C is the start position of the SFN #0, and a candidate PMO is located in an SFN #1. It is assumed that each system frame includes 20 slots, and a 1st candidate PMO shown in FIG. 10C is offset by 21 slots relative to the reference position, that is, the third offset is 21 slots.

It may be understood that when the offset (for example, any one of the first offset, the second offset, or the third offset) is zero, the offset may not be indicated. For example, the offset is predefined as zero in the protocol. In this case, the terminal and the satellite base station may directly determine a position of each candidate PMO in each monitoring periodicity of the PDCCH based on the monitoring periodicity of the PDCCH and the duration of the PDCCH.

In an example, one of the first offset, the second offset, or the third offset, the monitoring periodicity of the PDCCH, and the duration of the PDCCH are carried in an information element "PDCCH common configuration (PDCCH-ConfigCommon)" in a SIB1, and specific values may be indexed by using "SearchSpaceId" configured in the information element and indicated by parameters "monitoringSlotPeriodicityAndOffset" and "duration" in a "SearchSpace related configuration" in a parameter "common search space list (commonSearchSpaceList)" of "PDCCH-ConfigCommon". The monitoring periodicity of the PDCCH is indicated by "monitoringSlotPeriodicity". The first offset is indicated by "Offset". The duration of the PDCCH is indicated by "duration". The second offset or the third offset may be indicated by "Offset", or may be indicated by another parameter. This is not limited in this application.

In this embodiment, the monitoring periodicity of the PDCCH is greater than the duration of the PDCCH, so that there is offsetting of more than one slot between candidate PMOs in different search space groups.

For example, if the monitoring periodicity of the PDCCH is two slots, and the duration of the PDCCH is one slot, a candidate PMO in one monitoring periodicity occupies one slot. FIG. 10A to FIG. 10C are diagrams of candidate PMOs in a plurality of monitoring periodicities. The following uses FIG. 10A as an example for description. For FIG. 10B and FIG. 10C, refer to FIG. 10A for understanding. Details are not described again.

FIG. 10A shows candidate PMOs in one system frame. The system frame includes 20 slots, and there are a total of 10 monitoring periodicities, for example, a monitoring periodicity #0 to a monitoring periodicity #9 in the figure. There is one candidate PMO in each monitoring periodicity, and the one candidate PMO in each monitoring periodicity occupies one slot. It can be learned that in the 10 monitoring periodicities, an offset between every two adjacent candidate PMOs includes two slots.

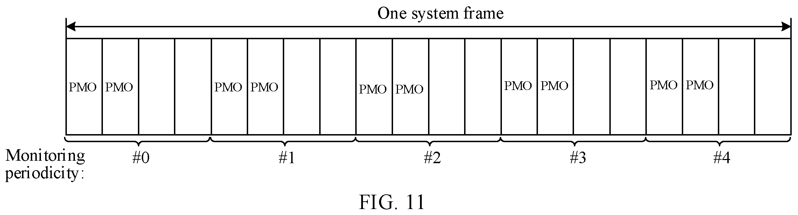

For another example, if the monitoring periodicity of the PDCCH is four slots, and the duration of the PDCCH is two slots, a PMO in one monitoring periodicity occupies two consecutive slots. FIG. 11 is another diagram of PMOs in a plurality of monitoring periodicities. FIG. 11 shows candidate PMOs in one system frame. The system frame includes 20 slots, and there are a total of 5 monitoring periodicities, for example, a monitoring periodicity #0 to a monitoring periodicity #4 in the figure. There are two candidate PMOs in each monitoring periodicity, and the two candidate PMOs in each monitoring periodicity occupy two consecutive slots. It can be learned that in the five monitoring periodicities, an offset between any candidate PMO in a monitoring periodicity and any candidate PMO in a next monitoring periodicity includes more than one slot. In other words, an offset between at least two candidate PMOs in the plurality of monitoring periodicities includes more than one slot.

It should be understood that the examples in FIG. 10 and FIG. 11 are merely shown for ease of understanding, and should not constitute any limitation on this application. A pattern determined based on the monitoring periodicity of the PDCCH and the duration of the PDCCH is not limited to those shown in FIG. 10 and FIG. 11, and other patterns may also be obtained based on different offsets (for example, the first offset, the second offset, or the third offset), which are not enumerated herein.

It should be further understood that the foregoing enumerated values of the monitoring periodicity of the PDCCH and the duration of the PDCCH are examples. The values of the monitoring periodicity of the PDCCH, the offset, and the duration of the PDCCH are not limited in this application. As long as the monitoring periodicity of the PDCCH is greater than the duration of the PDCCH, the offset between the at least two candidate PMOs in the paging frame set includes more than one slot.

Based on the monitoring periodicity of the PDCCH and the duration of the PDCCH, time domain distribution of candidate PMOs in each monitoring periodicity may be determined, or a time domain distribution rule of candidate PMOs in each monitoring periodicity may be determined. Further, the position of the candidate PMO used by the terminal to perform blind detection may be determined with reference to the time domain range in which the terminal performs blind detection.

It should be noted that FIG. 10 and FIG. 11 show only candidate PMOs in one system frame. If the monitoring periodicity of the PDCCH and the duration of the PDCCH are used, the candidate PMO may periodically appear in a subsequent system frame. Therefore, a case similar to a case in the design 2 in which the position of the candidate PMO overlaps the position of the other signaling such as the SSB may occur.

In view of this, the plurality of parameters are introduced in Manner 1, and the values of the plurality of parameters are related to the quantity M of PMOs included in each search space group and the quantity L of system frames included in the offset between two adjacent search space groups. In Manner 1, the quantity of PMOs included in each search space group may be specifically a quantity of valid PMOs included in each search space group.

Optionally, the plurality of parameters include at least two of a first parameter, a second parameter, a third parameter, and a fourth parameter. A value of the first parameter is equal to the quantity M of valid PMOs included in each search space group. A value of the second parameter is equal to the quantity L of system frames included in the offset between two adjacent search space groups. A value of the third parameter is equal to a product of the value of the first parameter and the value of the second parameter, that is, $M \cdot L$. A value of the fourth parameter is equal to a difference between the value of the third parameter and the value of the first parameter, that is, $M \cdot (L-1)$.

In an example, the plurality of parameters may include the first parameter and the second parameter, that is, the values of the plurality of parameters are respectively M and L. In another example, the plurality of parameters may include the third parameter and the fourth parameter, that is, the values of the plurality of parameters are respectively $M \cdot L$ and $M \cdot (L-1)$. For still another example, the plurality of parameters include the first parameter and the third parameter, that is, the values of the plurality of parameters are respectively M and $M \cdot L$. For yet another example, the plurality of parameters include the first parameter and the fourth parameter, that is, the values of the plurality of parameters are respectively M and $M \cdot (L-1)$.

It may be understood that based on the values of any two of the first parameter to the fourth parameter, the values of the other two parameters may be determined. Therefore, the plurality of parameters may include any two or more of the first parameter to the fourth parameter.

In addition, the values of the plurality of parameters may alternatively be values obtained by performing a mathematical transformation on M and/or L. The mathematical transformation may include one or more of the following: adding an arbitrary value, subtracting an arbitrary value, multiplying an arbitrary value, dividing an arbitrary value, and the like. For example, based on the mathematical transformation, it may be obtained that the values of the plurality of parameters are respectively M and L-1, the values of the plurality of parameters are respectively M-1 and L-1, or the values of the plurality of parameters are respectively M and $(M-1) \cdot (L-1)$. Details are not described again.

After the index of the candidate PMO is obtained by mapping the index of each SSB in each SSB group, a range of the index of the candidate PMO may be restricted based on a range determined by the plurality of parameters, and a candidate PMO falling in the range is determined as a valid PMO.

In other words, the valid PMOs are determined from the candidate PMOs, the position of each valid PMO corresponds to an index of a candidate PMO, and when a candidate PMO is determined as a valid PMO, an index of the candidate PMO is an index corresponding to the valid PMO. The index of each SSB may be mapped to obtain an index of one or more candidate PMOs. Therefore, the index of the candidate PMO may be first obtained through mapping based on the index of each SSB, and then the index corresponding to the valid PMO is determined based on at least two of the first parameter, the second parameter, the third parameter, and the fourth parameter.

As described above, each SSB group corresponds to one search space group, the PMO in each search space group may be determined by an SSB in a corresponding SSB group, and one SSB may determine one or more PMOs. In Manner 1, one or more candidate PMOs in one search space group may be determined based on one SSB in each SSB group.

The indexes of the SSBs may be sequentially numbered from 0 based on the maximum total quantity S of transmittable SSBs configured by using the parameter "ssb-PositionsInBurst" in the SIB1, to obtain S SSBs whose indexes are 0 to S-1. For example, the maximum total quantity of transmittable SSBs is 128, and indexes of the 128 SSBs are 0 to 127. It may be understood that the terminal may determine an index of each SSB based on the maximum quantity of transmittable SSBs. Alternatively, the terminal may determine an index of a found SSB based on an index carried in the SSB. For example, the index of the received SSB is determined by using one or more of a sequence of a DMRS included in the SSB, a scrambling code of a PBCH included in the SSB, information in a payload included in a PBCH, or the like. The index of the candidate PMO may be obtained by sequentially numbering, in a time sequence starting from 0, the candidate PMOs that fall in the time domain range in which the terminal performs blind detection. For example, an index of the 1st PMO that falls in the paging frame set or the PO is 0, and an index of another candidate PMO may be obtained through successive deduction.

It may be understood that in this application, an example in which the maximum quantity of SSBs is used to group and index the SSB used to determine the position of the PMO is used for description. In this manner, a communication time sequence between the satellite base station and the terminal can be more reliable, and problems such as a paging failure caused by inconsistency between understandings of the correspondence between an SSB and a PMO by the terminal and the satellite base station due to incorrect decoding of the parameter "ssb-PositionsInBurst" can be solved. In another possible implementation of this application, the maximum quantity of SSBs may alternatively be a quantity of actually transmitted SSBs. Optionally, the quantity of actually transmitted SSBs may also be obtained by using the parameter "ssb-PositionsInBurst" in the SIB1. In this case, the index carried in the SSB may still be indexed by using the maximum quantity of SSBs. The terminal may determine, based on the index carried in the SSB and a position of an actually transmitted SSB that is indicated by the parameter "ssb-PositionsInBurst", a group in which the SSB used to determine the position of the PMO is located and an index of the SSB. For example, the parameter "ssb-PositionsInBurst" indicates that the maximum quantity of SSBs is 128, and the actually transmitted SSB includes SSBs whose indexes are 0, 2, 4, ..., and 126, that is, SSBs whose indexes are even numbers in indexes 0 to 127. The 64 SSBs are divided into eight groups and indexed as 0 to 63. The index of the SSB received by the terminal is 80. The index 40 may be determined based on a position of the SSB in the actually transmitted SSBs, and the position of the PMO corresponding to the SSB is determined based on the index 40, to receive control information of a paging message on the PMO. The PMO is determined based on the actually transmitted SSB, so that a waste of resources used as PMOs can be avoided, and waiting time of UE can be reduced.

A possible design of determining, based on the index of the SSB and at least two of the first parameter, the second parameter, the third parameter, and the fourth parameter, the index corresponding to the valid PMO is determining, based on the first parameter and the second parameter, the index corresponding to the valid PMO.

For example, an index $k$ of the SSB and the index $p$ of the candidate PMO may satisfy:

$$p=x \cdot s+(i-1) \cdot M \cdot L+k \bmod s \ \text{........................................Formula 1;}$$

and

$$(i-1) \cdot M \cdot L \leq p<(i-1) \cdot M \cdot L+M \cdot (L-1) \text{.............................Formula 2}.$$

Herein, M is the value of the first parameter, L is the value of the second parameter, a value of x may be an integer ranging from 0 to X-1, that is, x=0, 1, ..., or X-1, X is a maximum quantity of candidate PMOs corresponding to each SSB, X is a positive integer, s is a quantity of SSBs included in each SSB group, s is a positive integer, i is a group index of an SSB group in which the first SSB is located, and i is a positive integer.

In this embodiment, the SSB group is the first SSB group, and a group index of the first SSB group may be obtained by numbering, in a time sequence from 1, SSB groups located in the paging frame set. The group index i of the first SSB group may satisfy:

$$i=\lceil (k+1)/s \rceil \text{.......................................................Formula 3}.$$

Formula 1 may be used to determine the index of the candidate PMO corresponding to the index of each SSB. Formula 2 may be used to limit the value range of the index of the candidate PMO, to determine the index of the valid PMO from the indexes of the candidate PMOs determined by using Formula 1.

The plurality of parameters may be predefined, for example, predefined in the protocol, or may be configured by the network device, for example, configured by the satellite base station. The terminal and the satellite base station may determine, based on at least two of the first parameter, the second parameter, the third parameter, and the fourth parameter, the index corresponding to the valid PMO. Therefore, at least two of the first parameter, the second parameter, the third parameter, and the fourth parameter may be predefined or configured, and not all the parameters need to be predefined or configured.

Because the values of the first parameter to the fourth parameter are all related to M and L, in another implementation, the values of the plurality of parameters may alternatively be predefined or configured based on M and L.

X may be predefined or configured by the network device. This is not limited in this application.

s may be predefined, configured by the network device, or determined by the terminal. This is not limited in this application.

In an example, a pattern of an SSB that needs to be used during satellite communication may be predefined. The network device may configure the maximum quantity of transmittable SSBs by using the SIB1. The terminal may determine a quantity of SSB groups based on the maximum quantity and the quantity s of SSBs included in each SSB group.

In an example, when configured by the network device, the plurality of parameters, X, and s may be carried in the SIB1. X may be carried in a parameter "nrofPDCCH-MonitoringOccasionPerSSB-InPO-r16" in an information element "paging control channel (paging control channel, PCCH) configuration (PCCH-Config)" in the SIB1. s may be carried in the parameter "ssb-PositionsInBurst" in the SIB1.

For ease of understanding, the following provides descriptions with reference to a specific example.

If the maximum quantity of candidate PMOs corresponding to each SSB is 2, that is, X=2, and a quantity of candidate PMOs corresponding to each SSB does not exceed 2, a value of x may be 0 or 1. Each search space group includes 10 valid PMOs, that is, M=10. An offset between every two adjacent search space groups includes two system frames, that is, L=2. Two SSB groups located in the SFN #0 and the SFN #2 in (b) in FIG. 7 are used as an example. The SSB group located in the SFN #0 is denoted as an SSB group #1, and the SSB group located in the SFN #2 is denoted as an SSB group #2. Indexes of eight SSBs in the SSB group #1 are respectively 0 to 7. Therefore, it may be obtained through calculation that a group index i of the SSB group $\#1 = \left\lceil (k+1)/s \right\rceil = 1$. Indexes of eight SSBs in the SSB group #2 are respectively 8 to 15. Therefore, it may be obtained through calculation that a group index i of the SSB group $\#2 = \left\lceil (k+1)/s \right\rceil = 2$.

The index of each SSB and the index of the candidate PMO corresponding to the SSB may be obtained based on Formula 1 as follows.

Corresponding to the SSB group #1, $i$=1:

when x=0, if $k$=0, $p$=0; if $k$=1, p=1; if $k$=2, $p$=2; ...; or if $k$=7, $p$=7; and
when x=1, if $k$=0, $p$=8; if $k$=1, $p$=9; if $k$=2, $p$=10; ...; or if $k$=7, $p$=15.

Corresponding to the SSB group #2, i=2:

when x=0, if $k$=8, $p$=20; if $k$=9, $p$=21; if $k$=10, p=22; ...; or if $k$=15, p=27; and
when x=1, if $k$=8, p=28; if $k$=9, p=29; if $k$=29, p=30; ...; or if $k$=15, p=35.

In conclusion, an index of a candidate PMO corresponding to an SSB whose index is 0 includes 0 and 8. An index of a candidate PMO corresponding to an SSB whose index is 1 includes 1 and 9. An index of a candidate PMO corresponding to an SSB whose index is 2 includes 2 and 10. An index of a candidate PMO corresponding to an SSB whose index is 3 includes 3 and 11. An index of a candidate PMO corresponding to an SSB whose index is 4 includes 4 and 12. An index of a candidate PMO corresponding to an SSB whose index is 5 includes 5 and 13. An index of a candidate PMO corresponding to an SSB whose index is 6 includes 6 and 14. An index of a candidate PMO corresponding to an SSB whose index is 7 includes 7 and 15. An index of a candidate PMO corresponding to an SSB whose index is 8 includes 20 and 28. An index of a candidate PMO corresponding to an SSB whose index is 9 includes 21 and 29. An index of a candidate PMO corresponding to an SSB whose index is 10 includes 22 and 30. An index of a candidate PMO corresponding to an SSB whose index is 11 includes 23 and 31. An index of a candidate PMO corresponding to an SSB whose index is 12 includes 24 and 32. An index of a candidate PMO corresponding to an SSB whose index is 13 includes 25 and 33. An index of a candidate PMO corresponding to an SSB whose index is 14 includes 26 and 34. An index of a candidate PMO corresponding to an SSB whose index is 15 includes 27 and 35.

Based on Formula 2, it can be obtained that when $i$=1, it may be obtained that a value range of the index $p$ corresponding to the valid PMO satisfies 0<p<10; and when $i$=2, it may be obtained that 20<p<30.

With reference to calculation results of Formula 1 and Formula 2, the following may be obtained:

a valid PMO corresponding to the SSB whose index is 0 includes candidate PMOs whose indexes are 0 and 8;
a valid PMO corresponding to the SSB whose index is 1 includes candidate PMOs whose indexes are 1 and 9;
a valid PMO corresponding to the SSB whose index is 2 includes a candidate PMO whose index is 2;
a valid PMO corresponding to the SSB whose index is 3 includes a candidate PMO whose index is 3;
a valid PMO corresponding to the SSB whose index is 4 includes a candidate PMO whose index is 4;
a valid PMO corresponding to the SSB whose index is 5 includes a candidate PMO whose index is 5;
a valid PMO corresponding to the SSB whose index is 6 includes a candidate PMO whose index is 6;
a valid PMO corresponding to the SSB whose index is 7 includes a candidate PMO whose index is 7;
a valid PMO corresponding to the SSB whose index is 8 includes candidate PMOs whose indexes are 20 and 28;
a valid PMO corresponding to the SSB whose index is 9 includes candidate PMOs whose indexes are 21 and 29;

a valid PMO corresponding to the SSB whose index is 10 includes a candidate PMO whose index is 22;
a valid PMO corresponding to the SSB whose index is 11 includes a candidate PMO whose index is 23;
a valid PMO corresponding to the SSB whose index is 12 includes a candidate PMO whose index is 24;
a valid PMO corresponding to the SSB whose index is 13 includes a candidate PMO whose index is 25;
a valid PMO corresponding to the SSB whose index is 14 includes a candidate PMO whose index is 26; and
a valid PMO corresponding to the SSB whose index is 15 includes a candidate PMO whose index is 27.

In this way, the terminal and the satellite base station may determine an index corresponding to a valid PMO in the at least one search space group.

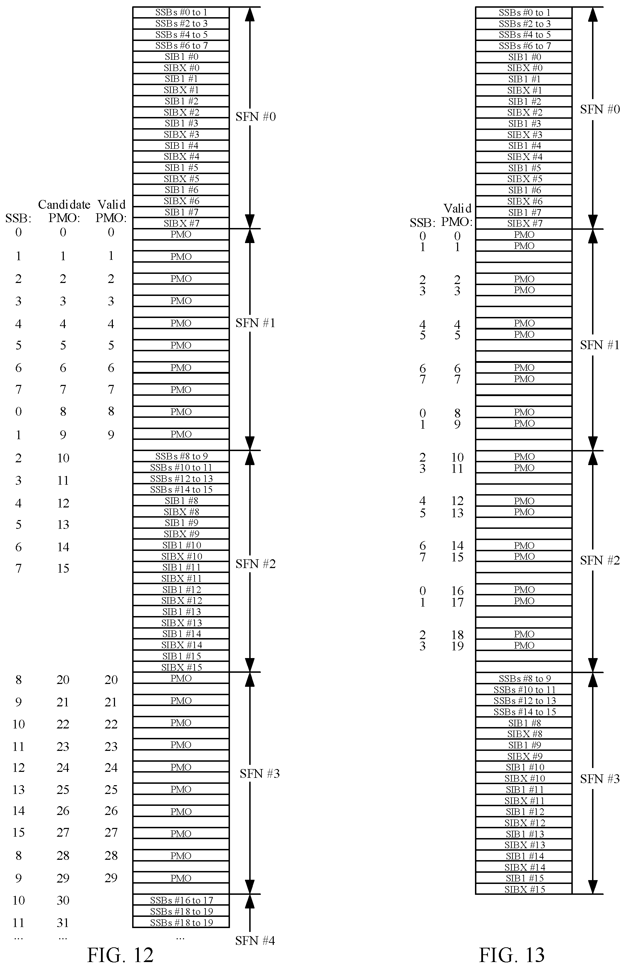

FIG. 12 is a diagram of a valid PMO that is in a search space group corresponding to an SSB group and that is determined in Manner 1. FIG. 12 shows, based on (b) in FIG. 7, a candidate PMO and a valid PMO that correspond to each SSB and that are determined in Manner 1. It can be learned that the valid PMO corresponding to the SSB group #1 located in the SFN #0 is located in the SFN #1, and the PMO corresponding to the SSB group #2 located in the SFN #2 is located in the SFN #3. In other words, a system frame in which a PMO in a search space group corresponding to the SSB group #1 is located is between system frames in which the SSB group #1 and the SSB group #2 are located. By analogy, a system frame in which a PMO in a search space group corresponding to the SSB group #2 is located is between the SSB group #2 and a subsequent SSB group #3, although not shown in the figure. In other words, the position of the valid PMO does not overlap the position of the other signaling.

It should be understood that the foregoing Formula 1 to Formula 3 are merely examples. A person skilled in the art may perform a simple mathematical transformation based on Formula 1 to Formula 3, to obtain another possible variant.

For example, Formula 1 and Formula 2 show a case in which the value of the first parameter is M and the value of the second parameter is L. In another design, a value of M·L may be determined as the value of the third parameter, for example, denoted as P, and a value of M·(L-1) may be determined as the value of the fourth parameter, for example, denoted as Q. In this case, Formula 1 and Formula 2 may be respectively transformed into Formula 1-1 and Formula 2-1 as follows:

$$p = x \cdot s + (i-1) \cdot P + k \bmod s \quad \text{................................................Formula 1-1;}$$

and

$$(i-1) \cdot P \leq p < (i-1) \cdot P + Q \quad \text{.................................................Formula 2-1.}$$

For another example, the values of the plurality of parameters are respectively M-1 and L-1, where M-1 is denoted as M', and L-1 is denoted as L'. Formula 1 and Formula 2 may be respectively transformed into Formula 1-2 and Formula 2-2 as follows:

$$p = x \cdot s + (i-1) \cdot (M'+1) \cdot (L'+1) + k \bmod s \quad \text{...........................Formula 1-2;}$$

and

$$(i-1) \cdot P \leq p < (i-1) \cdot (M'+1) \cdot (L'+1) + (M'+1) \cdot L' \quad \text{................Formula 2-2.}$$

Because of a relationship between the values of the first parameter, the second parameter, the third parameter, and the fourth parameter, when any two of the first parameter to the fourth parameter are known, Formula 1 and Formula 2 may be transformed, to determine the index of the candidate PMO corresponding to the index of each SSB. For brevity, details are not described herein again.

For another example, the group index of the SSB group may be numbered from 0. In this case, Formula 1, Formula 2, and Formula 3 may be respectively transformed into Formula 1-3, Formula 2-3, and Formula 3-1 as follows:

$$p = x \cdot s + i \cdot M \cdot L + k \bmod s \quad \text{..............................................Formula 1-3;}$$

$$i \cdot M \cdot L \leq p < i \cdot M \cdot L + M \cdot (L-1) \quad \text{.......................................Formula 2-3;}$$

and

$$i=\left\lfloor (k+1)/n \right\rfloor \ \dots\dots\dots\dots\dots\dots\dots\dots\dots\dots\dots\dots\dots\dots \text{Formula 3-1.}$$

For another example, the indexes of the SSB and the candidate PMO may be numbered from 1. In this case, Formula 3 may be transformed into Formula 3-2 as follows:

$$i=\left\lceil k/s \right\rceil \ \dots\dots\dots\dots\dots\dots\dots\dots\dots\dots\dots\dots\dots\dots\dots \text{Formula 3-2.}$$

In a case of conflict, the foregoing several variants may be combined to obtain more possible variants. For brevity, the variants are not listed one by one herein.

It should be further understood that determining, by using a formula based on the index of the SSB, the index corresponding to the valid PMO is merely a possible implementation, and should not constitute any limitation. A person skilled in the art may provide more possible implementations based on a same concept. For example, the index of the SSB is mapped according to the following rule, to obtain the index corresponding to the valid PMO: for each SSB group, successively selecting an integer value in a range from 0 to X-1 for x, and for each value of $x$, traversing an index of each SSB in the SSB group to obtain an index of a candidate PMO through mapping, until a value of the index of the candidate PMO obtained through mapping reaches $M\cdot(L-1)$; and determining, as an index corresponding to a valid PMO, an index of a candidate PMO whose value is less than $M\cdot(L-1)$ and that is obtained by mapping an index of an SSB.

It should be further understood that the pattern shown with reference to FIG. 12 is merely an example. As described above, neither the monitoring periodicity of the PDCCH, the duration of the PDCCH, or the like is limited in this application, and different patterns may be obtained based on different parameters. For example, a length of each search space group in time domain is not limited to one system frame, and each search space group may be located in one or more system frames.

For example, it is assumed that the monitoring periodicity of the PDCCH is four slots, the duration of the PDCCH is two slots, the start position of the monitoring periodicity of the PDCCH is the 1st slot in the SFN #0, the first offset is 20 slots, the maximum quantity of PMOs that may correspond to each SSB is 3, that is, X=3, and the quantity of PMOs included in each search space group is 20, that is, M=20.

FIG. 13 shows valid PMOs that are in a search space group corresponding to an SSB group and that are obtained based on this configuration. FIG. 13 shows an SSB group (for example, denoted as an SSB group #1) located in the SFN #0 and a search space group (for example, denoted as an SSB group #2) located in the SFN #3. Valid PMOs in a search space group corresponding to the SSB group #1 are located in the SFN #1 and the SFN #2, and are located between system frames in which the two SSB groups are located. In the search space group, every two PMOs consecutively occupy two slots, and an offset between at least two PMOs in the search space group is more than one slot.

Although not shown in the figure, it may be understood that valid PMOs in a search space group corresponding to the SSB group #2 are located in an SFN #4 and an SFN #5, and time domain distribution of the valid PMOs is similar to distribution in the SFN #1 and the SFN #2. Details are not described again.

It can be learned that different patterns may be obtained by configuring different values for the parameters. FIG. 12 and FIG. 13 are merely two possible examples. This application includes but is not limited to this.

In conclusion, it can be learned that the position of the valid PMO corresponding to the SSB may be determined based on the SSB, the monitoring periodicity of the PDCCH, the duration of the PDCCH, and the plurality of parameters. In other words, each SSB in the SSB group corresponding to the search space group, the monitoring periodicity of the PDCCH, the duration of the PDCCH, and the plurality of parameters satisfy the first relationship. The first relationship includes: The monitoring periodicity of the PDCCH is greater than the duration of the PDCCH, so that PMOs in different monitoring periodicities are non-consecutive in time domain. The index of each SSB, the plurality of parameters, and the index corresponding to the valid PMO satisfy the foregoing Formula 1 and Formula 2 or possible variants of Formula 1 and Formula 2.

In Manner 1, the monitoring periodicity of the PDCCH is set to be greater than the duration of the PDCCH, so that there is offsetting of more than one slot between PMOs in different monitoring periodicities. In other words, a plurality of PMOs in the at least one search space group are non-consecutive in time domain. Therefore, the terminal receives the other signaling such as the RAR message in a slot that is not occupied by the PMOs, which helps the terminal successfully receive the RAR message, improving the access performance. In addition, at least two of the first parameter, the second parameter, the third parameter, and the fourth parameter are introduced, so that the terminal excludes indexes of some invalid PMOs when mapping PMO indexes based on the indexes of the SSBs. This can avoid blind detection of the terminal on some invalid PMOs, so that the power consumption can be reduced.

Manner 2

Manner 2 may be considered as an improvement made for the foregoing design 1. It can be learned from the foregoing descriptions of the design 1 with reference to (a) in FIG. 7 that the PMO and the other signaling each occupy a half of a system frame, which is unfavorable to receiving of the RAR message by the terminal, and affects the access performance of the terminal. In Manner 2, time domain distribution of the one or more PMOs in each search space group is indicated by the fifth parameter, and then a time domain distribution status of PMOs in one search space group may be designed based on a requirement, so that there is one or more blank slots between the PMOs in the search space group for transmitting the other signaling.

Different from Manner 1, the position of the PMO in the at least one search space group may be determined based on at least the monitoring periodicity of the PDCCH, the monitoring duration of the PDCCH, the SSB in each SSB group, and the fifth parameter. The monitoring periodicity of the PDCCH, the monitoring duration of the PDCCH, and the fifth parameter are used to determine the position of the PMO. The SSB in each SSB group is used to determine the corresponding PMO.

The monitoring periodicity of the PDCCH is greater than the monitoring duration of the PDCCH. The monitoring periodicity of the PDCCH may be equal to duration of a search space group. The monitoring duration of the PDCCH is not less than an offset between a slot occupied by a 1st PMO and a slot occupied by a last PMO in a monitoring periodicity of the PDCCH (or in a search space group). A slot in the monitoring duration of the PDCCH is not necessarily completely occupied by a PMO. In other words, there is an offset of more than one slot between at least two adjacent PMOs.

Similar to Manner 1, a position of a 1st PMO in the paging frame set may be determined based on an offset of the PMO in the paging frame set. The offset may be a fixed value, or may be flexibly configured. The offset may also be described by using the foregoing first offset or the foregoing third offset, and details are not described again.

In an example, one of the first offset to the third offset, the monitoring periodicity of the PDCCH, and the monitoring duration of the PDCCH are carried in an information element "PDCCH-ConfigCommon" in a SIB1, and specific values may be indexed by using "SearchSpaceId" configured in the information element and indicated by parameters "monitoringSlotPeriodicityAndOffset" and "duration" in the "SearchSpace related configuration". The monitoring periodicity of the PDCCH corresponds to " monitoringSlotPeriodicityAndOffset". The monitoring duration of the PDCCH corresponds to "duration".

As described in the foregoing definition in the 5G protocol and Manner 1, "duration" may indicate the duration of the PDCCH. In Manner 2, the monitoring duration of the PDCCH may be indicated by reusing the parameter "duration". A difference lies in that in Manner 2, the terminal may interpret "duration" based on the monitoring duration of the PDCCH, and does not interpret "duration" as the duration of the PDCCH.

Time domain distribution of a PMO in a search space group may be indicated by the fifth parameter.

In a possible design, the fifth parameter includes a quantity of slots included in the offset between the at least two adjacent PMOs in each search space group.

For ease of differentiation and description, in this specification, the offset between the at least two adjacent PMOs in each search space is denoted as a fourth offset, and the fourth offset may be identified by the quantity of slots included in the offset between the at least two adjacent PMOs in each search space.

In a possible case, PMOs are distributed at equal intervals in each search space group, and an offset between any two adjacent PMOs is the same. In this case, a fourth offset between any two adj acent PMOs may be indicated by the fifth parameter. For example, if the fifth parameter indicates two slots, it indicates that the offset between the any two adjacent PMOs is two slots.

For ease of understanding, the following provides descriptions with reference to a specific example.

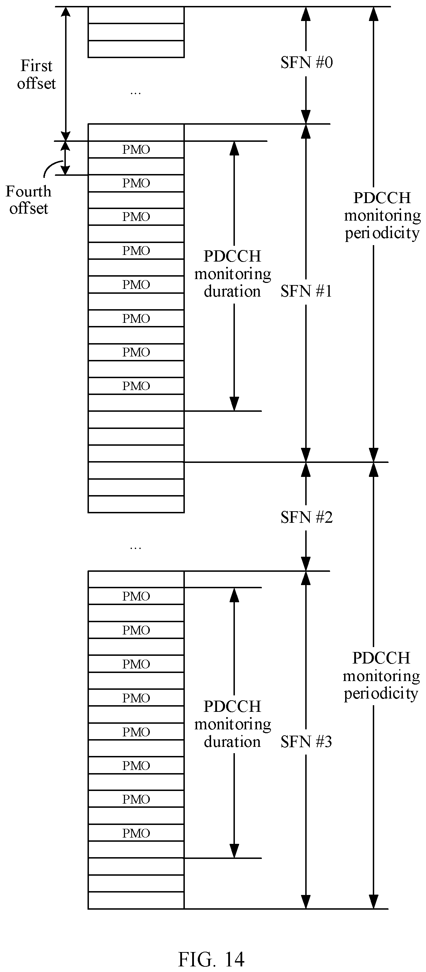

If the monitoring periodicity of the PDCCH is 40 slots, the monitoring duration of the PDCCH is 16 slots, a start position of the monitoring periodicity of the PDCCH is a 1st slot in the SFN #0, the first offset is 21 slots, and the fourth offset is two slots, distribution of PMOs in a search space group may be obtained, as shown in FIG. 14. It can be learned that in a monitoring periodicity of the PDCCH, eight PMOs are distributed in a range of the monitoring duration of the PDCCH. There is offsetting of 15 slots between a 1st PMO and a last PMO in the eight PMOs, not exceeding the monitoring duration of 16 slots of the PDCCH. The eight PMOs are distributed at equal intervals in time domain, and every two adjacent PMOs are offset by two slots.

It should be understood that the parameters used to form the pattern in FIG. 14 are not limited to the parameters listed above. For example, the monitoring duration of the PDCCH may alternatively be designed as 15 slots, or may be another quantity of slots greater than 15 slots. It should be further understood that FIG. 14 is merely an example, and should not constitute any limitation on this application. Values of the parameters, the pattern, and the like are not limited in this application.

For the case in which PMOs in a search space group are distributed at equal intervals in time domain, time domain distribution of the PMOs in the search space group may be further determined by using the first parameter. As described above, a value of the first parameter is equal to a quantity of PMOs included in each search space group. In Manner 2, a quantity of PMOs in one piece of monitoring duration of the PDCCH may be determined based on the first parameter.

If the monitoring duration of the PDCCH is denoted as D, and the value of the first parameter is M, an offset (that is, the fourth offset) between every two adjacent PMOs in each search space group is $\lceil D/M \rceil$.

For example, if the first parameter is 8, it indicates that the quantity of PMOs included in each search space group is 8. If the monitoring duration of the PDCCH is 16 slots, it may be determined that every two adjacent PMOs are offset by two slots, that is, the fourth offset is two slots. In this case, the first parameter may be considered as an example for implicitly indicating the fifth parameter.

In another possible design, the fifth parameter includes a bitmap, the bitmap includes a plurality of bits in one-to-one correspondence with a plurality of slots, and a value of each bit indicates whether a corresponding slot is occupied by a PMO. A quantity of slots included in the plurality of slots may be a quantity of slots included in the monitoring duration of the PDCCH. In other words, the plurality of bits are in one-to-one correspondence with the plurality of slots included in the monitoring duration of the PDCCH. Alternatively, the plurality of slots may be a quantity of slots included in the monitoring periodicity of the PDCCH. In other words, the plurality of bits are in one-to-one correspondence with the plurality of slots included in the monitoring periodicity of the PDCCH. It may be understood that because the monitoring periodicity of the PDCCH is greater than the monitoring duration of the PDCCH, when the plurality of bits are in one-to-one correspondence with the plurality of slots included in the monitoring duration of the PDCCH, bit overheads can be reduced. It may be understood that in another design, the bitmap may include a plurality of bit groups, each bit group corresponds to one slot, and a value of each bit group indicates whether a corresponding slot is occupied by a PMO. Each bit group may include one or more bits.

For example, when the plurality of bits indicate whether the corresponding plurality of slots are occupied by PMOs, different values may be used for indication. For example, "1" indicates that the slot is occupied by a PMO, and "0" indicates that the slot is not occupied by a PMO. Alternatively, "0" indicates that the slot is occupied by a PMO, and "1" indicates that the slot is not occupied by a PMO.

It should be noted that whether the slot is occupied by a PMO does not mean that the slot is already occupied or is not occupied by the PMO, but indicates whether the slot may be determined as a PMO for the satellite base station to transmit the PDCCH or for the terminal to perform PDCCH blind detection.

For ease of understanding, the following provides descriptions with reference to a specific example.

The pattern in FIG. 14 is used as an example. To obtain distribution of PMOs in one monitoring periodicity in FIG. 14, the fifth parameter may indicate by using a bitmap of 16 bits, for example, may indicate by using "1010101010101010".

It may be understood that because each bit in the bitmap may correspond to one slot, distribution of PMOs in one monitoring periodicity may be more flexibly configured in the bitmap, and there is no need to limit the PMOs in one search space group to be distributed at equal intervals.

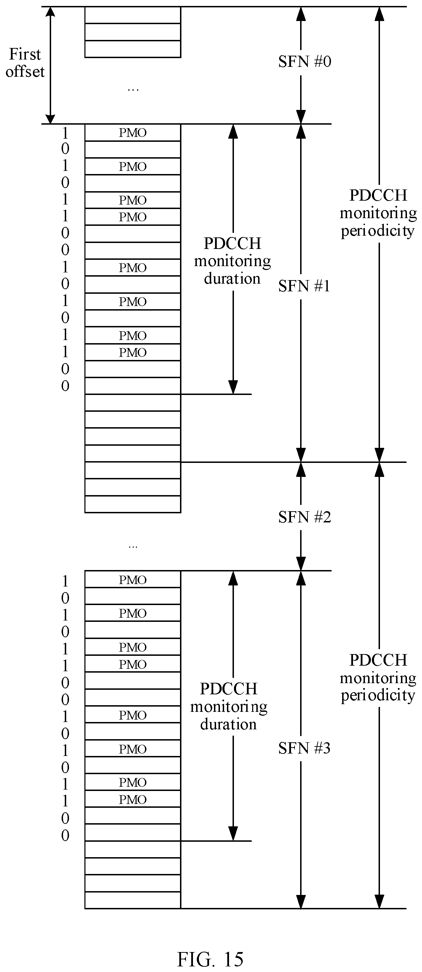

For example, if the monitoring periodicity of the PDCCH is 40 slots, the monitoring duration of the PDCCH is 16 slots, the first offset is 20 slots, and the bitmap indicates "1010110010101100", distribution of PMOs in a search space group may be obtained, as shown in FIG. 15.

It can be learned that in a monitoring periodicity of the PDCCH, eight PMOs are distributed in a range of the monitoring duration of the PDCCH. There is offsetting of 14 slots between a 1st PMO and a last PMO in the eight PMOs, not exceeding the monitoring duration of 16 slots of the PDCCH. The eight PMOs are non-consecutively distributed in time domain, and every two adjacent PMOs are offset by one or more slots.

It should be understood that the parameters used to form the patterns in FIG. 14 and FIG. 15 are not limited to the parameters listed above. For example, the monitoring duration of the PDCCH used to form the pattern in FIG. 14 may be 15 slots, starting from the 1st PMO and ending with the last PMO, and a length of a corresponding bitmap may be 15 bits, for example, "101010101010101". The monitoring duration of the PDCCH used to form the pattern in FIG. 15 may be 14 slots, starting from the 1st PMO to the last PMO, and a length of a corresponding bitmap may also be 14 bits, for example, "10101100101011".

The fifth parameter may be predefined, or may be configured by the network device. This is not limited in this application.

In an example, the fifth parameter may be used as one of configuration parameters of a search space, and is carried in the SIB1. For example, the fifth parameter includes the fourth offset, and the fourth offset may be carried in a "SearchSpace related configuration" together with the foregoing parameters "monitoringSlotPeriodicityAndOffset" and "duration", for example, indicated by a parameter "interger".

It should be understood that the SIB1 is merely an example, and signaling used to carry the fifth parameter is not limited in this application.

Because there is a correspondence between a PMO and an SSB, in Manner 2, the terminal and the satellite base station may alternatively determine a corresponding PMO based on each SSB in each SSB group.

For ease of description, it is assumed that the index of the first SSB in the first SSB group is $k$, and the index of the PMO corresponding to the first SSB is $p$. For example, the index $k$ of the SSB and the index p of the PMO may satisfy:

$$p = x \cdot s + (i-1) \cdot M + k \bmod s \quad\text{..............................................}\text{Formula 4.}$$

The group index i may satisfy:

$$i = \lceil (k+1)/s \rceil \dots\dots\dots\dots\dots\dots\dots\dots\dots\dots\dots\dots\dots\dots\dots\text{Formula 3}.$$

The parameters in Formula 4 and Formula 3 are described in Manner 1 above, and details are not described herein again.

It should be noted that the first parameter may be predefined, may be configured by the network device, or may be determined based on the fifth parameter.

For example, the fifth parameter includes a bitmap, and the bitmap may indicate a slot occupied by a PMO in the monitoring duration of the PDCCH, so that a quantity of PMOs in each search space group may be determined. For example, it may be obtained by using the bitmap "1010101010101010" that the quantity of PMOs in each search space group is 8.

For another example, the fifth parameter includes the fourth offset, and a quantity of PMOs in each search space group may be determined with reference to the duration of the PDCCH. For example, if the fourth offset is two slots, and the duration of the PDCCH is 16 slots, it may be determined that the quantity of PMOs in each search space group is 8.

For ease of understanding, the following describes the correspondence between an SSB and a PMO with reference to a specific example.

If a maximum quantity of PMOs corresponding to each SSB is 2, that is, X=2, and a quantity of PMOs corresponding to each SSB does not exceed 2, a value of $x$ may be 0 or 1. Each search space group includes 8 PMOs, that is, M=8. The monitoring periodicity of the PDCCH is 40 slots, the monitoring duration of the PDCCH is 16 slots, and the first offset is 2 slots, that is, every two adjacent PMOs in each search space group are offset by two slots. Two SSB groups located in the SFN #0 and the SFN #2 in (b) in FIG. 7 are used as an example. The SSB group located in the SFN #0 is denoted as an SSB group #1, and the SSB group located in the SFN #2 is denoted as an SSB group #2. Indexes of eight SSBs in the SSB group #1 are respectively 0 to 7. Therefore, it may be obtained through calculation that a group index i of the SSB group $\#1 = \lceil (k+1)/s \rceil = 1$. Indexes of eight SSBs in the SSB group #2 are respectively 8 to 15. Therefore, it may be obtained through calculation that a group index i of the SSB group $\#2 = \lceil (k+1)/s \rceil = 2$.

Because each search space group includes eight PMOs, eight PMOs in a search space group corresponding to the SSB #1 may be obtained through mapping by traversing indexes of the eight SSBs in the SSB group #1 once, and eight PMOs in a search space group corresponding to the SSB #2 may be obtained through mapping by traversing indexes of the eight SSBs in the SSB #2 once.

The index of each SSB and the index of the PMO corresponding to the SSB may be obtained based on Formula 1 as follows.

For the SSB group #1, when i=1, and x=0, if $k$=0, $p$=0; if $k$=1, $p$=1; if $k$=2, $p$=2; ...; or if $k$=7, $p$=7.

Corresponding to the SSB group #2, when i=2, and x=0, if $k$=8, p=8; if $k$=9, $p$=9; if $k$=10, p=10; ...; or if $k$=15, p=15.

In this way, the terminal and/or the satellite base station may determine a PMO corresponding to each SSB in the plurality of search space groups.

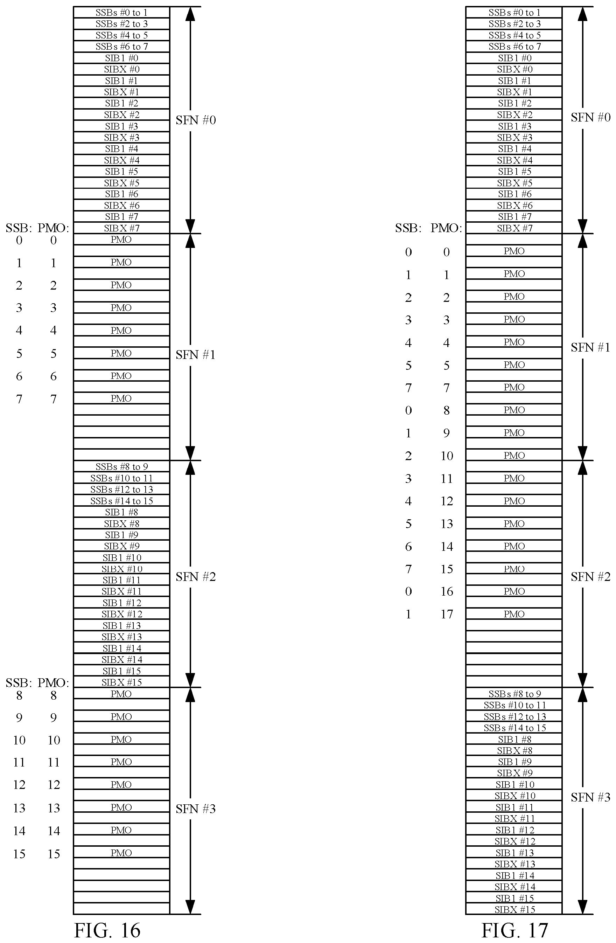

FIG. 16 is a diagram of a PMO that is in a search space group corresponding to an SSB group and that is determined in Manner 2. FIG. 16 shows, based on (b) in FIG. 7, a PMO that corresponds to each SSB and that is determined in Manner 2. It can be learned that a PMO corresponding to the SSB group #1 located in the SFN #0 is located in the SFN #1, and a PMO corresponding to the SSB group #2 located in the SFN #2 is located in the SFN #3. In other words, a system frame in which a PMO in a search space group corresponding to the SSB group #1 is located is between system frames in which the SSB group #1 and the SSB group #2 are located. By analogy, a system frame in which a PMO in a search space group corresponding to the SSB group #2 is located is between the SSB group #2 and a subsequent SSB group #3, although not shown in the figure. In other words, the position of the PMO does not overlap the position of the other signaling. PMOs in each search space group are non-consecutive in time domain, and at least two adjacent PMOs are offset by more than one slot. Therefore, the satellite base station may transmit the RAR message in a slot that is not occupied by the PMOs, and the terminal may receive the RAR message in the slot.

It should be understood that the foregoing Formula 4 and Formula 3 are merely examples. A person skilled in the art performs a simple mathematical transformation based on Formula 4 and Formula 3, to obtain another possible variant. For example, Formula 4 shows a case in which the value of the first parameter is M. Any one or more mathematical transformations are performed on M, and Formula 4 may change correspondingly, so that a plurality of possible variants may be obtained.

For example, if it is determined, based on M, that the value of the first parameter is M-1, for example, denoted as M', Formula 4 may be transformed as follows:

$$p = x \cdot s + (i-1) \cdot (M'+1) + k \bmod s \dots\dots\dots\dots\dots\dots\dots\text{Formula 4-1}.$$

For another example, if it is determined, based on M, that the value of the first parameter is M×a, where a is not zero, for example, the value of the first parameter is denoted as M", Formula 4 may be transformed as follows:

$$p = x \cdot s + (i-1) \cdot M''/a + k \bmod s \dots\dots\dots\dots\dots\dots\dots\text{Formula 4-2}.$$

Similarly, a plurality of variants may be obtained, which are not listed one by one herein.

For a variant of Formula 4, refer to the example in Manner 1. Details are not described again.

It should be further understood that the pattern shown in FIG. 16 is merely an example. Neither the monitoring periodicity of the PDCCH, the monitoring duration of the PDCCH, the distribution of the PMOs in the search space group, or the like is limited in this application, and different patterns may be obtained based on different parameters. For example, a length of each search space group in time domain is not limited to one system frame, and each search space group may be located in one or more system frames.

For example, it is assumed that the monitoring periodicity of the PDCCH is 60 slots, the monitoring duration of the PDCCH is 36 slots, the start position of the monitoring periodicity of the PDCCH is the 1st slot in the SFN #0, the first offset is 21 slots, the maximum quantity of PMOs corresponding to each SSB is 3, that is, X=3, and the quantity of PMOs included in each search space group is 18, that is, M=18.

FIG. 17 shows valid PMOs that are in a search space group corresponding to an SSB group and that are obtained based on this configuration. FIG. 17 shows an SSB group (for example, denoted as an SSB group #1) located in the SFN #0 and a search space group (for example, denoted as an SSB group #2) located in the SFN #3. Valid PMOs in a search space group corresponding to the SSB group #1 are located in the SFN #1 and the SFN #2, and are located between system frames in which the two SSB groups are located. In the search space group, every two PMOs consecutively occupy two slots, and an offset between at least two PMOs in the search space group includes more than one slot.

Although not shown in the figure, it may be understood that valid PMOs in a search space group corresponding to the SSB group #2 are located in an SFN #4 and an SFN #5, and time domain distribution of the valid PMOs is similar to distribution in the SFN #1 and the SFN #2. Details are not described again.

It can be learned that different patterns may be obtained by configuring different values for the parameters. FIG. 16 and FIG. 17 are merely two possible examples. This application includes but is not limited to this.

In conclusion, it can be learned that the position of the PMO corresponding to the SSB may be determined based on the SSB, the monitoring periodicity of the PDCCH, the monitoring duration of the PDCCH, the first parameter, and the fifth parameter. In other words, each SSB in the SSB group corresponding to the search space group, the monitoring periodicity of the PDCCH, the monitoring duration of the PDCCH, the first parameter, and the fifth parameter satisfy the second relationship. The second relationship includes: The monitoring periodicity of the PDCCH is greater than the monitoring duration of the PDCCH, so that the PMO is located in a range of the monitoring duration of the PDCCH in time domain, to avoid overlapping with signaling at another position outside the range of the monitoring duration of the PDCCH. The monitoring duration of the PDCCH and the fifth parameter may be used to limit distribution of PMOs in the monitoring periodicity of the PDCCH, and the fifth parameter may be designed to make PMOs in a same monitoring periodicity of the PDCCH non-consecutively distributed in time domain. The index of each SSB, the first parameter, and the indexes corresponding to the PMOs satisfy the foregoing Formula 4 or possible variants of Formula 4.

In Manner 2, the time domain distribution of the PMOs in the search space group is indicated by the fifth parameter, so that a plurality of PMOs in one monitoring periodicity of the PDCCH are non-consecutively distributed in time domain, and there is an offset of more than one slot between PMOs in different search space groups. Therefore, the terminal receives the other signaling such as the RAR message in a slot that is not occupied by a PMO. This helps the terminal successfully receive the RAR message, ensuring the access performance. In addition, the monitoring periodicity of the PDCCH is set to be greater than the monitoring duration of the PDCCH, and the terminal performs PDCCH blind detection in the range of the monitoring duration of the PDCCH. In this way, a system frame in which a PMO in each search space group is located is between system frames in which two adjacent SSB groups are located, so that a position of the PMO does not overlap a position of other signaling such as an SSB. Therefore, blind detection of the terminal on some invalid PMOs can be avoided, reducing the power consumption.

Manner 1 and Manner 2 are described above in detail with reference to a plurality of accompanying drawings. The accompanying drawings are shown merely for ease of understanding, and should not constitute any limitation on this application. Based on a same concept, a person skilled in the art may obtain more possible patterns by adjusting the parameters. For brevity, no enumerations are provided herein.

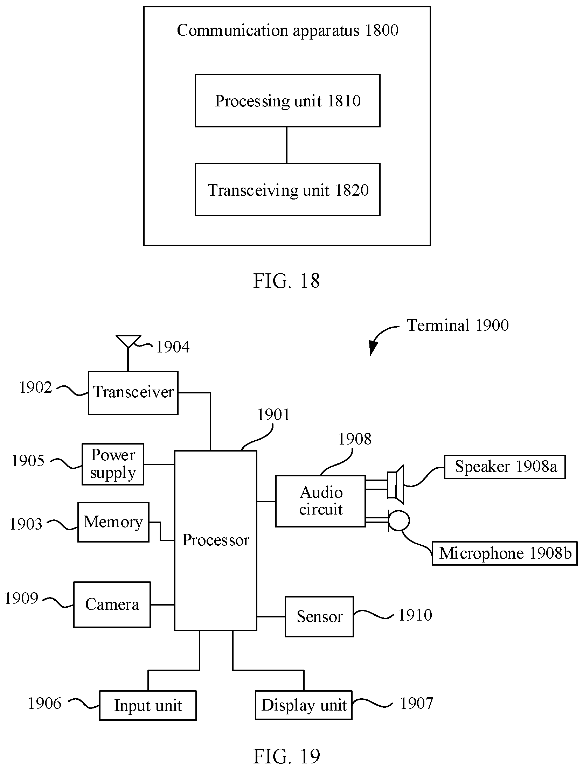

The communication method provided in embodiments of this application is described above in detail with reference to FIG. 8 to FIG. 17. A communication apparatus provided in embodiments of this application is described below in detail with reference to FIG. 18 and FIG. 19.

FIG. 18 is a block diagram of a communication apparatus according to an embodiment of this application. As shown in FIG. 18, the communication apparatus 1800 may include a processing unit 1810 and a transceiving unit 1820.

In a possible design, the communication apparatus 1800 may correspond to the terminal in the foregoing method embodiment, for example, may be a terminal or a component (for example, a chip or a chip system) configured in a terminal. The units in the apparatus 1800 may be configured to implement a corresponding procedure performed by the terminal in the method 800 shown in FIG. 8. For example, the transceiving unit 1820 may be configured to perform step 830 in the method 800, and the processing unit 1810 may be configured to perform step 840 and step 850 in the method 800. Specifically, the transceiving unit 1820 may be configured to receive a first SSB. The processing unit 1810 may be configured to: determine a first PMO based on the first SSB, and perform PDCCH blind detection on the first PMO.

In another possible design, the communication apparatus 1800 may correspond to the satellite base station in the foregoing method embodiment, for example, may be a satellite base station or a component (for example, a chip or a chip system) configured in a satellite base station. The units of the apparatus 1800 may be configured to implement a corresponding procedure performed by the satellite base station in the method 800 shown in FIG. 8. For example, the processing unit 1810 may be configured to perform step 810 in the method 800, and the transceiving unit 1820 may be configured to perform step 820 and step 860 in the method 800. Specifically, the processing unit 1810 may be configured to determine a position of each PMO in at least one search space group. The transceiving unit 1820 may be configured to transmit a PDCCH on the determined PMO in the at least one search space group.

It should be understood that a specific process in which the units perform the foregoing corresponding steps is described in detail in the foregoing method embodiment, and for brevity, details are not described herein.

It should be further understood that in this embodiment of this application, division into modules is an example, and is merely logical function division. In actual implementation, there may be another division manner. In addition, functional modules in this embodiment of this application may be integrated into one processor, each module may exist alone physically, or two or more modules may be integrated into one module. The integrated module may be implemented in a form of hardware, or may be implemented in a form of a software functional module.

It should be understood that the communication apparatus 1800 may correspond to the base station 310 or the terminal 320 in the communication system shown in FIG. 3. The processing unit 1810 in the communication apparatus 1800 may correspond to the processor 312 in the base station 310 or the processor 322 in the terminal 320, and may invoke, via the processor in the base station 310 or the terminal 320, instructions stored in the memory, to implement the foregoing function, for example, a function of determining a position of each PMO in a paging frame set. The transceiving unit 1820 may correspond to the interface 311 in the base station 310 or the interface 321 in the terminal 320, and may implement the foregoing function of receiving and/or sending data in response to an instruction of the processor.

Specifically, when the processor 312 in the base station 310 may be configured to perform step 810 in the method 800, the interface 311 may be configured to perform step 820 and step 860 in the method 800. The processor 322 in the terminal 320 may be configured to perform step 840 and step 850 in the method 800, and the interface 321 may be configured to perform step 830 in the method 800.

It should be understood that a specific process in which the units perform the foregoing corresponding steps is described in detail in the foregoing method embodiment, and for brevity, details are not described herein.

FIG. 19 is a diagram of a possible structure of a terminal according to an embodiment of this application. The terminal may be used in the systems shown in FIG. 1, FIG. 2, and FIG. 3. As shown in FIG. 19, the terminal 1900 includes a processor 1901 and a transceiver 1902. Optionally, the terminal 1900 further includes a memory 1903. The processor 1901, the transceiver 1902, and the memory 1903 may communicate with each other through an internal connection path, to transfer a control signal and/or a data signal. The memory 1903 is configured to store a computer program. The processor 1901 is configured to invoke the computer program from the memory 1903 and run the computer program, to control the transceiver 1902 to send and receive a signal. Optionally, the terminal 1900 may further include an antenna 1904, configured to send, by using a radio signal, uplink data or uplink control signaling output by the transceiver 1902.

The processor 1901 and the memory 1903 may be integrated into one processing apparatus. The processor 1901 is configured to execute program code stored in the memory 1903, to implement the foregoing function. In specific implementation, the memory 1903 may be integrated into the processor 1901, or may be independent of the processor 1901. The processor 1901 may correspond to the processor 322 in FIG. 3 or the processing unit 1810 in FIG. 18.

The transceiver 1902 may correspond to the interface 321 in FIG. 3 or the transceiving unit 1820 in FIG. 18. The transceiver 1902 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal 1900 may further include a power supply 1905, configured to supply power to various components or circuits in the terminal 1900.

In addition, to make functions of the terminal more perfect, the terminal 1900 may further include one or more of an input unit 1906, a display unit 1907, an audio circuit 1908, a camera 1909, a sensor 1910, and the like. The audio circuit may further include a speaker 1908a, a microphone 1908b, and the like.

It should be understood that the terminal 1900 shown in FIG. 19 can implement processes related to the terminal or processes related to the satellite base station in the method embodiment shown in FIG. 8. Operations and/or functions of the modules in the terminal 1900 are intended to implement corresponding procedures in the foregoing method embodiment. For details, refer to the descriptions in the foregoing method embodiment. To avoid repetition, detailed descriptions are properly omitted herein.

In embodiments of this application, it should be noted that the foregoing method embodiment may be applied to a processor, or may be implemented by a processor. The processor may be an integrated circuit chip and has a signal processing capability. In an implementation process, the steps in the foregoing method embodiment can be implemented by using a hardware integrated logical circuit in the processor, or by using instructions in a form of software. The processor may be a general-purpose processor, a DSP, an ASIC, an FPGA or another programmable logical device, a discrete gate or transistor logic device, or a discrete hardware component. The methods, steps, and logical block diagrams in embodiments of this application may be implemented or performed. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a ROM, a PROM, an EPROM, an EEPROM, or a flash memory. The volatile memory may be a RAM, and serves as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any other proper types of memories.

This application provides a chip system. The chip system includes at least one processor, configured to support implementation of a function of the terminal or a function of the satellite base station in any one of the foregoing method embodiments, for example, receiving, sending, or processing of data and/or information in the foregoing method.

In a possible design, the chip system further includes a memory, the memory is configured to store program instructions and data, and the memory is located inside or outside the processor.

The chip system may include a chip, or may include a chip and another discrete component.

This application further provides a computer program product. The computer program product includes a computer program (which may also be referred to as code or instructions). When the computer program is run, a computer is enabled to perform the method performed by the terminal or the method performed by the satellite base station in the embodiment shown in FIG. 8.

This application further provides a computer-readable storage medium. The computer-readable storage medium stores a computer program (which may also be referred to as code or instructions). When the computer program is run, a computer is enabled to perform the method performed by the terminal or the method performed by the satellite base station in the embodiment shown in FIG. 8.

This application further provides a communication system. The communication system includes the foregoing terminal and the foregoing radio access network device. Optionally, the radio access network device is a satellite base station.

All or a part of the method provided in embodiments of this application may be implemented by using software, hardware, firmware, or any combination thereof. When software is used to implement the method, all or a part of the method may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic disk), an optical medium (for example, a DVD), a semiconductor medium (for example, a solid state disk solid state disk (SSD)), or the like.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the method described in embodiments of this application. The foregoing storage medium includes any medium capable of storing program code, such as a USB flash drive, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

receiving a first synchronization signal block SSB, wherein the first SSB belongs to an SSB group, and the SSB group is one of a plurality of SSB groups; and
determining a first physical downlink control channel monitoring occasion PMO based on the first SSB, and performing physical downlink control channel PDCCH blind detection on the first PMO, wherein
the plurality of SSB groups are in one-to-one correspondence with a plurality of search space groups, each search space group comprises one or more PMOs, each SSB group comprises one or more SSBs, the one or more PMOs comprised in one of the plurality of search space groups comprise the first PMO, a position of the one or more PMOs in each search space group is determined by at least each SSB in a corresponding SSB group, a monitoring periodicity of a physical downlink control channel PDCCH, duration of the PDCCH, and a plurality of parameters, and the determined position of the PMO in each search space group satisfies the following conditions: a system frame in which the PMO in each search space group is located is between system frames in which two adjacent SSB groups are located, and an offset between at least two adjacent PMOs in each search space group comprises more than one slot, wherein the monitoring periodicity is greater than the duration, and values of the plurality of parameters are related to a quantity of PMOs comprised in each search space group and a quantity of system frames comprised in an offset between two adjacent search space groups.

2. The method according to claim 1, wherein the plurality of parameters comprise at least two of a first parameter, a second parameter, a third parameter, and a fourth parameter, a value of the first parameter is equal to the quantity of PMOs comprised in each search space group, a value of the second parameter is equal to the quantity of system frames comprised in the offset between two adjacent search space groups, a value of the third parameter is equal to a product of the value of the first parameter and the value of the second parameter, and a value of the fourth parameter is equal to a difference between the value of the third parameter and the value of the first parameter.

3. The method according to claim 2, wherein in each search space group, a position of each PMO corresponds to an index of a candidate PMO, and an index p of a candidate PMO corresponding to a position of each PMO in a first search space group in the plurality of search space groups satisfies:

$$p = x \cdot s + (i-1) \cdot M \cdot L + k \bmod s, \text{ and } (i-1) \cdot M \cdot L \leq p < (i-1) \cdot M \cdot L + M \cdot (L-1),$$

wherein
the first search space group is one of the plurality of search space groups, x=0, 1, ..., or X-1, X is a maximum quantity of candidate PMOs corresponding to each SSB, X is a positive integer, s is a quantity of SSBs comprised in each SSB group, s is a positive integer, i is a group index of a first SSB group corresponding to the first search space group in the plurality of SSB groups, i is a positive integer, $k$ is an index of an SSB in the plurality of SSB groups, $k$ is a natural number less than or equal to S-1, S is a total quantity of SSBs comprised in the plurality of SSB groups, S is a positive integer, M is the value of the first parameter, M is a positive integer, L is the value of the second parameter, L is a positive integer greater than or equal to 2, and mod represents a modulo operation.

4. The method according to any one of claims 1 to 3, wherein each of the plurality of parameters is predefined, or is configured by a network device.

5. The method according to any one of claims 1 to 4, wherein the quantity of SSBs comprised in each SSB group and the maximum quantity of PMOs corresponding to each SSB are predefined, or are configured by the network device.

6. The method according to any one of claims 1 to 5, wherein each search space group is located in one or more system frames.

7. The method according to any one of claims 1 to 6, wherein the plurality of search space groups are search space groups in one paging frame set, and the paging frame set occupies a plurality of consecutive system frames in time domain.

8. The method according to claim 7, wherein the paging frame set comprises one or more paging occasions POs, and each PO occupies a plurality of consecutive system frames in time domain; and
that the plurality of search space groups are search space groups in one paging frame set comprises:
the plurality of search space groups are search space groups in one PO in the one or more POs comprised in the paging frame set.

9. The method according to claim 8, wherein an index i_s corresponding to the PO satisfies
$$\text{i\_s} = \left\lfloor (UE\_ID / N') \bmod Ns' \right\rfloor,$$ wherein UE_ID is an identifier of a terminal, N' is a quantity of paging frame sets comprised in one paging periodicity, N' is a positive integer, Ns' is a quantity of POs comprised in one paging frame set, Ns' is a positive integer, and mod represents a modulo operation.

10. The method according to any one of claims 7 to 9, wherein a system frame in which a start position of the paging frame set is located satisfies (SFN+O) mod T=(T div N')×(UE_ID mod N'), wherein SFN is a system frame number of the system frame, O is a quantity of system frames comprised in an offset between the system frame in which the start position of the paging frame set is located and a reference position, N' is the quantity of paging frame sets comprised in one paging periodicity, N' is a positive integer, UE_ID is the identifier of the terminal, T is duration of the paging periodicity, div represents an operation of returning a quotient, mod represents a modulo operation, and the reference position is predefined in a protocol or configured.

11. The method according to any one of claims 7 to 10, wherein an end position of the paging frame set is determined by the start position of the paging frame set and a sixth parameter, and the sixth parameter comprises duration of the paging frame set in time domain, a quantity of system frames comprised in the paging frame set, or a quantity of search space groups comprised in the paging frame set.

12. The method according to claim 11, wherein the sixth parameter is predefined, or is configured by the network device.

13. A communication method, comprising:

determining a position of each physical downlink control channel monitoring occasion PMO in at least one search space group, wherein the at least one search space group is comprised in a plurality of search space groups, the plurality of search space groups are in one-to-one correspondence with a plurality of synchronization signal block SSB groups, each search space group comprises one or more PMOs, each SSB group comprises one or more SSBs, a position of the one or more PMOs in each search space group is determined by at least each SSB in a corresponding SSB group, a monitoring periodicity of a physical downlink control channel PDCCH, duration of the PDCCH, and a plurality of parameters, and the determined position of the PMO in each search space group satisfies the following conditions: a system frame in which the PMO in each search space group is located is between system frames in which two adjacent SSB groups are located, and an offset between at least two adjacent PMOs in each search space group comprises more than one slot, wherein the monitoring periodicity is greater than the duration, and values of the plurality of parameters are related to a quantity of PMOs comprised in each search space group and a quantity of system frames comprised in an offset between two adjacent search space groups; and
transmitting the PDCCH on the PMO in the at least one search space group.

14. The method according to claim 13, wherein the plurality of parameters comprise at least two of a first parameter, a second parameter, a third parameter, and a fourth parameter, a value of the first parameter is equal to the quantity of PMOs comprised in each search space group, a value of the second parameter is equal to the quantity of system frames comprised in the offset between two adjacent search space groups, a value of the third parameter is equal to a product of the value of the first parameter and the value of the second parameter, and a value of the fourth parameter is equal to a difference between the value of the third parameter and the value of the first parameter.

15. The method according to claim 14, wherein in each search space group, a position of each PMO corresponds to an index of a candidate PMO, and an index p of a candidate PMO corresponding to a position of each PMO in a first search space group in the plurality of search space groups satisfies:

$$p = x \cdot s + (i-1) \cdot M \cdot L + k \bmod s, \text{ and } (i-1) \cdot M \cdot L \leq p < (i-1) \cdot M \cdot L + M \cdot (L-1),$$

wherein
the first search space group is one of the plurality of search space groups, x=0, 1, ..., or X-1, X is a maximum quantity of candidate PMOs corresponding to each SSB, X is a positive integer, s is a quantity of SSBs comprised in each SSB group, s is a positive integer, i is a group index of a first SSB group corresponding to the first search space group in the plurality of SSB groups, i is a positive integer, $k$ is an index of an SSB in the plurality of SSB groups, $k$ is a natural number less than or equal to S-1, S is a total quantity of SSBs comprised in the plurality of SSB groups, S is a positive integer, M is the value of the first parameter, M is a positive integer, L is the value of the second parameter, L is a positive integer greater than or equal to 2, and mod represents a modulo operation.

16. The method according to any one of claims 13 to 15, wherein each of the plurality of parameters is predefined, or is configured by a network device.

17. The method according to any one of claims 13 to 16, wherein the quantity of SSBs comprised in each SSB group and the maximum quantity of PMOs corresponding to each SSB are predefined, or are configured by the network device.

18. The method according to any one of claims 13 to 17, wherein each search space group is located in one or more system frames.

19. The method according to any one of claims 13 to 18, wherein the plurality of search space groups are search space groups in one paging frame set, and the paging frame set occupies a plurality of consecutive system frames in time domain.

20. The method according to claim 19, wherein the paging frame set comprises one or more paging occasions POs, and each PO occupies a plurality of consecutive system frames in time domain; and

that the plurality of search space groups are search space groups in one paging frame set comprises:

the plurality of search space groups are search space groups in one PO in the one or more POs comprised in the paging frame set.

21. The method according to claim 20, wherein an index i_s corresponding to the PO satisfies

$$i\_s = \left\lfloor \left( UE\_ID / N' \right) \bmod Ns' \right\rfloor$$, wherein UE_ID is an identifier of a terminal, N' is a quantity of paging frame sets comprised in one paging periodicity, N' is a positive integer, Ns' is a quantity of POs comprised in one paging frame set, Ns' is a positive integer, and mod represents a modulo operation.

22. The method according to any one of claims 19 to 21, wherein a system frame in which a start position of the paging frame set is located satisfies (SFN+O) mod T=(T div N')×(UE_ID mod N'), wherein SFN is a system frame number of the system frame, O is a quantity of system frames comprised in an offset between the system frame in which the start position of the paging frame set is located and a reference position, N' is the quantity of paging frame sets comprised in one paging periodicity, N' is a positive integer, UE_ID is the identifier of the terminal, T is duration of the paging periodicity, div represents an operation of returning a quotient, mod represents a modulo operation, and the reference position is predefined in a protocol or configured.

23. The method according to any one of claims 19 to 22, wherein an end position of the paging frame set is determined by the start position of the paging frame set and a sixth parameter, and the sixth parameter comprises duration of the paging frame set in time domain, a quantity of system frames comprised in the paging frame set, or a quantity of search space groups comprised in the paging frame set.

24. The method according to claim 23, wherein the sixth parameter is predefined, or is configured by the network device.

25. A communication method, comprising:

receiving a first synchronization signal block SSB, wherein the first SSB belongs to an SSB group, and the SSB group is one of a plurality of SSB groups; and

determining a first physical downlink control channel monitoring occasion PMO based on the first SSB, and performing physical downlink control channel PDCCH blind detection on the first PMO, wherein

the plurality of SSB groups are in one-to-one correspondence with a plurality of search space groups, each search space group comprises one or more PMOs, each SSB group comprises one or more SSBs, the one or more PMOs comprised in one of the plurality of search space groups comprise the first PMO, a position of the one or more PMOs in each search space group is determined by at least each SSB in a corresponding SSB group, a monitoring periodicity of a physical downlink control channel PDCCH, monitoring duration of the PDCCH, a first parameter, and a fifth parameter, and the determined position of the PMO in each search space group satisfies the following conditions: a system frame in which the PMO in each search space group is located is between system frames in which two adjacent SSB groups are located, and an offset between at least two adjacent PMOs in each search space group comprises more than one slot, wherein the monitoring periodicity is greater than the monitoring duration, a value of the first parameter is related to a quantity of PMOs comprised in each search space group, and the fifth parameter indicates time domain distribution of the one or more PMOs in each search space group.

26. The method according to claim 25, wherein the fifth parameter comprises a quantity of slots comprised in the offset between the at least two adjacent PMOs in each search space group.

27. The method according to claim 25, wherein the fifth parameter comprises a bitmap, the bitmap comprises a plurality of bits, the plurality of bits are in one-to-one correspondence with a plurality of slots, and a value of each bit indicates whether a corresponding slot is occupied by a PMO.

28. The method according to any one of claims 25 to 27, wherein an index $p$ of each PMO in a first search space group in the plurality of search space groups satisfies $p=x \cdot s+(i-1) \cdot M \cdot L+k$ mod s, wherein x=0, 1, ..., or X-1, X is a maximum quantity of PMOs corresponding to each SSB, X is a positive integer, s is a quantity of SSBs comprised in each SSB group, s is a positive integer, i is a group index of a first SSB group corresponding to the first search space group in the plurality of SSB groups, $k$ is an index of an SSB in the plurality of SSB groups, $k$ is a natural number less than or equal to S-1, S is a total quantity of SSBs comprised in the plurality of SSB groups, S is a positive integer, M is the value of the first parameter, M is a positive integer, and mod represents a modulo operation.

29. The method according to any one of claims 25 to 28, wherein the quantity of SSBs comprised in each SSB group and the maximum quantity of PMOs corresponding to each SSB are predefined, or are configured by a network device.

30. The method according to any one of claims 25 to 29, wherein each search space group is located in one or more system frames.

31. The method according to any one of claims 25 to 30, wherein the plurality of search space groups are search space groups in one paging frame set, and the paging frame set occupies a plurality of consecutive system frames in time domain.

32. The method according to claim 31, wherein the paging frame set comprises one or more paging occasions POs, and each PO occupies a plurality of consecutive system frames in time domain; and
that the plurality of search space groups are search space groups in one paging frame set comprises:
the plurality of search space groups are search space groups in one PO in the one or more POs comprised in the paging frame set.

33. The method according to claim 32, wherein an index i_s corresponding to the PO satisfies
$$i\_s = \left\lfloor \left( UE\_ID / N' \right) \bmod Ns' \right\rfloor$$, wherein UE_ID is an identifier of a terminal, N' is a quantity of paging frame sets comprised in one paging periodicity, N' is a positive integer, Ns' is a quantity of POs comprised in one paging frame set, Ns' is a positive integer, and mod represents a modulo operation.

34. The method according to any one of claims 31 to 33, wherein a system frame in which a start position of the paging frame set is located satisfies (SFN+O) mod T=(T div N')×(UE_ID mod N'), wherein SFN is a system frame number of the system frame, O is a quantity of system frames comprised in an offset between the system frame in which the start position of the paging frame set is located and a reference position, N' is the quantity of paging frame sets comprised in one paging periodicity, N' is a positive integer, UE_ID is the identifier of the terminal, T is duration of the paging periodicity, div represents an operation of returning a quotient, mod represents a modulo operation, and the reference position is predefined in a protocol or configured.

35. The method according to any one of claims 31 to 34, wherein an end position of the paging frame set is determined by the start position of the paging frame set and a sixth parameter, and the sixth parameter comprises duration of the paging frame set in time domain, a quantity of system frames comprised in the paging frame set, or a quantity of search space groups comprised in the paging frame set.

36. The method according to claim 35, wherein the sixth parameter is predefined, or is configured by the network device.

37. A communication method, comprising:

determining a position of each physical downlink control channel monitoring occasion PMO in at least one search space group, wherein the at least one search space group is comprised in a plurality of search space groups, the plurality of search space groups are in one-to-one correspondence with a plurality of synchronization signal block SSB groups, each search space group comprises one or more PMOs, each SSB group comprises one or more SSBs, a position of the one or more PMOs in each search space group is determined by at least each SSB in a corresponding SSB group, a monitoring periodicity of a physical downlink control channel PDCCH, monitoring duration of the PDCCH, a first parameter, and a fifth parameter, and the determined position of the PMO in each search space group satisfies the following conditions: a system frame in which the PMO in each search space group is located is between system frames in which two adjacent SSB groups are located, and an offset between at least two adjacent PMOs in each search space group comprises more than one slot, wherein the monitoring periodicity is greater than the monitoring duration, a value of the first parameter is related to a quantity of PMOs comprised in each search space group, and the fifth parameter indicates time domain distribution of the one or more PMOs in each search space group; and
transmitting the PDCCH on the PMOs in the plurality of search space groups.

38. The method according to claim 37, wherein the fifth parameter comprises a quantity of slots comprised in the offset between the at least two adjacent PMOs in each search space group.

39. The method according to claim 37, wherein the fifth parameter comprises a bitmap, the bitmap comprises a plurality of bits, the plurality of bits are in one-to-one correspondence with a plurality of slots, and a value of each bit indicates whether a corresponding slot is occupied by a PMO.

40. The method according to any one of claims 37 to 39, wherein an index $p$ of each PMO in a first search space group in the plurality of search space groups satisfies $p=x \cdot s+(i-1) \cdot M \cdot L+k$ mod s, wherein x=0, 1, ..., or X-1, X is a maximum quantity of PMOs corresponding to each SSB, X is a positive integer, s is a quantity of SSBs comprised in each SSB group, s is a positive integer, i is a group index of a first SSB group corresponding to the first search space group in the plurality of SSB groups, $k$ is an index of an SSB in the plurality of SSB groups, $k$ is a natural number less than or equal to S-1, S is a total quantity of SSBs comprised in the plurality of SSB groups, S is a positive integer, M is the value of the first parameter, M is a positive integer, and mod represents a modulo operation.

41. The method according to any one of claims 37 to 40, wherein the quantity of SSBs comprised in each SSB group and the maximum quantity of PMOs corresponding to each SSB are predefined, or are configured by a network device.

42. The method according to any one of claims 37 to 41, wherein each search space group is located in one or more system frames.

43. The method according to any one of claims 37 to 42, wherein the plurality of search space groups are search space groups in one paging frame set, and the paging frame set occupies a plurality of consecutive system frames in time domain.

44. The method according to claim 43, wherein the paging frame set comprises one or more paging occasions POs, and each PO occupies a plurality of consecutive system frames in time domain; and
that the plurality of search space groups are search space groups in one paging frame set comprises:
the plurality of search space groups are search space groups in one PO in the one or more POs comprised in the paging frame set.

45. The method according to claim 44, wherein an index i_s corresponding to the PO satisfies
$$i\_s=\left\lfloor \left(UE\_ID / N'\right) \bmod Ns' \right\rfloor$$
, wherein UE_ID is an identifier of a terminal, N' is a quantity of paging frame sets comprised in one paging periodicity, N' is a positive integer, Ns' is a quantity of POs comprised in one paging frame set, Ns' is a positive integer, and mod represents a modulo operation.

46. The method according to any one of claims 43 to 45, wherein a system frame in which a start position of the paging frame set is located satisfies (SFN+O) mod T=(T div N')$\times$(UE_ID mod N'), wherein SFN is a system frame number of the system frame, O is a quantity of system frames comprised in an offset between the system frame in which the start position of the paging frame set is located and a reference position, N' is the quantity of paging frame sets comprised in one paging periodicity, N' is a positive integer, UE_ID is the identifier of the terminal, T is duration of the paging periodicity, div represents an operation of returning a quotient, mod represents a modulo operation, and the reference position is predefined in a protocol or configured.

47. The method according to any one of claims 43 to 46, wherein an end position of the paging frame set is determined by the start position of the paging frame set and a sixth parameter, and the sixth parameter comprises duration of the paging frame set in time domain, a quantity of system frames comprised in the paging frame set, or a quantity of search space groups comprised in the paging frame set.

48. The method according to claim 47, wherein the sixth parameter is predefined, or is configured by the network device.

49. A communication apparatus, configured to implement the method according to any one of claims 1 to 12, configured to implement the method according to any one of claims 13 to 24, configured to implement the method according to any one of claims 25 to 36, or configured to implement the method according to any one of claims 37 to 48.

50. A communication apparatus, comprising a processor, wherein the processor is configured to execute program code, so that the communication apparatus implements the method according to any one of claims 1 to 12, is configured to implement the method according to any one of claims 13 to 24, is configured to implement the method according to any one of claims 25 to 36, or is configured to implement the method according to any one of claims 37 to 48.

51. A communication system, comprising a radio access network device and a terminal, wherein the terminal is configured to implement the method according to any one of claims 1 to 12, and the radio access network device is configured to implement the method according to any one of claims 13 to 24; or

   the terminal is configured to implement the method according to any one of claims 25 to 36, and the radio access network device is configured to implement the method according to any one of claims 37 to 48.

52. A computer-readable storage medium, wherein the computer-readable storage medium stores a computer program, and when the computer program is executed by a processor, the method according to any one of claims 1 to 12 is performed, the method according to any one of claims 13 to 24 is performed, the method according to any one of claims 25 to 36 is performed, or the method according to any one of claims 37 to 48 is performed.

53. A computer program product, comprising a computer program, wherein when the computer program is run, the method according to any one of claims 1 to 12 is performed, the method according to any one of claims 13 to 24 is performed, the method according to any one of claims 25 to 36 is performed, or the method according to any one of claims 37 to 48 is performed.

FIG. 1

EP 4 629 690 A1

N3GPP wireless protocol

N3GPP wireless protocol

NG interface

Core network

(a)

NR wireless protocol

NR wireless protocol

NG interface

Core network

(b)

NR wireless protocol

F1 interface

NG interface

Core network

(c)

FIG. 2

Terminal 320

Base station 310

321 — Interface

322 — Processor

324 — Program

323 — Memory

325 — Program

311 — Interface

312 — Processor

314 — Program

313 — Memory

315 — Program

FIG. 3

508 km

Subsatellite
point

Edge
point

Edge
point

FIG. 4

Satellite
movement
direction

FIG. 5

FIG. 6

**(a)**

| SSB: PMO: | | SFN #0 |
|---|---|---|
| | SSBs #0 to 1 | |
| | SSBs #2 to 3 | |
| | SSBs #4 to 5 | |
| | SSBs #6 to 7 | |
| | SIB1 #0 | |
| | SIBX #0 | |
| | SIB1 #1 | |
| | SIBX #1 | |
| | SIB1 #2 | |
| | SIBX #2 | |
| | SIB1 #3 | |
| | SIBX #3 | |
| | SIB1 #4 | |
| | SIBX #4 | |
| | SIB1 #5 | |
| | SIBX #5 | |
| | SIB1 #6 | |
| | SIBX #6 | |
| | SIB1 #7 | |
| | SIBX #7 | |

SSB: PMO:
0  0
1  1
2  2
3  3
4  4
5  5
6  6
7  7

PMO, PMO, PMO, PMO, PMO, PMO, PMO, PMO, RAR, RAR, RAR, RAR, RAR, RAR, RAR, RAR — SFN #1

SSBs #8 to 9, SSBs #10 to 11, SSBs #12 to 13, SSBs #14 to 15, SIB1 #8, SIBX #8, SIB1 #9, SIBX #9, SIB1 #10, SIBX #10, SIB1 #11, SIBX #11, SIB1 #12, SIBX #12, SIB1 #13, SIBX #13, SIB1 #14, SIBX #14, SIB1 #15, SIBX #15 — SFN #2

SSB: PMO:
8  8
9  9
10  10
11  11
12  12
13  13
14  14
15  15

PMO, PMO, PMO, PMO, PMO, PMO, PMO, PMO, RAR, RAR, RAR, RAR, RAR, RAR, RAR, RAR — SFN #3

**(b)**

SSBs #0 to 1, SSBs #2 to 3, SSBs #4 to 5, SSBs #6 to 7, SIB1 #0, SIBX #0, SIB1 #1, SIBX #1, SIB1 #2, SIBX #2, SIB1 #3, SIBX #3, SIB1 #4, SIBX #4, SIB1 #5, SIBX #5, SIB1 #6, SIBX #6, SIB1 #7, SIBX #7 — SFN #0

SSB: PMO:
0  0
1  1
2  2
3  3
4  4
5  5
6  6
7  7
0  8
1  9
2  10
3  11

PMO, RAR, PMO, RAR, PMO, RAR, PMO, RAR, PMO, RAR, PMO, RAR, PMO, RAR, PMO, RAR, PMO, RAR, PMO, RAR — SFN #1

SSBs #8 to 9, SSBs #10 to 11, SSBs #12 to 13, SSBs #14 to 15, SIB1 #8, SIBX #8, SIB1 #9, SIBX #9, SIB1 #10, SIBX #10, SIB1 #11, SIBX #11, SIB1 #12, SIBX #12, SIB1 #13, SIBX #13, SIB1 #14, SIBX #14, SIB1 #15, SIBX #15 — SFN #2

SSB: PMO:
4  12
5  13
6  14
7  15
8  20
9  21
10  22
11  23
12  24
13  25
14  26
15  27
8  28
9  29

PMO, RAR, PMO, RAR, PMO, RAR, PMO, RAR, PMO, RAR, PMO, RAR, PMO, RAR, PMO, RAR, PMO, RAR, PMO, RAR — SFN #3

FIG. 7

800

```
  Satellite                                              Terminal
base station
```

860: Send an SSB in at least one SSB group

810: Determine a position of each PMO in
at least one search space group

820: Transmit a PDCCH on the PMO
in the at least one search space group

830: First SSB

840: Determine a first PMO based
on the first SSB

850: Perform PDCCH blind
detection on the first PMO

FIG. 8

| Paging periodicity |
|---|

Paging frame set

PO

PO

| SSB group | Search space group | SSB group | Search space group | SSB group | Search space group | SSB group | ... | SSB group | Search space group | SSB group | Search space group | SSB group | Search space group |
|---|---|---|---|---|---|---|---|---|---|---|---|---|---|

| PMO | | PMO | | PMO | | PMO | | PMO | | PMO | | PMO | | PMO | | | | | |
|---|---|---|---|---|---|---|---|---|---|---|---|---|---|---|---|---|---|---|---|

FIG. 9

One system frame

First offset

| PMO | PMO | PMO | PMO | PMO | PMO | PMO | PMO | PMO | PMO |

Monitoring periodicity:

#0 #1 #2 #3 #4 #5 #6 #7 #8 #9

FIG. 10A

One system frame

One system frame

Second offset

PMO PMO PMO PMO PMO PMO PMO PMO PMO PMO PMO

...

Monitoring periodicity

Start position of paging frame set

FIG. 10B

EP 4 629 690 A1

SFN #0

SFN #1

Third offset

PMO PMO PMO PMO PMO PMO PMO PMO PMO PMO

...

Monitoring
periodicity

Reference
position

FIG. 10C

One system frame

| PMO | PMO | | | PMO | PMO | | | PMO | PMO | | | PMO | PMO | | | PMO | PMO | | |

Monitoring
periodicity:

#0          #1          #2          #3          #4

FIG. 11

## FIG. 12

| SSB: | Candidate PMO: | Valid PMO: |
|---|---|---|
| 0 | 0 | 0 |
| 1 | 1 | 1 |
| 2 | 2 | 2 |
| 3 | 3 | 3 |
| 4 | 4 | 4 |
| 5 | 5 | 5 |
| 6 | 6 | 6 |
| 7 | 7 | 7 |
| 0 | 8 | 8 |
| 1 | 9 | 9 |
| 2 | 10 | |
| 3 | 11 | |
| 4 | 12 | |
| 5 | 13 | |
| 6 | 14 | |
| 7 | 15 | |
| 8 | 20 | 20 |
| 9 | 21 | 21 |
| 10 | 22 | 22 |
| 11 | 23 | 23 |
| 12 | 24 | 24 |
| 13 | 25 | 25 |
| 14 | 26 | 26 |
| 15 | 27 | 27 |
| 8 | 28 | 28 |
| 9 | 29 | 29 |
| 10 | 30 | |
| 11 | 31 | |
| ... | ... | ... |

Timeline (center column):

SFN #0: SSBs #0 to 1; SSBs #2 to 3; SSBs #4 to 5; SSBs #6 to 7; SIB1 #0; SIBX #0; SIB1 #1; SIBX #1; SIB1 #2; SIBX #2; SIB1 #3; SIBX #3; SIB1 #4; SIBX #4; SIB1 #5; SIBX #5; SIB1 #6; SIBX #6; SIB1 #7; SIBX #7

SFN #1: PMO (×10)

SFN #2: SSBs #8 to 9; SSBs #10 to 11; SSBs #12 to 13; SSBs #14 to 15; SIB1 #8; SIBX #8; SIB1 #9; SIBX #9; SIB1 #10; SIBX #10; SIB1 #11; SIBX #11; SIB1 #12; SIBX #12; SIB1 #13; SIBX #13; SIB1 #14; SIBX #14; SIB1 #15; SIBX #15

SFN #3: PMO (×10)

SFN #4: SSBs #16 to 17; SSBs #18 to 19; SSBs #18 to 19

## FIG. 13

| SSB: | Valid PMO: |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 0 | 8 |
| 1 | 9 |
| 2 | 10 |
| 3 | 11 |
| 4 | 12 |
| 5 | 13 |
| 6 | 14 |
| 7 | 15 |
| 0 | 16 |
| 1 | 17 |
| 2 | 18 |
| 3 | 19 |

Timeline (center column):

SFN #0: SSBs #0 to 1; SSBs #2 to 3; SSBs #4 to 5; SSBs #6 to 7; SIB1 #0; SIBX #0; SIB1 #1; SIBX #1; SIB1 #2; SIBX #2; SIB1 #3; SIBX #3; SIB1 #4; SIBX #4; SIB1 #5; SIBX #5; SIB1 #6; SIBX #6; SIB1 #7; SIBX #7

SFN #1: PMO (×10)

SFN #2: PMO (×10)

SFN #3: SSBs #8 to 9; SSBs #10 to 11; SSBs #12 to 13; SSBs #14 to 15; SIB1 #8; SIBX #8; SIB1 #9; SIBX #9; SIB1 #10; SIBX #10; SIB1 #11; SIBX #11; SIB1 #12; SIBX #12; SIB1 #13; SIBX #13; SIB1 #14; SIBX #14; SIB1 #15; SIBX #15

FIG. 14

FIG. 15

## FIG. 16

| SSB: | PMO: | Block | SFN |
|------|------|-------|-----|
| | | SSBs #0 to 1 | SFN #0 |
| | | SSBs #2 to 3 | |
| | | SSBs #4 to 5 | |
| | | SSBs #6 to 7 | |
| | | SIB1 #0 | |
| | | SIBX #0 | |
| | | SIB1 #1 | |
| | | SIBX #1 | |
| | | SIB1 #2 | |
| | | SIBX #2 | |
| | | SIB1 #3 | |
| | | SIBX #3 | |
| | | SIB1 #4 | |
| | | SIBX #4 | |
| | | SIB1 #5 | |
| | | SIBX #5 | |
| | | SIB1 #6 | |
| | | SIBX #6 | |
| | | SIB1 #7 | |
| 0 | 0 | SIBX #7 | |
| | | PMO | SFN #1 |
| 1 | 1 | PMO | |
| 2 | 2 | PMO | |
| 3 | 3 | PMO | |
| 4 | 4 | PMO | |
| 5 | 5 | PMO | |
| 6 | 6 | PMO | |
| 7 | 7 | PMO | |
| | | SSBs #8 to 9 | SFN #2 |
| | | SSBs #10 to 11 | |
| | | SSBs #12 to 13 | |
| | | SSBs #14 to 15 | |
| | | SIB1 #8 | |
| | | SIBX #8 | |
| | | SIB1 #9 | |
| | | SIBX #9 | |
| | | SIB1 #10 | |
| | | SIBX #10 | |
| | | SIB1 #11 | |
| | | SIBX #11 | |
| | | SIB1 #12 | |
| | | SIBX #12 | |
| | | SIB1 #13 | |
| | | SIBX #13 | |
| | | SIB1 #14 | |
| | | SIBX #14 | |
| | | SIB1 #15 | |
| 8 | 8 | SIBX #15 | |
| | | PMO | SFN #3 |
| 9 | 9 | PMO | |
| 10 | 10 | PMO | |
| 11 | 11 | PMO | |
| 12 | 12 | PMO | |
| 13 | 13 | PMO | |
| 14 | 14 | PMO | |
| 15 | 15 | PMO | |

## FIG. 17

| SSB: | PMO: | Block | SFN |
|------|------|-------|-----|
| | | SSBs #0 to 1 | SFN #0 |
| | | SSBs #2 to 3 | |
| | | SSBs #4 to 5 | |
| | | SSBs #6 to 7 | |
| | | SIB1 #0 | |
| | | SIBX #0 | |
| | | SIB1 #1 | |
| | | SIBX #1 | |
| | | SIB1 #2 | |
| | | SIBX #2 | |
| | | SIB1 #3 | |
| | | SIBX #3 | |
| | | SIB1 #4 | |
| | | SIBX #4 | |
| | | SIB1 #5 | |
| | | SIBX #5 | |
| | | SIB1 #6 | |
| | | SIBX #6 | |
| | | SIB1 #7 | |
| 0 | 0 | SIBX #7 | |
| | | PMO | SFN #1 |
| 1 | 1 | PMO | |
| 2 | 2 | PMO | |
| 3 | 3 | PMO | |
| 4 | 4 | PMO | |
| 5 | 5 | PMO | |
| 7 | 7 | PMO | |
| 0 | 8 | PMO | |
| 1 | 9 | PMO | |
| 2 | 10 | PMO | |
| 3 | 11 | PMO | SFN #2 |
| 4 | 12 | PMO | |
| 5 | 13 | PMO | |
| 6 | 14 | PMO | |
| 7 | 15 | PMO | |
| 0 | 16 | PMO | |
| 1 | 17 | PMO | |
| | | SSBs #8 to 9 | SFN #3 |
| | | SSBs #10 to 11 | |
| | | SSBs #12 to 13 | |
| | | SSBs #14 to 15 | |
| | | SIB1 #8 | |
| | | SIBX #8 | |
| | | SIB1 #9 | |
| | | SIBX #9 | |
| | | SIB1 #10 | |
| | | SIBX #10 | |
| | | SIB1 #11 | |
| | | SIBX #11 | |
| | | SIB1 #12 | |
| | | SIBX #12 | |
| | | SIB1 #13 | |
| | | SIBX #13 | |
| | | SIB1 #14 | |
| | | SIBX #14 | |
| | | SIB1 #15 | |
| | | SIBX #15 | |

Communication apparatus 1800

Processing unit 1810

Transceiving unit 1820

FIG. 18

Terminal 1900

1904

1902 — Transceiver

1901

1908

1905 — Power supply

Speaker 1908a

Processor

Audio circuit

1903 — Memory

Microphone 1908b

1909 — Camera

Sensor — 1910

1906 — Input unit

Display unit — 1907

FIG. 19

**EP 4 629 690 A1**

## INTERNATIONAL SEARCH REPORT

| | International application No. |
|---|---|
| | **PCT/CN2023/140024** |

**A.    CLASSIFICATION OF SUBJECT MATTER**

H04W24/08(2009.01)i;   H04W36/00(2009.01)i

According to International Patent Classification (IPC) or to both national classification and IPC

**B.    FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXTC, CJFD, CNKI, 3GPP, ISI: 同步信号块, 物理下行控制信道监测机会, 时机, 物理下行控制信道, 盲检, 检测, 位置, 搜索空间, SSB, PMO, PO, PDCCH, blind detect, location, search space

**C.    DOCUMENTS CONSIDERED TO BE RELEVANT**

| Category* | Citation of document, with indication, where appropriate, of the relevant passages | Relevant to claim No. |
|---|---|---|
| A | CN 114731556 A (OPPO GUANGDONG MOBILE TELECOMMUNICATIONS CO., LTD.) 08 July 2022 (2022-07-08) description, paragraphs 39-176 | 1-53 |
| A | CN 110831152 A (RESEARCH INSTITUTE OF CHINA MOBILE COMMUNICATIONS CORPORATION et al.) 21 February 2020 (2020-02-21) entire document | 1-53 |
| A | CN 114765510 A (DATANG MOBILE COMMUNICATIONS EQUIPMENT CO., LTD.) 19 July 2022 (2022-07-19) entire document | 1-53 |
| A | WO 2022257287 A1 (QUECTEL WIRELESS SOLUTIONS CO., LTD.) 15 December 2022 (2022-12-15) entire document | 1-53 |
| A | NOKIA et al. "On paging enhancements for UE power saving" *3GPP TSG RAN WG1 #106-e R1-2108122*, 27 August 2021 (2021-08-27), entire document | 1-53 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2024** | **21 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140024**

| Patent document cited in search report | | | Publication date (day/month/year) | Patent family member(s) | | | Publication date (day/month/year) |
|---|---|---|---|---|---|---|---|
| CN | 114731556 | A | 08 July 2022 | WO | 2021168812 | A1 | 02 September 2021 |
| | | | | WO | 2021169684 | A1 | 02 September 2021 |
| CN | 110831152 | A | 21 February 2020 | | None | | |
| CN | 114765510 | A | 19 July 2022 | WO | 2022152037 | A1 | 21 July 2022 |
| WO | 2022257287 | A1 | 15 December 2022 | CN | 113316236 | A | 27 August 2021 |

Form PCT/ISA/210 (patent family annex) (July 2022)

**REFERENCES CITED IN THE DESCRIPTION**

**Patent documents cited in the description**

- CN 202211711849